# EUROPÄISCHE PATENTSCHRIFT

(11) **EP 2 145 681 B1**
(45) Veröffentlichungstag und Bekanntmachung des Hinweises auf die Patenterteilung: **27.02.2013**
(21) Anmeldenummer: 09164639.8
(22) Anmeldetag: 06.07.2009
(51) Int. Cl.: B01J 31/22

(54) **Verfahren zum Molekulargewichtsabbau von Nitrilkautschuk**
Method for the reduction of the molecular weight of nitrile rubber
Méthode pour la réduction du poid moléculaire de caoutchouc nitrilé

(30) Priorität: 08.07.2008 EP 08159917
(43) Veröffentlichungstag der Anmeldung: 20.01.2010
(73) Patentinhaber: LANXESS Deutschland GmbH, 51369 Leverkusen (DE)
(72) Erfinder: Müller, Julia Maria, 89134 Blaustein (DE); Nuyken, Oskar, 81927 München (DE); Obrecht, Werner, 47447 Moers (DE)

(56) Entgegenhaltungen:
- EP-A- 1 825 913
- WO-A-03/002613
- WO-A-2004/035679
- US-A1- 2004 095 792
- FUSTERO, SANTOS ET AL: "Microwave-Assisted Tandem Cross Metathesis Intramolecular Aza-Michael Reaction: An Easy Entry to Cyclic .beta.-Amino Carbonyl Derivatives" JOURNAL OF THE AMERICAN CHEMICAL SOCIETY ( 2007 ), 129(21), 6700-6701 CODEN: JACSAT; ISSN: 0002-7863, 2007, XP002494974
- FURSTNER, ALOIS ET AL: "Cationic ruthenium allenylidene complexes as catalysts for ring closing olefin metathesis" CHEMISTRY--A EUROPEAN JOURNAL ( 2000 ), 6(10), 1847-1857 CODEN: CEUJED; ISSN: 0947-6539, 2000, XP002494975
- KELSEY, DONALD R. ET AL: "In situ catalyst systems for ring-opening metathesis polymerization" JOURNAL OF POLYMER SCIENCE, PART A: POLYMER CHEMISTRY , 35(14), 3027-3047 CODEN: JPACEC; ISSN: 0887-624X, 1997, XP002494976
- LEDOUX ET AL: "In situ generation of highly active olefin metathesis initiators" JOURNAL OF ORGANOMETALLIC CHEMISTRY, ELSEVIER-SEQUOIA S.A. LAUSANNE, CH, Bd. 691, Nr. 24-25, 24. November 2006 (2006-11-24), Seiten 5482-5486, XP025188912 ISSN: 0022-328X

## Beschreibung

Die vorliegende Erfindung betrifft die Verwendung spezieller Verbindungen als Bestandteil von Katalysatorsystemen für die Katalyse von Metathese Reaktionen und insbesondere ein Verfahren zum Molekulargewichtsabbau von Nitrilkautschuk durch Metathese unter Einsatz dieser Katalysator-Systeme.

Metathese-Reaktionen werden umfangreich im Rahmen chemischer Synthesen eingesetzt, z.B. in Ringschlussmetathesen (RCM), Kreuzmetathesen (CM), Ringöffnungsmetathesen (ROM), ringöffnende Metathesepolymerisationen (ROMP), cyclische Dien Metathese-Polymerisationen (ADMET), Selbstmetathese, Umsetzung von Alkenen mit Alkinen (enin-Reaktionen), Polymerisation von Alkinen und Olefinierung von Carbonylen (WO-A-97/06185 und Platinum Metals Rev., 2005, 49(3), 123-137). Anwendung finden Metathese-Reaktionen beispielsweise zur Olefin-Synthese, zur ringöffnenden Polymerisation von Norbomenderivaten, zur Depolymerisation ungesättigter Polymere und zur Synthese von Telechelen.

Metathesekatalysatoren sind unter anderem aus der WO-A-96/04289 und WO-A-97/06185 bekannt. Sie besitzen die folgende prinzipielle Struktur: 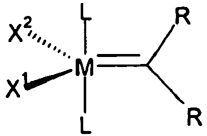 worin M Osmium oder Ruthenium bedeutet, R für gleiche oder verschiedene organische Reste mit großer struktureller Variationsbreite stehtm X¹ und X² anionische Liganden bedeuten und L für neutrale Elektronen-Donoren steht. Unter dem gängigen Begriff "anionische Liganden" werden in der Literatur für derartige Metathese-Katalysatoren immer solche Liganden verstanden, die, wenn man sie als vom Metall-Zentrum entfernt betrachtet, bei geschlossener Elektronenschale negativ geladen sind.

Auch für den Abbau von Nitrilkautschuken gewinnen Metathese-Reaktionen in jüngerer Zeit zunehmende Bedeutung.

Unter Nitrilkautschuk, abgekürzt auch als "NBR" bezeichnet, werden Kautschuke verstanden, bei denen es sich um Co- oder Terpolymere aus mindestens einem α,β-ungesättigten Nitril, mindestens einem konjugierten Dien und gegebenenfalls einem oder mehreren weiteren copolymerisierbaren Monomeren handelt.

Hydrierter Nitrilkautschuk, abgekürzt auch als "HNBR" bezeichnet, wird durch Hydrierung von Nitrilkautschuk hergestellt. Entsprechend sind in HNBR die C=C Doppelbindungen der einpolymerisierten Dieneinheiten ganz oder teilweise hydriert. Der Hydriergrad der einpolymerisierten Dieneinheiten liegt üblicherweise in einem Bereich von 50 bis 100%. Hydrierter Nitrilkautschuk ist ein Spezialkautschuk, der über eine sehr gute Hitzebeständigkeit, eine hervorragende Beständigkeit gegen Ozon und Chemikalien sowie eine ausgezeichnete Ölbeständigkeit verfügt.

Die vorgenannten physikalischen und chemischen Eigenschaften des HNBR gehen einher mit sehr guten mechanischen Eigenschaften, insbesondere einer hohen Abriebfestigkeit. Aus diesem Grund hat HNBR breite Verwendung in den verschiedensten Anwendungsgebieten gefunden. HNBR wird beispielsweise eingesetzt für Dichtungen, Schläuche, Riemen und Dämpfungselemente im Automobilsektor, ferner für Statoren, Bohrlochdichtungen und Ventildichtungen im Bereich der Ölförderung sowie auch für zahlreiche Teile der Luftfahrtindustrie, der Elektroindustrie, des Maschinen- und des Schiffsbaus.

Die meisten am Markt kommerziell erhältlichen HNBR Typen weisen üblicherweise eine Mooney-Viskosität (ML 1+4 bei 100°C) im Bereich von 55 bis 120 auf, was einem Zahlenmittel des Molekulargewichts Mₙ (Bestimmungsmethode: Gelpermeationschromatographie (GPC) gegen Polystyroläquivalente) im Bereich von ca. 200.000 bis 700.000 entspricht. Die dabei zu messenden Polydispersitätsindizes PDI (PDI = M_{w} /Mₙ, wobei M_{w} das Gewichtsmittel und Mₙ das Zahlenmittel des Molekulargewichts darstellt), die eine Aussage über die Breite der Molekulargewichtsverteilung liefern, besitzen häufig einen Wert von 3 oder darüber. Der Restdoppelbindungsgehalt liegt üblicherweise in einem Bereich von 0 bis 18 % (bestimmt durch NMR- oder IR-Spektroskopie). Von sogenannten "vollhydrierten Typen" wird in der Fachwelt jedoch bereits gesprochen, wenn der Restdoppelbindungsgehalt maximal bei ca. 0,9 % liegt.

Der Verarbeitbarkeit von HNBR-Typen mit den oben genannten relativ hohen Mooney-Viskositäten sind Beschränkungen auferlegt. Für viele Anwendungen sind HNBR-Typen wünschenswert, die ein niedrigeres Molekulargewicht und damit eine niedrigere Mooney-Viskosität besitzen, da dies die Verarbeitbarkeit entscheidend verbessert.

In der Vergangenheit wurden viele Versuche unternommen, die Kettenlänge von HNBR durch Abbau zu verkürzen. Beispielsweise ist ein Molekulargewichtsabbau durch thermomechanische Behandlung (Mastikation) z. B. auf einem Walzwerk oder auch in einem Schneckenaggregat **(**EP-A-0 419 952**)** möglich. Dieser thermomechanische Abbau hat jedoch den Nachteil, dass durch partielle Oxidation funktionelle Gruppen wie Hydroxyl-, Keto-, Carbonsäure- und Ester-Gruppen in das Molekül eingebaut werden und zusätzlich die Mikrostruktur des Polymers substanziell geändert wird.

Die Herstellung von HNBR mit niedrigen Molmassen, entsprechend einer Mooney-Viskosität (ML 1+4 bei 100°C) in einem Bereich kleiner 55 bzw. einem Zahlenmittel des Molekulargewichts von ca. Mₙ < 200.000 g/mol, war mittels etablierter Herstellungsverfahren lange Zeit nicht möglich, da einerseits bei der Hydrierung von NBR ein sprunghafter Anstieg der Mooney-Viskosität erfolgt und andererseits die Molmasse des für die Hydrierung einzusetzenden NBR-Feedstocks nicht beliebig reduziert werden kann, da sonst die Aufarbeitung in den zur Verfügung stehenden großtechnischen Anlagen wegen zu hoher Klebrigkeit nicht mehr möglich ist. Die niedrigste Mooney-Viskosität eines NBR-Feedstocks, die ohne Schwierigkeiten in einer etablierten großtechnischen Anlage aufarbeitbar ist, liegt bei ca. 30 Mooney-Einheiten (ML 1+4 bei 100°C). Die Mooney-Viskosität des hydrierten Nitrilkautschuks, der mit einem solchen NBR-Feedstock erhalten wird, liegt in der Größenordnung von 55 Mooney-Einheiten (ML 1+4 bei 100°C). Die Bestimmung der Mooney-Viskosität erfolgt dabei gemäß ASTM Norm D 1646.

Im neueren Stand der Technik wird dieses Problem gelöst, indem man das Molekulargewicht des Nitrilkautschuks vor der Hydrierung durch Abbau auf eine Mooney-Viskosität (ML 1+4 bei 100°C) von weniger als 30 Mooney-Einheiten bzw. ein Zahlenmittel des Molekulargewichts von Mₙ < 70.000 g / mol reduziert. Den Abbau des Molekulargewichts erreicht man durch Metathese, bei der man üblicherweise niedermolekulare 1-Olefine zusetzt. Beschrieben ist die Metathese von Nitrilkautschuk beispielsweise in WO-A-02/100905**,** WO-A-02/100941 und WO-A-03/002613**.** Die Metathesereaktion wird zweckmäßigerweise im gleichen Lösungsmittel wie die Hydrierreaktion durchgeführt, damit man den abgebauten Nitrilkautschuk nach Beendigung der Abbaureaktion nicht aus dem Lösungsmittel isolieren muss, bevor man ihn der nachfolgenden Hydrierung unterwirft. Für die Katalyse der Metathese-Abbaureaktion verwendet man Metathesekatalysatoren, die gegenüber polaren Gruppen, insbesondere gegenüber Nitrilgruppen, tolerant sind.

In der WO-A-02/100905 und der WO-A-02/100941 wird ein Verfahren beschrieben, welches den Abbau von Nitrilkautschuk-Ausgangspolymeren durch Olefinmetathese und eine anschließende Hydrierung zu HNBR mit niedriger Mooney-Viskosität umfasst. Hierbei wird ein Nitrilkautschuk in einem ersten Schritt in Gegenwart eines Co-Olefins und spezieller Komplexkatalysatoren auf Osmium-, Ruthenium-, Molybdän- oder Wolfram-Basis umgesetzt und in einem zweiten Schritt hydriert. Erhältlich sind auf diesem Weg hydrierte Nitrilkautschuke mit einem Gewichtsmittel des Molekulargewichts (M_{w}) im Bereich von 30.000 bis 250.000, einer Mooney-Viskosität (ML 1+4 bei 100 °C) im Bereich von 3 bis 50 und einem Polydispersitätsindex PDI von kleiner 2.5.

Zur Metathese von Nitrilkautschuk kann z.B. der nachfolgend dargestellte Katalysator Bis(tricyclohexylphosphin)benzyliden-rutheniumdichlorid eingesetzt werden.

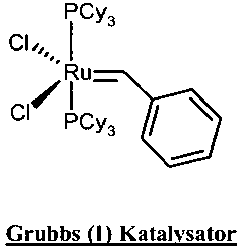

Nach Metathese und Hydrierung weisen die Nitrilkautschuke ein niedrigeres Molekulargewicht sowie eine engere Molekulargewichtsverteilung auf als die nach dem Stand der Technik bisher herstellbaren hydrierten Nitrilkautschuke.

Die für die Durchführung der Metathese angewandten Mengen an Grubbs-(I)-Katalysator sind jedoch groß. Sie betragen in den Versuchen der WO-A-03/002613 beispielsweise 307 ppm und 61 ppm Ru bezogen auf den eingesetzten Nitrilkautschuk. Die notwendigen Reaktionszeiten sind darüber hinaus lang und die Molekulargewichte nach dem Abbau immer noch relativ hoch (siehe Beispiel 3 der WO-A-03/002613 mit M_{w} = 180.000 g/mol und Mₙ = 71.000g/mol).

US 2004/0127647 A1 beschreibt Blends auf der Basis niedermolekularer HNBR-Kautschuke mit bi- bzw. multimodaler Molekulargewichtsverteilung sowie Vulkanisate dieser Kautschuke. Für die Durchführung der Metathese werden nach den Beispielen 0,5 phr an Grubbs-I-Katalysator verwendet. Dies entspricht einer Menge von 614 ppm Ruthenium bezogen auf den eingesetzten Nitrilkautschuk.

Aus WO-A-00/71554 ist ferner eine Gruppe von Katalysatoren bekannt, die in der Fachwelt als "Grubbs (II) Katalysatoren" bezeichnet werden.

Verwendet man einen solchen "Grubbs(II) Katalysator" wie z.B. den nachfolgend dargestellten Katalysator 1,3-Bis (2,4,6-trimethylphenyl)-2-imidazolidenyliden) (tricyclohexylphosphin)-ruthenium(phenyl-methylen)dichlorid für die NBR-Metathese **(**US-A-2004/0132891**),** so gelingt diese auch ohne Verwendung eines Co-Olefins.

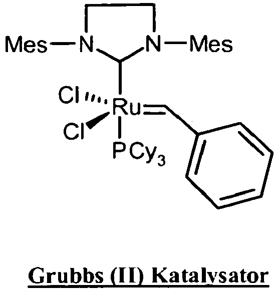

Nach der anschließenden Hydrierung, die bevorzugt im gleichen Lösungsmittel durchgeführt wird, weist der hydrierte Nitrilkautschuk niedrigere Molekulargewichte und eine engere Molekulargewichtsverteilung (PDI) auf als bei Verwendung von Katalysatoren des Grubbs-(I)-Typs. Bezüglich des Molekulargewichts und der Molekulargewichtsverteilung verläuft somit der Metatheseabbau mit Katalysatoren des Typs Grubbs-(II) effizienter als mit Katalysatoren des Typs Grubbs-(I). Allerdings sind die für diesen effizienten Metatheseabbau notwendigen Ruthenium-Mengen immer noch relativ hoch. Auch werden für die Durchführung der Metathese mit dem Grubbs-(II)-Katalysator immer noch lange Reaktionszeiten benötigt.

Allen zuvor genannten Verfahren zum Metatheseabbau von Nitrilkautschuk ist gemeinsam, dass relativ große Katalysatormengen eingesetzt werden müssen und lange Reaktionszeiten benötigt werden, um die gewünschten niedermolekularen Nitrilkautschuke mittels Metathese herzustellen.

Auch bei den anderen Typen der Metathese-Reaktionen kommt der Aktivität der eingesetzten Katalysatoren entscheidende Bedeutung zu.

In J.Am.Chem. Soc. 1997, 119, 3887-3897 wird beschrieben, dass bei der nachfolgend dargestellten Ringschlussmetathese von Diethyldiallylmalonat 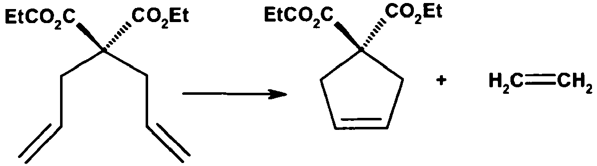 die Aktivität der Katalysatoren des Grubbs-(I) Typs durch Zusätze von CuCl und CuCl₂ gesteigert werden kann. Erklärt wird diese Aktivitätssteigerung durch eine Verschiebung des Dissoziationsgleichgewichts, indem ein abdissoziierender Phosphanligand durch Kupferionen unter Bildung von Kupfer-Phosphankomplexen abgefangen wird.

Diese Aktivitätssteigerung durch Kupfer-Salze in der genannten Ringschlussmetathese lässt sich jedoch nicht beliebig auf andere Arten von Metathese-Reaktionen übertragen. Eigene Untersuchungen ergaben, dass unerwarteterweise der Zusatz von Kupfer-Salzen für den Metathese-Abbau von Nitrilkautschuken zwar zu einer anfänglichen Beschleunigung der Metathese-Reaktion führt, dann aber eine signifikante Verschlechterung der Metathese-Effizienz zu beobachten ist: Die letztendlich erreichbaren Molekulargewichte der abgebauten Nitrilkautschuke sind substanziell höher, als wenn die Metathese-Reaktion in Gegenwart des gleichen Katalysators aber in Abwesenheit der Kupfer-Salze durchgeführt wird.

In EP-A-1 825 913 werden neue Katalysator-Systeme für die Metathese beschrieben, bei denen neben dem eigentlichen Metathese-Katalysator noch ein oder mehrere Salze eingesetzt werden. Diese Kombination von einem oder mehreren Salzen mit dem Metathese-Katalysator führt zu einer Aktivitätssteigerung des Katalysators, einer synergistischen Wirkung. Für die Anionen und Kationen dieser Salze ist jeweils eine Vielzahl von Bedeutungen möglich, die aus verschiedenen Listen ausgewählt werden können. Als besonders vorteilhaft erweist sich in den Beispielen der EP-A-1 825 913 sowohl für den Metathese Abbau von Kautschuken, wie z.B. Nitrilkautschuken, als auch für die Ringschlussmetathese von Diethyldiallylmalonat der Einsatz von Lithiumbromid. Als Katalysatoren werden insbesondere solche genannt, die über einen sauerstoff-, stickstoff- oder schwefelhaltigen Substituenten mit dem Metallzentrum eines Ruthenium- oder Osmium-Carbens koordinieren. Eingesetzt werden beispielsweise der Grubbs-(II) Katalysator, der Hoveyda-, der Buchmeiser-Nuyken- sowie der Grela-Katalysator.

In einer noch nicht veröffentlichten deutschen Patentanmeldung werden spezielle Katalysator-Systeme für die Metathese beschrieben, bei denen neben dem eigentlichen Metathese-Katalysator Erdalkalimetallchloride, bevorzugt Magnesium- oder Calciumchlorid, als Salze zugesetzt werden.

In der EP-A-1 894 946 wird eine Aktivitätssteigerung von Metathesekatalysatoren durch spezielle Phosphanzusätze beschrieben.

In Inorganica Chimica Acta 359 (2006) 2910-2917 wurde ebenfalls die Aktivitätssteigerung von Metathesekatalysatoren durch Salze untersucht. Betrachtet wurden die Einflüsse von Zinnchlorid, Zinnbromid, Zinnjodid, Eisen(II)chlorid, Eisen(II)bromid, Eisen(III)chlorid, Cer(III)chlorid*7H₂O, Ytterbium(III)chlorid, Antimontrichlorid, Galliumdichlorid und Aluminiumtrichlorid auf die Selbstmetathese von 1-Octen zu 7-Tetradecen und Ethylen. Bei Verwendung des Grubbs-(I)-Katalysators wurde bei Zusatz von Zinnchlorid bzw. Zinnbromid eine deutliche Verbesserung des Umsatzes von 7-Tetradecen beobachtet (Table 1; catalyst 1). Ohne Salzzusatz wurde ein Umsatz von 25,8 % erreicht, bei Zusatz von SnCl₂*2H₂O stieg der Umsatz auf 68,5% und durch Zusatz von Zinnbromid auf 71,9%. Ein Zusatz von Zinnjodid verschlechterte den Umsatz signifikant von 25,8% auf 4,1%. In Kombination mit dem Grubbs-(II)-Katalysator (Table 1; catalyst 2) führten alle drei Zinnsalze dagegen nur zu geringfügigen Umsatzverbesserungen von 76,3% (Referenzversuch ohne Zusatz) auf 78,1% (SnCl₂), auf 79,5% (SnBr₂) und 77,6% (SnJ₂). Bei Verwendung des sogenannten "Phobcats" [Ru(phobCy)₂Cl₂( = ChPh)] (Table 1; catalyst 3) wird der Umsatz durch SnCl₂-Zusatz von 87,9% auf 80,8%, durch SnBr₂ auf 81,6% und durch SnJ₂ auf 73,9% verschlechtert. Bei Verwendung von Eisen(II)-Salzen ist in Kombination mit dem Grubbs-(I)-Katalysators (Table 3; catalyst 1) die Erhöhung des Umsatzes mit Eisen(II)bromid höher als bei Verwendung von Eisen(II)chlorid. Es ist anzumerken, dass unabhängig von der Art des verwendeten Katalysators bei Verwendung von Bromiden der Umsatz stets höher als bei Verwendung der entsprechenden Chloride ist.

Der Einsatz des in Inorganica Chimica Acta 359 (2006) 2910-2917 beschriebenen Zinn- bzw. Eisen(II)bromids ist aber für die Herstellung von Nitrilkautschuken wegen der Korrosivität der Bromide keine optimale Lösung.

Üblicherweise wird bei der Herstellung hydrierter Nitrilkautschuke nach der Hydrierung das Lösungsmittel durch Wasserdampfdestillation entfernt. Werden Zinnsalze als Teil des Katalysator-Systems verwendet, gelangen hierbei gewisse Mengen dieser Zinnsalze in das Abwasser, das somit aufwändig gereinigt werden muss. Aus diesem Grund ist die Verwendung von Zinnsalzen zur Aktivitätssteigerung von Katalysatoren bei der Herstellung von Nitrilkautschuken wirtschaftlich nicht empfehlenswert.

Die Verwendung von Eisensalzen ist dadurch eingeschränkt, dass sie die Kapazität mancher Austauscherharze, die üblicherweise für die Rückgewinnung der bei der Hydrierung eingesetzten Edelmetallverbindungen verwendet wird, reduzieren. Hierdurch wird ebenfalls die Wirtschaftlichkeit des Gesamtverfahrens beeinträchtigt.

In ChemBiochem 2003, 4, 1229-1231 wird die Synthese von Polymeren durch eine ringöffnende Metathese-Polymerisation (ROMP) von Norbornyloligopeptiden in Gegenwart eines Rutheniumcarbenkomplexes Cl₂(PCy₃)₂Ru=CHPhenyl beschrieben, wobei Lithiumchlorid zugesetzt wird. Der Zusatz von Lithiumchlorid erfolgt dabei mit dem erklärten Ziel der Vermeidung einer Aggregation und der Erhöhung der Löslichkeit der wachsenden Polymerketten. Über eine aktivitätssteigernde Wirkung des Salzzusatzes auf den Katalysator wird nichts berichtet.

Auch aus J. Org. Chem. 2003, 68, 2020-2023 ist die Durchführung einer ringöffnenden Polymerisation von mit Oligopeptiden substituierten Norbornenen bekannt, bei der Lithiumchlorid eingesetzt wird. Auch hier wird auf den Einfluss von Lithiumchlorid als löslichkeitssteigernder Zusatz für die Peptide in unpolaren organischen Lösungsmitteln abgehoben. Aus diesem Grund kann durch den Zusatz von Lithiumchlorid eine Steigerung des Polymerisationsgrades "DP" erreicht werden.

In J.Am.Chem.Soc. 1997, 119, 3887-3897 wird beschrieben, dass durch Zusatz von LiBr oder NaI zu einem NHC-Liganden enthaltenden Metathesekatalysator wie dem Grubbs-(II) Katalysator die Chlorid-Liganden gegen Bromid oder Jodid ausgetauscht werden. Des Weiteren wird gezeigt, dass die Katalysatoraktivität von der Art der Halogenidliganden abhängt und in folgender Reihenfolge ansteigt: J < Br < Cl.

In J.Am.Chem.Soc. 1997, 119, 9130-9136 wird beschrieben, dass durch Zusatz von Tetraisopropoxytitanat die Aktivität des Grubbs-(I)-Katalysators bei der Ringschlussmetathese von 1,ω-Dienen eine Ausbeuteverbesserung erzielt werden kann. Bei der Cyclisierung des 9-Decensäureesters von 4-Pentenoat wird bei Zusatz von Tetraisopropanoxytitanat eine höhere Ausbeute des Makrolids erzielt als bei Zusatz von LiBr. Es findet sich kein Anhaltspunkt, inwieweit dieser Effekt auch auf andere Typen von Metathese-Reaktionen oder andere Metathese-Katalysatoren übertragbar ist.

In Org. Biomol. Chem. 2005, 3, 4139-4142 wird die Kreuzmetathese (CM) von Acrylnitril mit sich selbst und mit anderen funktionalisierten Olefinen bei Verwendung von [1,3-bis(2,6-dimethylphenyl)4,5-dihydroimidazol-2-yliden](C₅H₅N)₂(Cl)₂Ru=CHPh untersucht. Durch Zusatz von Tetraiso-propoxytitanat wird die Ausbeute des jeweiligen Produkts verbessert. In dieser Publikation entsteht der Eindruck, dass die aktivitätssteigernde Wirkung von Tetraisopropoxytitanat nur bei Verwendung eines speziellen Katalysators mit Pyridin-Liganden auftritt. Es findet sich kein Hinweis auf den Einfluss von Tetraisopropoxytitanat bei Einsatz pyridinfreier Katalysatoren bzw. in anderen Typen von Metathese-Reaktionen.

Aus Synlett 2005, No.4, 670-672 ist bekannt, dass der Zusatz von Tetraisopropoxytitanat bei der Kreuzmetathese von Allylcarbamat mit Methylacrylat einen negativen Einfluss auf die Produktausbeute besitzt, wenn als Katalysator der Hoveyda-Katalysator eingesetzt wird. So wird durch Zusatz von Tetraisopropoxytitanat die Produktausbeute von 28 % auf 0% reduziert. Auch ein Zusatz von Dimethylaluminiumchlorid reduziert die Ausbeute von 28% auf 20%.

In Synlett 2005, No.4, 670-672 wird ferner beschrieben, dass sich die Produktausbeute der Kreuzmetathese niedermolekularer Olefine bei Einsatz spezieller Borsäurederivate verbessert. Eingesetzt werden Chlorkatecholboran (ArO₂BCl), Dichlorphenylboran (PhBCl₂) und Chlordicyclohexylboran (Cy₂BCl). Je nach Borsäurederivat verbessert sich die Ausbeute in sehr unterschiedlichem Umfang. Um entsprechende Ausbeuteverbesserungen zu erhalten, ist eine Zusatz von 10 -20 mol% des Borsäurederivats bezogen auf 1 Äquivalent eines Olefins erforderlich.

In Synthesis 2000, No.12, 1766-1773 wird beschrieben, dass die Ausbeuten bei der Ringschlussmetathese von Diethyldiallylmalonat bei Verwendung des Grubbs-I-Katalysators durch Zusätze von Bortrichlorid und Aluminiumtrichlorid nicht negativ beeinflusst werden (Tabelle 2). Auch bei einer Tandem Enin-Metathese/Diels-Alder-Reaktion von N-Allyl-N-3-phenylprop-2-inyl-p-Toluolsulfenamid zu 4-Acyl-7-phenyl-hexahydroisoindolüber N-Tosyl-1-(1-Phenylvinyl)-2,4-Dihydro-2H-Pyrrol (als Zwischenprodukt der Enin-Metathese) wird die Ausbeute nicht dadurch beeinflusst, ob BCl₃ bei Durchführung als One-Pot Reaktion sofort zu Beginn gleichzeitig mit dem Grubbs-I-Katalysator zugesetzt wird oder aber bei sequentieller Durchführung erst im zweiten Schritt der Diels-Alder Reaktion hinzugefügt wird. Mit diesen Versuchen wird gezeigt, dass die Aktivität des Grubbs-I-Katalysators durch Bortrichlorid- bzw. Aluminiumtrichlorid-Zusatz nicht reduziert wird. Es findet sich jedoch kein Beleg dafür, dass durch Zusatz von Bortrichlorid oder Aluminiumtrichlorid die Katalysatoraktivität verbessert wird.

Da sich die Metathese Reaktion sowohl im Bereich der niedermolekularen Chemie als auch für Polymere wie z.B. Nitrilkautschuke zunehmender Beliebtheit erfreut, besteht trotz des bereits existierenden Standes der Technik ein unveränderter Bedarf an verbesserten Katalysatorsystemen für Metathese-Reaktionen und insbesondere den Molekulargewichtsabbau von Nitrilkautschuk durch Metathese. Dies gilt umso mehr vor dem Hintergrund, dass aus dem vorhandenen Stand der Technik eine Übertragbarkeit von Ergebnissen einer Metathesereaktion auf eine andere nicht ohne Weiteres erkennbar ist.

Vor diesem Hintergrund bestand die **Aufgabe der vorliegenden Erfindung** darin, für den Metatheseabbau von Nitrilkautschuk Möglichkeiten zu finden, die eine Aktivitätssteigerung des eingesetzten Katalysators ohne Vergelung des Nitrilkautschuks ermöglichen.

Überraschenderweise wurde gefunden, dass die Aktivität von Metathese-Katalysatoren signifikant gesteigert werden kann, wenn man diese in Kombination mit fluorhaltigen Borverbindungen einsetzt. Insbesondere wurde gefunden, dass der Molekulargewichtsabbau von Nitrilkautschuk durch Metathese deutlich verbessert werden kann, wenn bestimmte Metathese-Katalysatoren als System in Kombination mit speziellen fluorhaltigen Borverbindungen eingesetzt wird. Durch diese Kombination wird die Reaktionsgeschwindigkeit von Metathesereaktionen erhöht und insbesondere bei der NBR-Metathese können deutlich engere Molekulargewichtsverteilungen und niedrigere Molekulargewichte erhalten werden, ohne dass eine Vergelung eintritt. Gleichzeitig kann durch den Zusatz der fluorhaltigen Borverbindungen die Menge an Metathesekatalysator reduziert werden.

**Gegenstand der Erfindung** ist somit ein Verfahren zum Metathese-Abbau von Nitrilkautschuken, bei dem man den Nitrilkautschuk in Gegenwart eines Katalysatorsystem einer Metathese-Reaktion unterwirft, wobei das Katalysatorsystem einen Metathese-Katalysator, enthält sowie mindestens eine Verbindung der allgemeinen Formel (Z)

BFₘXₙ*Dᵥ (Z)

worin
- BFₘXₙ: für BF₃, BF₂Cl, BFCl₂ BF₂Br, BFBr₂, BF₂(OC₂H₅), BF(OC₂H₅)₂, BF₂(CH₃) oder BF(CH₃)₂ steht und
- D: für Wasser, Diethylether, Ethylamin, THF, n-Propanol, Ameisensäure, Essigsäure, Trifluoressigsäure, Trichloressigsäure, Schwefelsäure, Phosphorsäure, Triflurormethansulfonsäure oder Toluolsulfonsäure steht und v = 1, 2 oder 3 ist,
und wobei als Katalysator entweder **Verbindungen der allgemeinen Formel (A)** eingesetzt werden, 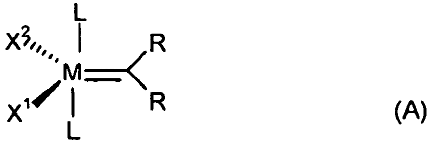 worin
- M: Osmium oder Ruthenium bedeutet,
- X¹ und X²: gleich oder verschieden sind und zwei anionische Liganden darstellen,
- L: gleiche oder verschiedene Liganden, bevorzugt neutrale Elektronen-Donoren darstellen,
- R: gleich oder verschieden sind und Wasserstoff, einen Alkyl-, bevorzugt C₁-C₃₀-Alkyl-, Cycloalkyl-, bevorzugt C₃-C₂₀-Cycloalkyl-, Alkenyl-, bevorzugt C₂-C₂₀-Alkenyl-, Alkinyl-, bevorzugt C₂-C₂₀-Alkinyl-, Aryl-, bevorzugt C₆-C₂₄-Aryl-, Carboxylat-, bevorzugt C₁-C₂₀-Carboxylat-, Alkoxy-, bevorzugt C₁-C₂₀-Alkoxy-, Alkenyloxy-, bevorzugt C₂-C₂₀-Alkenyloxy-, Alkinyloxy-, bevorzugt C₂-C₂₀-Alkinyloxy-, Aryloxy-, bevorzugt C₆-C₂₄-Aryloxy, Alkoxycarbonyl-, bevorzugt C₂-C₂₀-Alkoxycarbonyl-, Alkylamino-, bevorzugt C₁-C₃₀-Alkylamino, Alkylthio-, bevorzugt C₁-C₃₀-Alkylthio, Arylthio-, bevorzugt C₆-C₂₄-Arylthio, Alkylsulfonyl-, bevorzugt C₁-C₂₀-Alkylsulfonyl, oder Alkylsulfinyl, bevorzugt C₁-C₂₀-Alkylsulfinyl-Rest darstellen, die alle jeweils durch ein oder mehrere Alkyl-, Halogen-, bevorzugt Fluor oder Chlor, Alkoxy-, Aryl- oder Heteroaryl-Reste substituiert sein können, oder alternativ beide Reste R unter Einbindung des gemeinsamen C-Atoms, an das sie gebunden sind, zu einer cyclischen Gruppe verbrückt sind, die aliphatischer oder aromatischer Natur sein kann, gegebenenfalls substituiert ist und ein oder mehrere Heteroatome enthalten kann,

**Katalysatoren der allgemeinen Formel (B),** 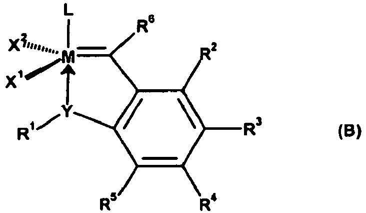 worin
- M: Ruthenium oder Osmium bedeutet,
- Y: Sauerstoff (O), Schwefel (S), einen Rest N-R¹ oder einen Rest P-R¹ bedeutet,
- X¹ und X²: gleich oder verschieden sind und zwei anionische Liganden darstellen,
- R¹: einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
- R², R³, R⁴ und R⁵: gleich oder verschieden sind und Wasserstoff, organische oder anorganische Reste darstellen,
- R⁶: Wasserstoff, einen Alkyl-, Alkenyl-, Alkinyl- oder einen Aryl-Rest bedeutet und
- L: ein Ligand ist, der die gleichen Bedeutungen besitzt, wie der Ligand L in Formel (A), und bevorzugt für einen P(R⁷)₃ Rest steht , wobei R⁷ unabhängig voneinander C₁-C₆-Alkyl, C₃-C₈-Cycloalkyl oder Aryl bedeuten, oder aber L für einen gegebenenfalls substituierten Imidazolidinrest ("Im") steht, der bevorzugt die Struktur der allgemeinen Formeln (IIa) und (IIb) besitzt, 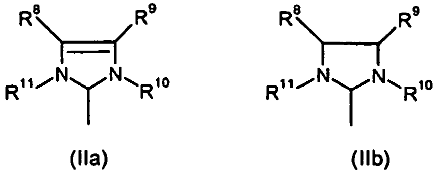 worin
- R⁸, R⁹, R¹⁰, R¹¹: gleich oder verschieden sind und Wasserstoff,geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy,C₂-C₂₀-Alkinyloxy, C₆-C₂₀-Aryloxy, C₂-C₂₀-Alkoxycarbonyl, C₁-C₂₀-Alkylthio, C₆-C₂₀-Aryl-thio, C₁-C₂₀-Alkylsulfonyl, C₁-C₂₀-Alkylsulfonat, C₆-C₂₀-Arylsulfonat oder C₁-C₂₀-Alkylsulfinyl bedeuten, wobei alle zuvor genannten Reste gegebenenfalls substituiert sind
und besonders bevorzugt eine der nachfolgenden Strukturen (IIIa) bis (IIIf) aufweist, wobei Ph jeweils für Phenyl, Bu für Butyl und Mes für einen 2,4,6-Trimethylphenyl-Rest oder alternativ jeweils für einen 2,6-Diisopropylphenyl-Rest steht. 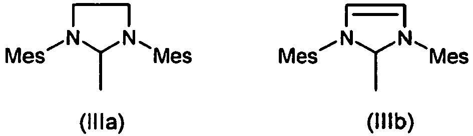 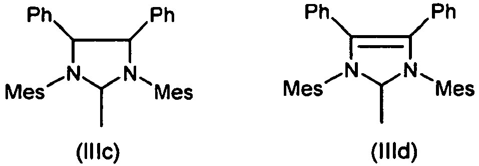 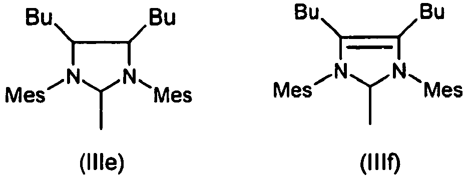 oder Katalysatoren der allgemeinen Formel (G), 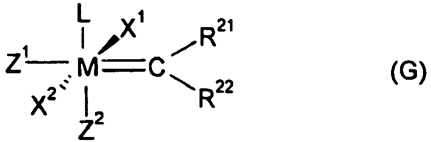 worin
- M: Osmium oder Ruthenium bedeutet,
- X¹ und X²: gleich oder verschieden sind und zwei anionische Liganden darstellen,
- L: einen Liganden, bevorzugt einen neutralen Elektronen-Donor darstellt,
- Z¹ und Z²: gleich oder verschieden sind und neutrale Elektronen-Donoren darstellen, und
- R²¹ und R²²: unabhängig voneinander Wasserstoff, Alkyl, Cycloalkyl, Alkenyl, Alkinyl, Aryl, Carboxylat, Alkoxy, Alkenyloxy, Alkinyloxy, Aryloxy, Alkoxycarbonyl, Alkylamino, Alkylthio, Alkylsulfonyl oder Alkylsulfinyl bedeuten, die jeweils optional durch ein oder mehrere Reste ausgewählt aus Alkyl, Halogen, Alkoxy, Aryl oder Heteroaryl substituiert sind.

C₂₀-Alkinyl-, bevorzugt C₂-C₁₈-Alkinyl, C₆-C₂₄-Aryl, bevorzugt C₆-C₁₄-Aryl, C₄-C₂₃-Heteroaryl, wobei diese Heteroaryl-Reste mindestens 1 Heteroatom, bevorzugt Stickstoff oder Sauerstoff aufweisen, oder für einen Rest der allgemeinen Formel (-CHZ¹-CHZ¹-A²-)ₚ-CH₂-CH₃, wobei p eine ganze Zahl von 1 bis 10 ist, Z¹ gleich oder verschieden und Wasserstoff oder Methyl bedeuten, bevorzugt die an benachbarten C-Atomen sitzenden Z¹ ungleich sind, und A² Sauerstoff, Schwefel oder -NH bedeutet, bedeuten.

In einer besonders bevorzugten Ausgestaltung der Erfindung werden im Katalysatorsystem Verbindungen der allgemeinen Formel (Z) eingesetzt, bei denen R im Rahmen der Reste OR und NR₂ jeweils für Methyl, Ethyl, n-Propyl, i-Propyl, n-Butyl, i-Butyl, tert.-Butyl, n-Pentyl, i-Pentyl, tert.-Pentyl, Hexyl, Decyl, Dodecyl, Oleyl, Phenyl oder sterisch gehindertes Phenyl stehen.

In der allgemeinen Formel (Z) steht der Teil **BFₘXₙ** bevorzugt für BF₃, BF₂Cl, BFCl₂ BF₂Br, BFBr₂, BF₂(OC₂H₅), BF(OC₂H₅)₂, BF₂(CH₃) und BF(CH₃)₂. Besonders bevorzugt steht **BFₘXₙ** für BF₃.

In den Verbindungen der allgemeinen Formel (Z) kann D die folgenden Bedeutungen der allgemeinen Formeln (2) bis (16) annehmen

**OR₂** (2)

**ROH** (3)

**R-COOH** (4)

**SR₂** (5)

**O=SR₂** (6)

**O₂SR₂** (7)

**NHR₂, NH₂R, NR₃,** (8a, 8b, 8c)

**YR₃, R₂Y-YR₂** (9a, 9b)

**O=YR₃** (10)

**O=Y(OR)₂** (11)

**O=Y(OR)₃** (12)

**O=CR₂** (13)

**S=YR₃** (14)

**H₂SO₄** (15)

**RSO₃H** (16)

wobei Y für Phosphor, Arsen oder Antimon steht und die Reste R gleich oder verschieden sind und Wasserstoff oder lineare, verzweigte, aliphatische, cyclische, heterocyclische oder aromatische Reste mit 1-33 Kohlenstoffatome darstellen, die verbrückt sein können und optional noch weitere 1 bis 15 Heteroatome, bevorzugt Stickstoff oder Sauerstoff, aufweisen können oder aber optional substituiert sind. Bevorzugt bedeuten die Reste R unabhängig voneinander Wasserstoff, geradkettiges oder verzweigtes C₁-C₃₀-Alkyl, besonders bevorzugt geradkettiges oder verzweigtes C₁-C₁₂-Alkyl, C₃-C₂₀-Cycloalkyl, besonders bevorzugt C₅-C₈-Cycloalkyl, geradkettiges oder verzweigtes C₂-C₂₀-Alkenyl, besonders bevorzugt geradkettiges oder verzweigtes C₂-C₁₄-Alkenyl, geradkettiges oder verzweigtes C₂-C₂₀-Alkinyl, besonders bevorzugt geradkettiges oder verzweigtes C₂-C₁₄-Alkinyl, C₆-C₂₄-Aryl, besonders bevorzugt C₆-C₁₄-Aryl dar, wobei alle vorgenannten Reste jeweils optional durch ein oder mehrere Alkyl-, Halogen-, bevorzugt Fluor oder Chlor-, Alkoxy-, Aryl- oder Heteroaryl-Reste substituiert sein können. Sofern in einer der Formeln (2)-(16) zwei Reste R enthalten sind, so können diese unter Einbindung des gemeinsamen Atoms bzw. der Atome, an das bzw. an die sie gebunden sind, auch zu einer cyclischen Gruppe verbrückt sein, die aliphatischer oder aromatischer Natur sein kann, gegebenenfalls substituiert ist und zusätzlich ein oder mehrere Heteroatome, bevorzugt Sauerstoff oder Stickstoff, enthalten kann.

Beispiele **für Verbindungen D der allgemeinen Formel (2)** sind: Wasser, Dimethylether, Diethylether, Di-n-Propylether, Di-i-propylether, Di-n-Butylether, Di-i-Butylether, Di-t-Butylether, Methyl-t-Butylether, Dimethoxyethan, Di-n-butoxyethan, Diphenylether, Methylphenylether, Ethylphenylether, Tetrahydrofuran, Tetrahydropyran. Bevorzugt sind Wasser, Diethylether, Tetrahydrofuran sowie Tetrahydropyran.

Beispiele für **Verbindungen D der allgemeinen Formel (3)** sind: Methanol, Ethanol, n-Propanol, i-Propanol, n-Butanol, t-Butanol, Phenol, Brenzkatechin, Anisol und Salicylsäure.

Beispiele für **Verbindungen D der allgemeinen Formel (4)** sind: Ameisensäure, Essigsäure, Propionsäure, Zitronensäure, Trichloressigsäure, Trifluoressigsäure und Benzoesäure.

Beispiele für **Verbindungen D der allgemeinen Formel (5)** sind: Schwefelwasserstoff, Methylmercaptan, n-Hexylmercaptan, t-Butylmercaptan, t-Nonylmercaptan, n-Dodecylmercaptan und t-Dodecylmercaptan, Dimethylsulfid, Diethylsulfid, Diisopropylsulfid, Tetrahydrothiophen und Diphenylsulfid.

Beispiele für **Verbindungen D der allgemeinen Formel (6)** sind Dimethylsulfoxid, Diethylsulfoxid, Diisopropylsulfoxid, Butylmethylsulfoxid und Tetrahydrothiophen-1-oxid.

Beispiele für **Verbindungen D der allgemeinen Formel (7)** sind Dimethylsulfon, Diethylsulfon, Diisopropylsulfon, Butylmethylsulfon und Sulfolan (Tetrahydrothiophen-1,1-dioxid).

Im Rahmen dieser Anmeldung und Erfindung können alle zuvor genannten und im Folgenden genannten, allgemeinen oder in Vorzugsbereichen genannten Definitionen von Resten, Parametern oder Erläuterungen untereinander, also auch zwischen den jeweiligen Bereichen und Vorzugsbereichen in beliebiger Weise kombiniert werden.

Der im Rahmen dieser Anmeldung im Zusammenhang mit den verschiedenen Typen von Metathese-Katalysatoren oder Verbindungen der allgemeinen Formel (Z) verwendete Begriff "substituiert" bedeutet, dass ein Wasserstoff-Atom an einem angegebenen Rest oder Atom durch eine der jeweils angegebenen Gruppen ersetzt ist, mit der Maßgabe, dass die Wertigkeit des angegebenen Atoms nicht überschritten wird und die Substitution zu einer stabilen Verbindung führt.

Als Katalysator-Systeme werden beispielsweise Systeme eingesetzt, die neben mindestens einer der speziellen Verbindungen der allgemeinen Formel (Z) einen Katalysator der allgemeinen Formel (A) umfassen, 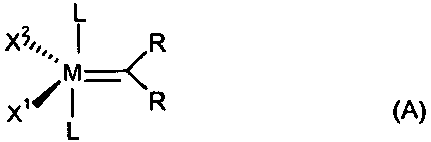 worin
- M: Osmium oder Ruthenium bedeutet,
- X¹ und X²: gleich oder verschieden sind und zwei anionische Liganden, darstellen,
- L: gleiche oder verschiedene Liganden, bevorzugt neutrale Elektronen-Donoren darstellen,
- R: gleich oder verschieden sind und Wasserstoff, Alkyl, bevorzugt C₁-C₃₀-Alkyl, Cycloalkyl, bevorzugt C₃-C₂₀-Cycloalkyl, Alkenyl, bevorzugt C₂-C₂₀-Alkenyl Alkinyl, bevorzugt C₂-C₂₀-Alkinyl, Aryl, bevorzugt C₆-C₂₄-Aryl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkinyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulfonyl, oder Alkylsulfinyl, bevorzugt C₁-C₂₀-Alkylsulfinyl darstellen, wobei diese Reste alle jeweils optional durch ein oder mehrere Alkyl-, Halogen-, Alkoxy-, Aryl- oder Heteroaryl-Reste substituiert sein können, oder alternativ beide Reste R unter Einbindung des gemeinsamen C-Atoms, an das sie gebunden sind, zu einer cyclischen Gruppe verbrückt sind, die aliphatischer oder aromatischer Natur sein kann, gegebenenfalls substituiert ist und ein oder mehrere Heteroatome enthalten kann.

Das Katalysator-System umfastr damit neben einem Katalysator der allgemeinen Formel (A) eine Verbindung der allgemeinen Formel (Z), worin der Teil BFₘXₙ für BF₃, BF₂Cl, BFCl₂ BF₂Br, BFBr₂, BF₂(OC₂H₅), BF(OC₂H₅)₂, BF₂(CH₃) und BF(CH₃)₂ steht, D ausgewählt ist aus der Gruppe bestehend aus Wasser, Diethylether, Ethylamin, THF, n-Propanol, Ameisensäure, Essigsäure, Trifluoressigsäure, Trichloressigsäure, Schwefelsäure, Phosphorsäure, Trifluormethansulfonsäure und Toluolsulfonsäure, und v = 1, 2 oder 3 ist.

In besonders bevorzugten Katalysatoren der allgemeinen Formel (A) ist der eine Rest R Wasserstoff und der andere Rest R bedeutet C₁-C₂₀-Alkyl, C₃-C₁₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₃₀-Alkylamino, C₁-C₃₀-Alkylthio, C₆-C₂₄-Arylthio, C₁-C₂₀-Alkylsulfonyl oder C₁-C₂₀-Alkylsulfinyl, wobei diese Reste alle jeweils durch ein oder mehrere Alkyl-, Halogen-, Alkoxy-, Aryl- oder Heteroaryl-Reste substituiert sein können.

In den Katalysatoren der allgemeinen Formel (A) sind **X¹ und X²** gleich oder verschieden und stellen zwei anionische Liganden, dar.

X¹ und X² können beispielsweise Wasserstoff, Halogen, Pseudohalogen, geradkettige oder verzweigte C₁-C₃₀-Alkyl, C₆-C₂₄-Aryl, C₁-C₂₀-Alkoxy, C₆-C₂₄-Aryloxy, C₃-C₂₀-Alkyldiketonat, C₆-C₂₄-Aryldiketonat, C₁-C₂₀-Carboxylat, C₁-C₂₀-Alkylsulfonat, C₆-C₂₄-Arylsulfonat, C₁-C₂₀-Alkylthiol, C₆-C₂₄-Arylthiol, C₁-C₂₀-Alkylsulfonyl oder C₁-C₂₀-Alkylsulfinyl-Reste bedeuten.

Die vorgenannten Reste X¹ und X² können ferner durch ein oder mehrere weitere Reste substituiert sein, beispielsweise durch Halogen, bevorzugt Fluor, C₁-C₁₀-Alkyl, C₁-C₁₀-Alkoxy oder C₆-C₂₄-Aryl, wobei auch diese Reste gegebenenfalls wiederum durch ein oder mehrere Substituenten substituiert sein können, die aus der Gruppe umfassend Halogen, bevorzugt Fluor, C₁-C₅-Alkyl, C₁-C₅-Alkoxy und Phenyl ausgewählt sind.

In einer bevorzugten Ausführungsform sind X¹ und X² gleich oder verschieden und bedeuten Halogen, insbesondere Fluor, Chlor, Brom oder Jod, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat.

In einer besonders bevorzugten Ausführungsform sind X¹ und X² identisch und bedeuten Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat).

In der allgemeinen Formel (A) sind **L** gleiche oder verschiedene Liganden und bevorzugt neutrale Elektronen-Donoren.

Die beiden Liganden L können beispielsweise unabhängig voneinander einen Phosphin-, sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Pyridin-, Thioether- oder einen Imidazolidin ("Im")-Liganden darstellen.

Bevorzugt bedeuten die beiden Liganden L unabhängig voneinander einen C₆-C₂₄-Aryl-, C₁-C₁₀-Alkyl- oder C₃-C₁₀-Cycloalkyl-Phosphin-Liganden, einen sulfonierten C₆-C₁₄-Aryl- oder sulfonierten C₁-C₁₀-Alkyl-Phosphin-Liganden, einen C₆-C₂₄-Aryl- oder C₁-C₁₀-Alkyl-Phosphinit-Liganden, einen C₆-C₂₄-Aryl- oder C₁-C₁₀-Alkylphosphonit-Liganden, einen C₆-C₁₄-Aryl- oder C₁-C₁₀-Alkylphosphit-Liganden, einen C₆-C₂₄-Aryl- oder C₁-C₁₀-Alkylarsin-Liganden, einen C₆-C₂₄-Aryl- oder C₁-C₁₀-Alkylamin-Liganden, einen Pyridin-Liganden, einen C₆-C₂₄-Aryl- oder C₁-C₁₀-Alkyl-Sulfoxid-Liganden, einen C₆-C₁₄-Aryl- oder C₁-C₁₀-Alkyl-Ether-Liganden oder einen C₆-C₁₄-Aryl- oder C₁-C₁₀-Alkylamid-Liganden, die alle jeweils durch eine Phenylgruppe substituiert sein können, die wiederum gegebenenfalls durch einen Halogen-, C₁-C₅-Alkyl- oder C₁-C₅-Alkoxy-Rest substituiert ist.

Die Bezeichnung "Phosphin" schließt beispielsweise PPh₃, P(p-Tolyl)₃, P(o-Tolyl)₃, PPhenyl(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Propyl)₃, P(CHCH₃(CH₂CH₃))₃, P(Cyclopentyl)₃, P(Cyclohexyl)₃, P(Neopentyl)₃ und P(Neophenyl)₃ ein.

Die Bezeichnung "Phosphinit" schließt beispielsweise Triphenylphosphinit, Tricyclohexylphosphinit, Triisopropylphosphinit und Methyldiphenylphosphinit ein.

Die Bezeichnung "Phosphit" schließt beispielsweise Triphenylphosphit, Tricyclohexylphosphit, Tri-tert.-Butylphosphit, Triisopropylphosphit und Methyldiphenylphosphit ein.

Die Bezeichnung "Stibin" schließt beispielsweise Triphenylstibin, Tricyclohexylstibin und Trimethylstiben ein.

Die Bezeichnung "Sulfonat" schließt beispielsweise Trifluoromethansulfonat, Tosylat und Mesylat ein.

Die Bezeichnung "Sulfoxid" schließt beispielsweise (CH₃)₂S(=O) und (C₆H₅)₂SO ein.

Die Bezeichnung "Thioether" schließt beispielsweise CH₃SCH₃, C₆H₅SCH₃, CH₃OCH₂CH₂SCH₃ und Tetrahydrothiophen ein.

Die Bezeichnung "Pyridin" soll im Rahmen dieser Anmeldung als Oberbegriff sämtliche stickstoffhaltigen Liganden einschließen wie sie z.B. in der WO-A-03/011455 genannten werden. Beispiele hierfür sind: Pyridin, Picoline (α-, β-, und γ-Picolin), Lutidine (2,3-, 2,4-, 2,5-, 2,6-, 3,4-und 3,5-Lutidin), Collidin (2,4,6-Trimethylpyridin), Trifluormethylpyridin, Phenylpyridin, 4-(Dimethylamino)pyridin, Chlorpyridine, Brompyridine, Nitropyridine, Chinolin, Pyrimidin, Pyrrol, Imidazol und Phenylimidazol.

Handelt es sich bei einem oder beiden der Liganden L um einen Imidazolidinrest (Im), so weist dieser üblicherweise eine Struktur der allgemeinen Formeln (IIa) oder (IIb) auf, 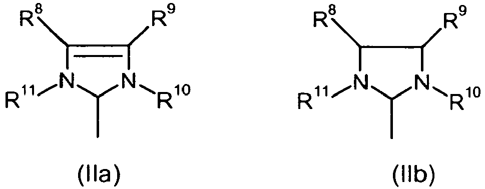 worin
- R⁸, R⁹, R¹⁰, R¹¹: gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀-Arylthio, C₁-C₂₀-Alkylsulfonyl, C₁-C₂₀-Alkylsulfonat, C₆-C₂₀-Arylsulfonat oder C₁-C₂₀-Alkylsulfinyl bedeuten.

Gegebenenfalls kann einer oder mehrere der Reste R⁸, R⁹, R¹⁰, R¹¹ unabhängig voneinander durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert sein, wobei diese vorgenannten Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy und Phenyl substituiert sein können.

Nur zur Klarstellung sei hinzugefügt, dass die in den allgemeinen Formeln (IIa) und (IIb) im Rahmen dieser Anmeldung dargestellten Strukturen des Imidazolidinrests mit den in der Literatur für diesen Imidazolidinrest (Im) häufig auch zu findenden Strukturen (IIa') und (IIb'), die den Carben-Charakter des Imidazolidinrests hervorheben, gleichbedeutend sind. Dies gilt entsprechend auch für die zugehörigen bevorzugten, nachfolgend noch dargestellten Strukturen (IIIa)-(IIIf).

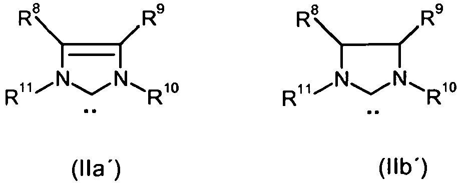

In einer bevorzugten Ausführungsform der Katalysatoren der allgemeinen Formel (A) bedeuten R⁸ und R⁹ unabhängig voneinander Wasserstoff, C₆-C₂₄-Aryl, besonders bevorzugt Phenyl, geradkettiges oder verzweigtes C₁-C₁₀-Alkyl, besonders bevorzugt Propyl oder Butyl, oder bilden zusammen unter Einschluss der Kohlenstoffatome, an die sie gebunden sind, einen Cycloalkyl- oder Aryl-Rest, wobei alle vorgenannten Reste gegebenenfalls wiederum durch ein oder mehrere weitere Reste substituiert sein können, ausgewählt aus der Gruppe umfassend geradkettiges oder verzweigtes C₁-C₁₀-Alkyl, C₁-C₁₀-Alkoxy, C₆-C₂₄-Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer bevorzugten Ausführungsform der Katalysatoren der allgemeinen Formel (A) sind ferner die Reste R¹⁰ und R¹¹ gleich oder verschieden und bedeuten geradkettiges oder verzweigtes C₁-C₁₀-Alkyl, besonders bevorzugt i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat, C₆-C₁₀-Arylsulfonat, besonders bevorzugt p-Toluolsulfonat.

Gegebenenfalls sind die vorgenannten Reste als Bedeutungen von R¹⁰ und R" substituiert durch einen oder mehrere weitere Reste ausgewählt aus der Gruppe umfassend geradkettiges oder verzweigtes C₁-C₅-Alkyl, insbesondere Methyl, C₁-C₅-Alkoxy, Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste R¹⁰ und R" gleich oder verschieden sein und bedeuten i-Propyl, Neopentyl, Adamantyl, Mesityl oder 2,6-Diisopropylphenyl.

Besonders bevorzugte Imidazolidinreste (Im) haben die nachfolgenden Strukturen (IIIa) bis (IIIf), wobei Ph jeweils für einen Phenyl-Rest, Bu für einen Butyl-Rest und Mes jeweils für 2,4,6-Trimethylphenyl-Rest steht oder Mes alternativ in allen Fällen für 2,6-Diisopropylphenyl steht.

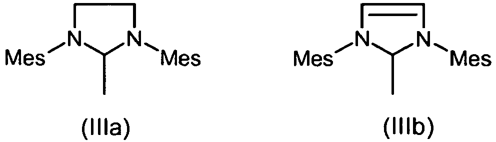

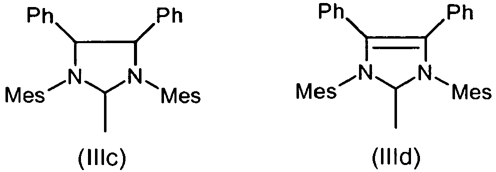

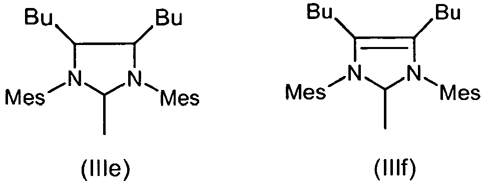

Verschiedenste Vertreter der Katalysatoren der Formel (A) sind prinzipiell bekannt, so z.B. aus der WO-A-96/04289 und der WO-A-97/06185.

Alternativ zu den bevorzugten Im-Resten steht einer oder beide Liganden L in der allgemeinen Formel (A) bevorzugt auch für gleiche oder verschiedene Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt stehen in der allgemeinen Formel (A) einer oder beide Liganden L für einen Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt sind Katalysator-Systeme, die neben mindestens einer Verbindung der allgemeinen Formel (Z) einen der beiden folgenden Katalysatoren umfassen, die unter die allgemeine Formel (A) fallen, und die Strukturen (IV) (Grubbs (I)-Katalysator) und (V) (Grubbs (II)-Katalysator), wobei Cy für Cyclohexyl und Mes für Mesityl steht, besitzen.

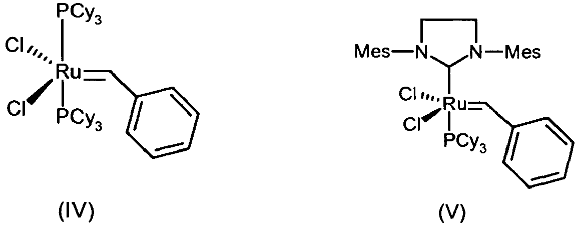

In einer weiteren Ausführungsform wird im erfindungsgemäßen Verfahren ein Katalysatorsystem eingesetzt, das neben mindestens einer Verbindung der allgemeinen Formel (Z) einen **Katalysator der allgemeinen Formel (A1)** enthält, 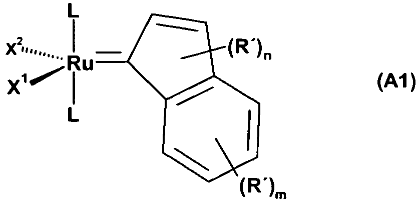 worin
- X¹, X² und L: die gleichen allgemeinen, bevorzugten und besonders bevorzugten Bedeutungen haben können wie in der allgemeinen Formel (A),
- n: gleich 0, 1 oder 2 ist,
- m: gleich 0, 1, 2, 3 oder 4 ist und
- R': gleich oder verschieden sind und Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Reste bedeuten, die alle jeweils durch ein oder mehrere Alkyl-, Halogen-, Alkoxy-, Aryl- oder Heteroaryl-Reste substituiert sein können.

Als bevorzugter Katalysator, der unter die allgemeine Formel (A1) fällt, kann beispielsweise derjenige der folgenden Formel (VI) eingesetzt werden, wobei Mes jeweils für 2,4,6-Trimethylphenyl und Ph für Phenyl steht.

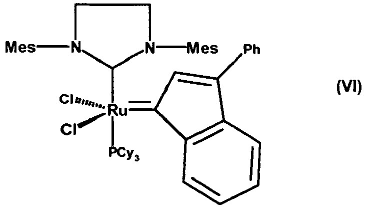

Dieser in der Literatur auch als "Nolan-Katalysator" bezeichnete Katalysator ist beispielsweise aus WO-A-2004/112951 bekannt.

Die besonders bevorzugten Katalysator-Systeme umfassen neben den Katalysatoren der Formeln (IV), (V) oder (VI) eine Verbindung der allgemeinen Formel (Z), worin der Teil **BF**ₘ**X**ₙ für BF₃, BF₂Cl, BFCl₂ BF₂Br, BFBr₂, BF₂(OC₂H₅), BF(OC₂H₅)₂, BF₂(CH₃) und BF(CH₃)₂ steht, D ausgewählt ist aus der Gruppe bestehend aus Wasser, Diethylether, Ethylamin, THF, n-Propanol, Ameisensäure, Essigsäure, Trifluoressigsäure, Trichloressigsäure, Schwefelsäure, Phosphorsäure, Trifluormethansulfonsäure und Toluolsulfonsäure, und v = 1, 2 oder 3 ist.

Als weitere Katalysator-Systeme sind ferner auch Systeme geeignet, die neben mindestens einer Verbindung der allgemeinen Formel (Z) einen **Katalysator der** allgemeinen **Formel (B)** umfassen, 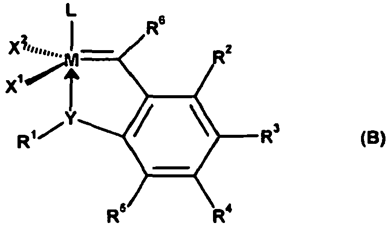 worin
- M: Ruthenium oder Osmium bedeutet,
- X¹ und X²: gleiche oder verschiedene anionische Liganden sind,
- Y: Sauerstoff (O), Schwefel (S), einen Rest N-R¹ oder einen Rest P-R¹ bedeutet, wobei R¹ die nachfolgend genannten Bedeutungen besitzt,
- R¹: einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
- R², R³, R⁴ und R⁵: gleich oder verschieden sind und Wasserstoff, organische oder anorganische Reste darstellen,
- R⁶: Wasserstoff, einen Alkyl-, Alkenyl-, Alkinyl- oder einen Aryl-Rest bedeutet und
- L: ein Ligand ist, der die gleichen Bedeutungen besitzt wie für die Formel (A) genannt.

Das Katalysator-System umfasst in diesem Fall neben dem Katalysator der allgemeinen Formel (B) eine Verbindung der allgemeinen Formel (Z), worin der Teil **BFₘXₙ** für BF₃, BF₂Cl, BFCl₂ BF₂Br, BFBr₂, BF₂(OEt), BF(OEt)₂, BF₂(Me) oder BF(Me)₂ steht, D ausgewählt ist aus der Gruppe bestehend aus Wasser, Diethylether, Ethylamin, THF, n-Propanol, Ameisensäure, Essigsäure, Trifluoressigsäure, Trichloressigsäure, Schwefelsäure, Phosphorsäure, Trifluormethan-sulfonsäure und Toluolsulfonsäure, und v = 1, 2 oder 3 ist.

Die Katalysatoren der allgemeinen Formel (B) sind prinzipiell bekannt. Vertreter dieser Verbindungsklasse sind die Katalysatoren, die von Hoveyda et al. in US 2002/0107138 A1 und Angew. Chem. Int. Ed. 2003, 42, 4592 beschrieben sind, und die Katalysatoren, die von Grela in WO-A-2004/035596**,** Eur. J. Org. Chem 2003, 963-966 und Angew. Chem. Int. Ed. 2002, 41, 4038 sowie in J. Org. Chem. 2004, 69, 6894-96 und Chem. Eur. J 2004, 10, 777-784 beschrieben werden. Die Katalysatoren sind käuflich erhältlich bzw. gemäß den angegebenen Literaturstellen herstellbar.

In den Katalysatoren der allgemeinen Formel (B) steht L für einen Liganden, der üblicherweise eine Elektronen-Donor-Funktion besitzt und die gleichen allgemeinen, bevorzugten und besonders bevorzugten Bedeutungen annehmen kann wie L in der allgemeinen Formel (A).

Darüber hinaus gilt, dass L in der allgemeinen Formel (B) bevorzugt einen P(R⁷)₃ Rest, wobei R⁷ unabhängig voneinander C₁-C₆ Alkyl, C₃-C₈-Cycloalkyl oder Aryl bedeuten, oder aber einen gegebenenfalls substituierten Imidazolidinrest ("Im") darstellt.

**C₁-C₆-Alkyl** steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl und n-Hexyl.

**C₃-C₈-Cycloalkyl** umfasst Cyclopropyl, Cyclobutyl, Cylopentyl, Cyclohexyl, Cycloheptyl und Cyclooctyl.

**Aryl** umfasst einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Der Imidazolidinrest **(Im)** weist üblicherweise eine Struktur der allgemeinen Formeln (IIa) oder (IIb) auf, 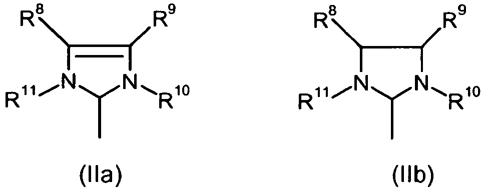 worin
- R⁸, R⁹, R¹⁰, R¹¹: gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀-Arylthio, C₁-C₂₀-Alkylsulfonyl, C₁-C₂₀-Alkylsulfonat, C₆-C₂₀-Arylsulfonat oder C₁-C₂₀-Alkylsulfinyl bedeuten.

Gegebenenfalls kann einer oder mehrere der Reste R⁸, R⁹, R¹⁰, R¹¹ unabhängig voneinander durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert sein, wobei diese vorgenannten Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy und Phenyl substituiert sein können.

In einer bevorzugten Ausführungsform des erfindungsgemäß eingesetzten Katalysator-Systems werden neben mindestens einer der oben genannten speziellen Verbindungen der allgemeinen Formel (Z) Katalysatoren der allgemeinen Formel (B) eingesetzt, worin R⁸ und R⁹ unabhängig voneinander Wasserstoff, C₆-C₂₄-Aryl, besonders bevorzugt Phenyl, geradkettiges oder verzweigtes C₁-C₁₀-Alkyl, besonders bevorzugt Propyl oder Butyl, bedeuten oder zusammen unter Einschluss der Kohlenstoffatome, an die sie gebunden sind, einen Cycloalkyl- oder Aryl-Rest bilden, wobei alle vorgenannten Reste gegebenenfalls wiederum durch ein oder mehrere weitere Reste substituiert sein können, ausgewählt aus der Gruppe umfassend geradkettiges oder verzweigtes C₁-C₁₀-Alkyl, C₁-C₁₀-Alkoxy, C₆-C₂₄-Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer weiteren bevorzugten Ausführungsform des erfindungsgemäß eingesetzten Katalysator-Systems werden neben mindestens einer Verbindung der allgemeinen Formel (Z) Katalysatoren der allgemeinen Formel (B) eingesetzt, worin die Reste R¹⁰ und R¹¹ gleich oder verschieden sind und geradkettiges oder verzweigtes C₁-C₁₀-Alkyl, besonders bevorzugt i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat, oder C₆-C₁₀-Arylsulfonat, besonders bevorzugt p-Toluolsulfonat bedeuten.

Gegebenenfalls sind die vorgenannten Reste als Bedeutungen von R¹⁰ und R" substituiert durch einen oder mehrere weitere Reste ausgewählt aus der Gruppe umfassend geradkettiges oder verzweigtes C₁-C₅-Alkyl, insbesondere Methyl, C₁-C₅-Alkoxy, Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste R¹⁰ und R¹¹ gleich oder verschieden sein und bedeuten i-Propyl, Neopentyl, Adamantyl oder Mesityl.

Besonders bevorzugte Imidazolidinreste (Im) haben die bereits zuvor genannten Strukturen (IIIa-IIIf), wobei Mes jeweils für 2,4,6-Trimethylphenyl steht.

In den Katalysatoren der allgemeinen Formel (B) sind **X¹ und X²** gleich oder verschieden und können beispielsweise Wasserstoff, Halogen, Pseudohalogen, geradkettige oder verzweigte C₁-C₃₀-Alkyl, C₆-C₂₄-Aryl, C₁-C₂₀-Alkoxy, C₆-C₂₄-Aryloxy, C₃-C₂₀-Alkyldiketonat, C₆-C₂₄-Aryldiketonat, C₁-C₂₀-Carboxylat, C₁-C₂₀-Alkylsulfonat, C₆-C₂₄-Arylsulfonat, C₁-C₂₀-Alkylthiol, C₆-C₂₄-Arylthiol, C₁-C₂₀-Alkylsulfonyl oder C₁-C₂₀-Alkylsulfinyl bedeuten.

Die vorgenannten Reste X¹ und X² können ferner durch ein oder mehrere weitere Reste substituiert sein, beispielsweise durch Halogen, bevorzugt Fluor, C₁-C₁₀-Alkyl, C₁-C₁₀-Alkoxy oder C₆-C₂₄-ArylReste, wobei auch die letzteren Reste gegebenenfalls wiederum durch ein oder mehrere Substituenten substituiert sein können, die aus der Gruppe umfassend Halogen, bevorzugt Fluor, C₁-C₅-Alkyl, C₁-C₅-Alkoxy und Phenyl ausgewählt sind.

In einer bevorzugten Ausführungsform sind X¹ und X² gleich oder verschieden und bedeuten Halogen, insbesondere Fluor, Chlor, Brom oder Jod, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat.

In einer besonders bevorzugten Ausführungsform sind X¹ und X² identisch und bedeuten Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat).

In der allgemeinen Formel (B) bedeutet der **Rest R¹** einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest, die alle jeweils optional durch ein oder mehrere Alkyl-, Halogen-, Alkoxy-, Aryl- oder Heteroaryl-Reste substituiert sein können.

Üblicherweise bedeutet der Rest R¹ einen C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylamino-, C₁-C₂₀-Alkylthio, C₆-C₂₄-Arylthio, C₁-C₂₀-Alkylsulfonyl oder C₁-C₂₀-Alkylsulfinyl Rest, die alle jeweils optional durch ein oder mehrere Alkyl-, Halogen-, Alkoxy-, Aryl- oder Heteroaryl-Reste substituiert sein können.

Bevorzugt steht R' für einen C₃-C₂₀-Cylcoalkyl-Rest, einen C₆-C₂₄-Aryl-Rest oder einen geradkettigen oder verzweigten C₁-C₃₀-Alkyl-Rest, wobei letztere gegebenenfalls durch ein oder mehrere Doppel- oder Dreifachbindungen oder auch ein oder mehrere Heteroatome, bevorzugt Sauerstoff oder Stickstoff, unterbrochen sein kann. Besonders bevorzugt steht R¹ für einen geradkettigen oder verzweigten C₁-C₁₂-Alkyl-Rest.

Der C₃-C₂₀-Cycloalkyl-Rest umfasst beispielsweise Cyclopropyl, Cyclobutyl, Cylopentyl, Cyclohexyl, Cycloheptyl und Cyclooctyl.

Bei dem C₁-C₁₂-Alkyl-Rest kann es sich beispielsweise um Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, n-Hexyl, n-Heptyl, n-Octyl, n-Decyl oder n-Dodecyl handeln. Insbesondere steht R' für Methyl oder Isopropyl.

Der C₆-C₂₄-Aryl-Rest steht für einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

In der allgemeinen Formel (B) sind die **Reste R², R³, R⁴ und R⁵** gleich oder verschieden und können Wasserstoff, organische oder anorganische Reste darstellen.

In einer geeigneten Ausführungsform sind R², R³, R⁴, R⁵ gleich oder verschieden und bedeuten Wasserstoff, Halogen, Nitro, CF₃, Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio, Alkylsulfonyl- oder Alkylsulfinyl-Reste darstellen, die alle jeweils optional durch ein oder mehrere Alkyl-, Alkoxy-, Halogen-, Aryl- oder Heteroaryl-Reste substituiert sein können.

Üblicherweise sind R², R³, R⁴, R⁵ gleich oder verschieden und bedeuten Wasserstoff, Halogen, bevorzugt Chlor oder Brom, Nitro, CF₃, C₁-C₃₀-Alkyl, C₃-C₁₀-Cylcoalkyl, C₂-C₂₀-Alkenyl, C₂-C₂₀-Alkinyl, C₆-C₂₄-Aryl, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylamino-, C₁-C₂₀-Alkylthio, C₆-C₂₄-Arylthio, C₁-C₂₀-Alkylsulfonyl oder C₁-C₂₀-Alkylsulfinyl Reste, die alle jeweils optional durch ein oder mehrere C₁-C₃₀-Alkyl-, C₁-C₂₀-Alkoxy-, Halogen-, C₆-C₂₄-Aryl- oder Heteroaryl-Reste substituiert sein können.

In einer besonders bewährten Ausführungsform sind R², R³, R⁴, R⁵ sind gleich oder verschieden und stehen für Nitro, geradkettige oder verzweigte C₁-C₃₀-Alkyl-, C₅-C₂₀-Cylcoalkyl-, geradkettige oder verzweigte C₁-C₂₀-Alkoxy-Reste oder C₆-C₂₄-Aryl-Reste, bevorzugt Phenyl oder Naphthyl. Die C₁-C₃₀-Alkyl-Reste sowie C₁-C₂₀-Alkoxy-Reste können optional durch ein oder mehrere Doppel- oder Dreifachbindungen oder auch ein oder mehrere Heteroatome, bevorzugt Sauerstoff oder Stickstoff, unterbrochen sein.

Ferner können auch zwei oder mehr der Reste R², R³, R⁴ oder R⁵ über aliphatische oder aromatische Strukturen verbrückt sein. R³ und R⁴ können beispielsweise unter Einbeziehung der KohlenstoffAtome, an die sie im Phenylring der Formel (B) gebunden sind, einen ankondensierten Phenylring bilden, so dass insgesamt eine Naphthylstruktur resultiert.

In der allgemeinen Formel (B) bedeutet der **Rest R⁶** Wasserstoff, einen Alkyl-, Alkenyl-, Alkinyl- oder einen Aryl-Rest. Bevorzugt bedeutet R⁶ Wasserstoff, einen C₁-C₃₀-Alkyl, einen C₂-C₂₀-Alkenyl-, einen C₂-C₂₀-Alkinyl oder einen C₆-C₂₄-Aryl-Rest. Besonders bevorzugt ist R⁶ Wasserstoff.

Ferner geeignet sind Katalysator-Systeme, die neben mindestens einer der genannten speziellen Verbindungen der allgemeinen Formel (Z) einen **Katalysator gemäß der allgemeinen Formel (B1)** umfassen, 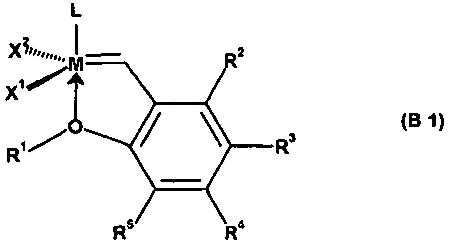 worin
- M, L, X¹, X², R¹, R², R³, R⁴ und R⁵: die für die allgemeine Formel (B) genannten allgemeinen, bevorzugten und besonders bevorzugten Bedeutungen besitzen können.

Diese Katalysator-Systeme umfassen neben dem Katalysator der allgemeinen Formel (B1) eine Verbindung der allgemeinen Formel (Z), worin der Teil **BFₘXₙ** für BF₃, BF₂Cl, BFCl₂ BF₂Br, BFBr₂, BF₂(OC₂H₅), BF(OC₂H₅)₂, BF₂(CH₃) und BF(CH₃)₂ steht, D ausgewählt ist aus der Gruppe bestehend aus Wasser, Diethylether, Ethylamin, THF, n-Propanol, Ameisensäure, Essigsäure, Trifluoressigsäure, Trichloressigsäure, Schwefelsäure, Phosphorsäure, Trifluormethansulfonsäure und Toluolsulfonsäure, und v = 1, 2 oder 3 ist.

Die Katalysatoren der allgemeinen Formel (B1) sind z.B. aus US 2002/0107138 A1 (Hoveyda et al.) prinzipiell bekannt und können nach dort angegebenen Herstellverfahren erhalten werden.

Besonders bevorzugt sind Katalysator-Systeme, die Katalysatoren der allgemeinen Formel (B1), umfassen, wobei
- M: Ruthenium darstellt,
- X¹ und X²: gleichzeitig Halogen, insbesondere gleichzeitig Chlor bedeuten,
- R¹: für einen geradkettigen oder verzweigten C₁-C₁₂ Alkylrest steht,
- R², R³, R⁴, R⁵: die für die allgemeine Formel (B) genannten allgemeinen und bevorzugten Bedeutungen besitzen und
- L: die für die allgemeine Formel (B) genannten allgemeinen und bevorzugten Bedeutungen besitzt.

Insbesondere bevorzugt sind Katalysator-Systeme, die Katalysatoren der allgemeinen Formel (B1), umfassen, wobei
- M: Ruthenium darstellt,
- X¹ und X²: gleichzeitig Chlor bedeuten,
- R¹: für einen Isopropyl-Rest steht,
- R², R³, R⁴, R⁵: alle Wasserstoff bedeuten und
- L: einen gegebenenfalls substituierten Imidazolidin-Rest der Formeln (IIa) oder (IIb) darstellt, 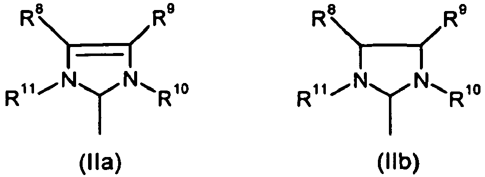 worin
R⁸, R⁹, R¹⁰, R¹¹ gleich oder verschieden sind und Wasserstoff, geradkettiges oder verzweigtes C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₆-C₂₄-Arylthio, C₁-C₂₀-Alkylsulfonyl, C₁-C₂₀-Alkylsulfonat, C₆-C₂₄-Arylsulfonat oder C₁-C₂₀-Alkylsulfinyl bedeuten, wobei die vorgenannten Reste jeweils durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert sein können, wobei auch diese vorgenannten Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy und Phenyl substituiert sein können.

Ganz besonders bevorzugt ist ein Katalysator-System umfassend mindestens eine der oben genannten speziellen Verbindungen der allgemeinen Formel (Z) und einen Katalysator, der unter die allgemeine Strukturformel (B1) fällt und die Formel (VII) besitzt, wobei Mes jeweils für 2,4,6-Trimethylphenyl steht.

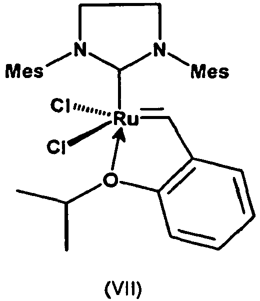

Dieser Katalysator (VII) wird in der Literatur auch als "Hoveyda-Katalysator" bezeichnet.

Weiterhin geeignete Katalysator-Systeme sind solche, die neben mindestens einer der oben genannten speziellen Verbindungen der allgemeinen Formel (Z) einen Katalysator umfassen, der unter die allgemeine Strukturformel (B1) fällt und eine der folgenden Formeln (VIII), (IX), (X), (XI), (XII), (XIII), (XIV) und (XV) besitzt, wobei Mes jeweils 2,4,6-Trimethylphenyl bedeutet.

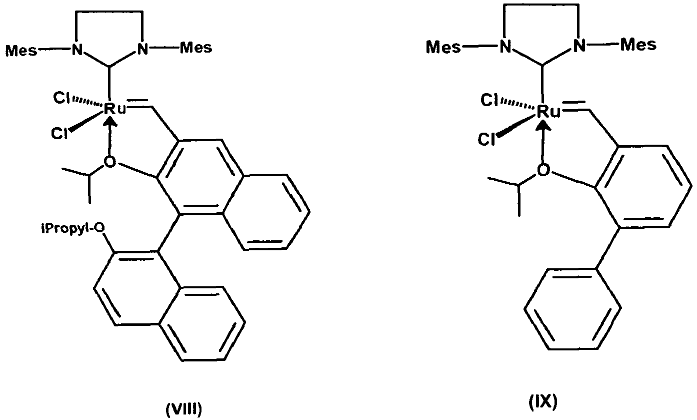

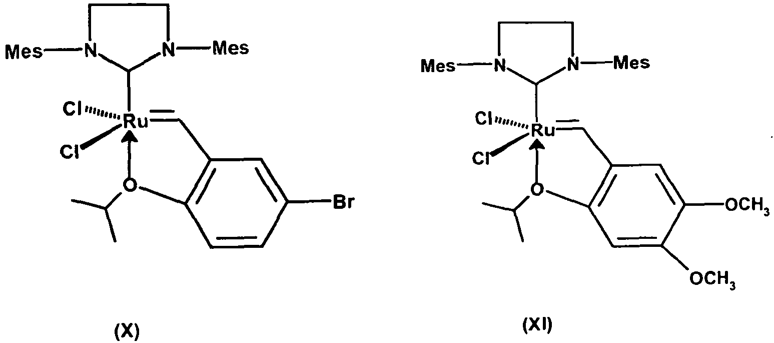

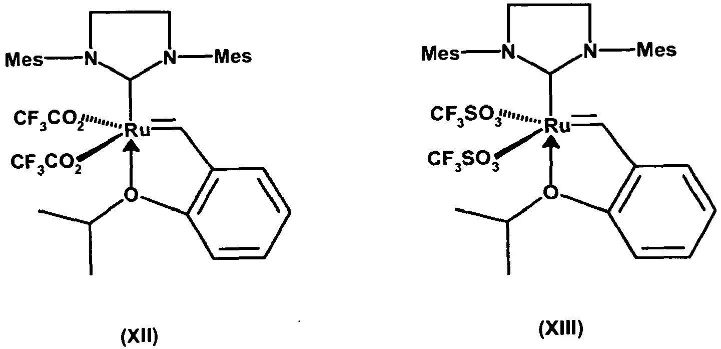

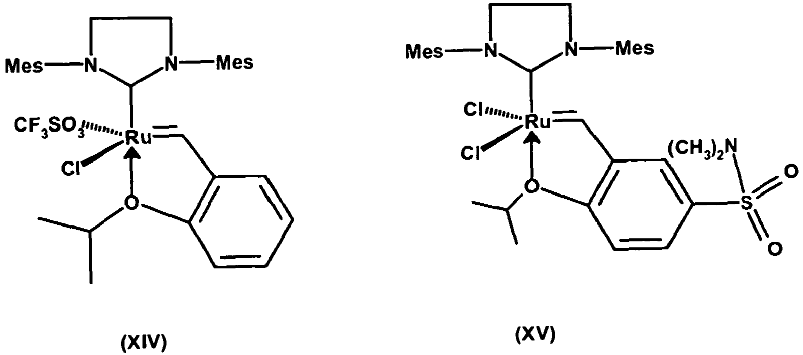

Ein weiteres erfindungsgemäß einzusetzendes Katalysator-System umfasst mindestens eine der oben genannten speziellen Verbindungen der allgemeinen Formel (Z) und einen **Katalysator gemäß der allgemeinen Formel (B2),** 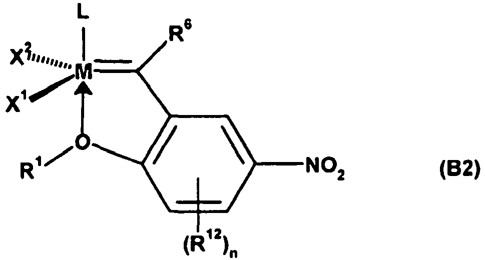 worin
- M, L, X¹, X², R¹ und R⁶: die für die Formel (B) genannten allgemeinen und bevorzugten Bedeutungen haben,
- R¹²: gleich oder verschieden sind und die für die Reste R², R³, R⁴ und R⁵ in der Formel (B) genannten allgemeinen und bevorzugten Bedeutungen, ausgenommen Wasserstoff, besitzen und
- n: gleich 0, 1, 2 oder 3 ist.

Diese Katalysator-Systeme umfassen neben dem Katalysator der allgemeinen Formel (B2) eine Verbindung der allgemeinen Formel (Z), worin der Teil **BFₘXₙ** für BF₃, BF₂Cl, BFCl₂ BF₂Br, BFBr₂, BF₂(OC₂H₅), BF(OC₂H₅)₂, BF₂(CH₃) und BF(CH₃)₂ steht, D ausgewählt ist aus der Gruppe bestehend aus Wasser, Diethylether, Ethylamin, THF, n-Propanol, Ameisensäure, Essigsäure, Trifluoressigsäure, Trichloressigsäure, Schwefelsäure, Phosphorsäure, Trifluormethansulfonsäure und Toluolsulfonsäure, und v = 1,2 oder 3 ist.

Die Katalysatoren der allgemeinen Formel (B2) sind beispielsweise aus WO-A-2004/035596 (Grela) prinzipiell bekannt und können nach dort angegebenen Herstellverfahren erhalten werden.

Besonders bevorzugt einzusetzen sind Katalysator-Systeme, die mindestens eine der oben genannten speziellen Verbindungen der allgemeinen Formel (Z) und einen Katalysator der allgemeinen Formel (B2) umfassen, wobei
- M: Ruthenium darstellt,
- X¹ und X²: gleichzeitig Halogen, insbesondere gleichzeitig Chlor bedeuten,
- R¹: für einen geradkettigen oder verzweigten C₁-C₁₂ Alkylrest steht,
- R¹²: die für die allgemeine Formel (B2) genannten Bedeutungen besitzt,
- n: gleich 0, 1, 2 oder 3 ist,
- R⁶: Wasserstoff bedeutet und
- L: die für die allgemeine Formel (B) genannten Bedeutungen besitzt,

Insbesondere bevorzugt eingesetzt werden Katalysator-Systeme, die mindestens eine der oben genannten speziellen Verbindungen der allgemeinen Formel (Z) und einen Katalysator der allgemeinen Formel (B2) umfassen, wobei
- M: Ruthenium darstellt,
- X¹ und X²: gleichzeitig Chlor bedeuten,
- R¹: für einen Isopropyl-Rest steht,
- n: gleich 0 ist und
- L: einen gegebenenfalls substituierten Imidazolidin-Rest der Formeln (IIa) oder (IIb) darstellt, worin R⁸, R⁹, R¹⁰, R¹¹ gleich oder verschieden sind und die für die insbesondere bevorzugten Katalysatoren der allgemeinen Formel (B1) genannten Bedeutungen besitzen.

Besonders geeignet ist ein Katalysator-System, das einen Katalysator der nachfolgenden Struktur (XVI) enthält sowie eine Verbindung der allgemeinen Formel (Z), worin der Teil **BFₘXₙ** für BF₃, BF₂Cl, BFCl₂ BF₂Br, BFBr₂, BF₂(OC₂H₅), BF(OC₂H₅)₂, BF₂(CH₃) und BF(CH₃)₂ steht, D ausgewählt ist aus der Gruppe bestehend aus Wasser, Diethylether, Ethylamin, THF, n-Propanol, Ameisensäure, Essigsäure, Trifluoressigsäure, Trichloressigsäure, Schwefelsäure, Phosphorsäure, Trifluormethansulfonsäure und Toluolsulfonsäure, und v = 1, 2 oder 3 ist.

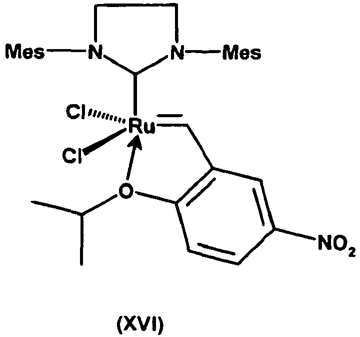

Der Katalysator (XVI) wird in der Literatur auch als "Grela-Katalysator" bezeichnet.

Ein weiteres geeignetes Katalysator-System umfasst mindestens eine der oben genannten speziellen Verbindungen der allgemeinen Formel (Z) und einen Katalysator, der unter die allgemeine Formel (B2) fällt und folgende Struktur (XVII) besitzt, wobei Mes jeweils für 2,4,6-Trimethylphenyl steht.

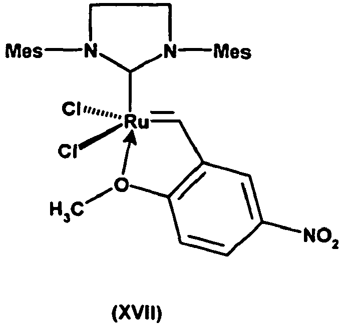

Eine alternative Ausführungsform betrifft Katalysator-Systeme, die mindestens eine oben genannten speziellen Verbindungen der allgemeinen Formel (Z) und einen dendritisch aufgebauten **Katalysator der allgemeinen Formel (B3)** umfassen, 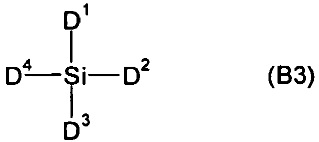 worin D¹, D², D³ und D⁴ jeweils eine Struktur der nachfolgend dargestellten allgemeinen Formel (XVIII) aufweisen, die über die rechts dargestellte Methylengruppe an das Silicium der Formel (B3) angebunden ist und 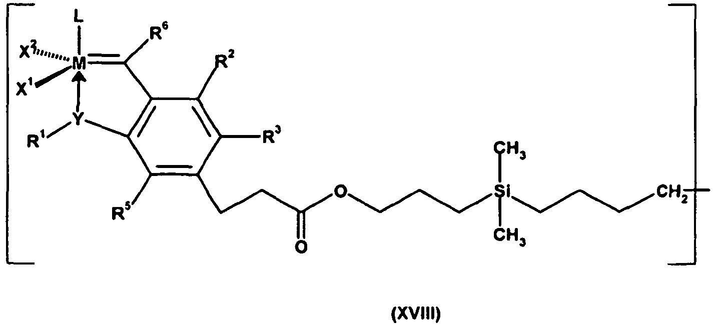 worin
- M, L, X¹, X², R¹, R², R³, R⁵ und R⁶: die für die allgemeine Formel (B) genannten allgemeinen und bevorzugten Bedeutungen besitzen können.

Diese Katalysator-Systeme umfassen neben dem Katalysator der allgemeinen Formel (B3) eine der oben genannten speziellen Verbindungen der allgemeinen Formel (Z), worin der Teil **BFₘXₙ** für BF₃, BF₂Cl, BFCl₂ BF₂Br, BFBr₂, BF₂(OC₂H₅), BF(OC₂H₅)₂, BF₂(CH₃) und BF(CH₃)₂ steht, D ausgewählt ist aus der Gruppe bestehend aus Wasser, Diethylether, Ethylamin, THF, n-Propanol, Ameisensäure, Essigsäure, Trifluoressigsäure, Trichloressigsäure, Schwefelsäure, Phosphorsäure, Trifluormethansulfonsäure und Toluolsulfonsäure, und v = 1, 2 oder 3 ist.

Die Katalysatoren gemäß der allgemeinen Formel (B3) sind aus US 2002/0107138 A1 bekannt und gemäß den dort gemachten Angaben herstellbar.

Eine weitere alternative Ausführungsform betrifft die Verwendung eines Katalysator-Systems, welches mindestens eine Verbindung der allgemeinen Formel (Z) umfasst sowie einen Katalysator der Formel (B4), 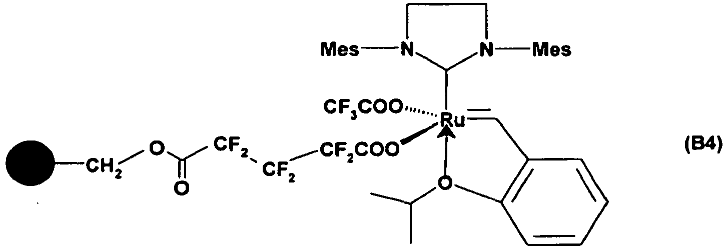 worin das Symbol ● für einen Träger steht.

Bevorzugt handelt es sich bei dem Träger um ein Poly(styroldivinylbenzol)-Copolymer (PS-DVB). Die Katalysatoren gemäß Formel (B4) sind aus Chem. Eur. J. 2004 10, 777-784 prinzipiell bekannt und nach dort beschriebenen Herstellmethoden erhältlich.

Alle vorgenannten Katalysatoren des Typs (B) können entweder als solche im Reaktionsgemisch der NBR-Metathese eingesetzt werden oder aber auch auf einem festen Träger aufgebracht und immobilisiert werden. Als feste Phasen bzw. Träger sind solche Materialien geeignet, die einerseits inert gegenüber dem Reaktionsgemisch der Metathese sind und zum anderen die Aktivität des Katalysators nicht beeinträchtigen. Einsetzbar sind zur Immobilisierung des Katalysators beispielsweise Metalle, Glas, Polymere, Keramik, organische Polymerkügelchen oder auch anorganische Sol-Gele, Ruß, Kieselsäure, Silikate, Calciumcarbonat und Bariumsulfat. 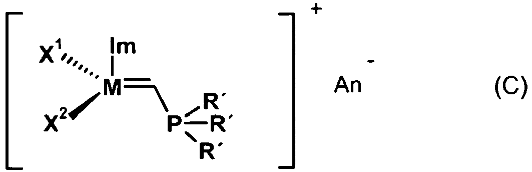 wobei
- M: Ruthenium oder Osmium bedeutet,
- X¹ und X²: gleich oder verschieden sind und anionische Liganden darstellen,
- R': gleich oder verschieden sind und organische Reste darstellen,
- Im: einen gegebenenfalls substituierten Imidazolidinrest darstellt und
- An: ein Anion darstellt.

Bevorzugterweise enthalten diese Katalysator-Systeme neben dem Katalysator der allgemeinen Formel (C) eine Verbindung der allgemeinen Formel (Z), worin der Teil **BFₘXₙ** für BF₃, BF₂Cl, BFCl₂ BF₂Br, BFBr₂, BF₂(OC₂H₅), BF(OC₂H₅)₂, BF₂(CH₃) und BF(CH₃)₂ steht, D ausgewählt ist aus der Gruppe bestehend aus Wasser, Diethylether, Ethylamin, THF, n-Propanol, Ameisensäure, Essigsäure, Trifluoressigsäure, Trichloressigsäure, Schwefelsäure, Phosphorsäure, Trifluormethansulfonsäure und Toluolsulfonsäure, und v = 1, 2, 3, 4 oder 5, besonders bevorzugt 1, 2 oder 3 ist.

Die Katalysatoren der allgemeinen Formel (C) sind prinzipiell bekannt (siehe z.B. Angew. Chem. Int. Ed. 2004,43, 6161-6165**).**

X¹ und X² können in der allgemeinen Formel (C) die gleichen allgemeinen, bevorzugten und besonders bevorzugten Bedeutungen besitzen wie in den Formeln (A) und (B).

Der Imidazolidinrest (Im) weist üblicherweise eine Struktur der allgemeinen Formeln (IIa) oder (IIb) auf, die bereits für den Katalysator-Typ der Formeln (A) und (B) genannt wurden und kann auch alle dort als bevorzugt genannten Strukturen, insbesondere die der Formeln (IIIa)-(IIIf) aufweisen.

Die Reste R' sind in der allgemeinen Formel (C) gleich oder verschieden und bedeuten einen geradkettigen oder verzweigten C₁-C₃₀-Alkyl-, C₅-C₃₀-Cylcoalkyl- oder Aryl-Rest, wobei die C₁-C₃₀-Alkylreste gegebenenfalls durch ein oder mehrere Doppel- oder Dreifachbindungen oder auch ein oder mehrere Heteroatome, bevorzugt Sauerstoff oder Stickstoff, unterbrochen sein können.

**Aryl** umfasst einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Bevorzugt sind die Reste R' in der allgemeinen Formel (C) gleich und bedeuten Phenyl, Cyclohexyl, Cyclopentyl, Isopropyl, o-Tolyl, o-Xylyl oder Mesityl.

Eine weitere alternative Ausführungsform betrifft den Einsatz eines Katalysator-Systems, welches mindestens eine Verbindung der allgemeinen Formel (Z) und einen **Katalysator der allgemeinen Formel (D)** umfasst, 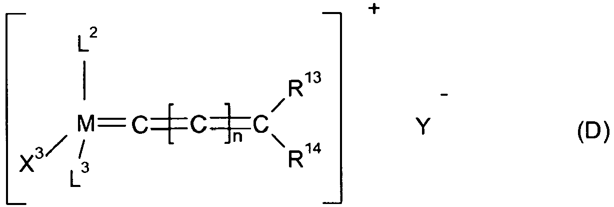 worin
- M: Ruthenium oder Osmium bedeutet,
- R¹³ und R¹⁴: unabhängig voneinander Wasserstoff, C₁-C₂₀-Alkyl, C₂-C₂₀-Alkenyl, C₂-C₂₀ Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₁₄-Aryloxy, C₂-C₂₀-Alkoxycarbonyl, C₁-C₂₀-Alkylthio, C₁-C₂₀ - Alkylsulfonyl oder C₁-C₂₀ Alkylsulfinyl bedeuten,
- X³: ein anionischer Ligand ist,
- L²: ein neutraler n-gebundener Ligand ist, unabhängig davon, ob mono- oder polycyclisch,
- L³: einen Ligand aus der Gruppe der Phosphine, sulfonierten Phosphine, fluorierten Phosphine, funktionalisierten Phosphine mit bis zu drei Aminoalkyl-, Ammoniumalkyl-, Alkoxyalkyl-, Alkoxycarbonylalkyl-, Hydrocarbonylalkyl-, Hydroxyalkyl- oder Ketoalkyl-Gruppen, Phosphite, Phosphinite, Phosphonite, Phosphinamine, Arsine, Stibine, Ether, Amine, Amide, Imine, Sulfoxide, Thioether und Pyridine darstellt,
- Y⁻: ein nicht-koordinierendes Anion ist und
- n: 0, 1, 2, 3, 4 oder 5 ist.

Bevorzugt enthalten diese Katalysator-Systeme neben dem Katalysator der allgemeinen Formel (D) eine Verbindung der allgemeinen Formel (Z), worin der Teil **BFₘXₙ** für BF₃, BF₂Cl, BFCl₂ BF₂Br, BFBr₂, BF₂(OC₂H₅), BF(OC₂H₅)₂, BF₂(CH₃) und BF(CH₃)₂ steht, D ausgewählt ist aus der Gruppe bestehend aus Wasser, Diethylether, Ethylamin, THF, n-Propanol, Ameisensäure, Essigsäure, Trifluoressigsäure, Trichloressigsäure, Schwefelsäure, Phosphorsäure, Trifluormethan-sulfonsäure und Toluolsulfonsäure, und v = 1, 2, 3, 4 oder 5, besonders bevorzugt 1, 2 oder 3 ist.

Eine weitere erfindungsgemäße Ausführungsform betrifft den Einsatz eines Katalysator-Systems, welches mindestens eine Verbindung der allgemeinen Formel (Z) und einen **Katalysator der allgemeinen Formel (E)** umfasst, 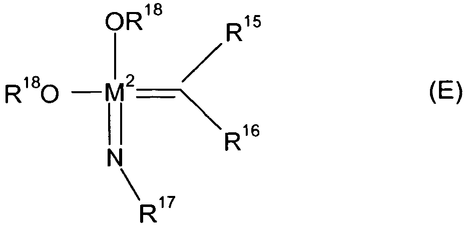 worin
- M²: Molybdän oder Wolfram bedeutet,
- R¹⁵ und R¹⁶: gleich oder verschieden sind und Wasserstoff, C₁-C₂₀-Alkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₁-C₂₀-Alkylsulfonyl oder C₁-C₂₀ Alkylsulfinyl bedeuten,
- R¹⁷ and R¹⁸: gleich oder verschieden sind und einen substituierten oder einen halogensubstituierten C₁-C₂₀-Alkyl, C₆-C₂₄-Aryl, C₆-C₃₀-Aralkyl-Rest oder Silikonenthaltende Analoga davon darstellen.

Bevorzugt enthalten diese Katalysator-Systeme neben dem Katalysator der allgemeinen Formel (E) eine Verbindung der allgemeinen Formel (Z), worin der Teil **BFₘXₙ** für BF₃, BF₂Cl, BFCl₂ BF₂Br, BFBr₂, BF₂(OC₂H₅), BF(OC₂H₅)₂, BF₂(CH₃) und BF(CH₃)₂ steht, D ausgewählt ist aus der Gruppe bestehend aus Wasser, Diethylether, Ethylamin, THF, n-Propanol, Ameisensäure, Essigsäure, Trifluoressigsäure, Trichloressigsäure, Schwefelsäure, Phosphorsäure, Trifluormethan-sulfonsäure und Toluolsulfonsäure, und v = 1, 2, 3, 4 oder 5, besonders bevorzugt 1, 2 oder 3 ist.

Eine weitere alternative Ausführungsform betrifft den Einsatz eines Katalysator-Systems, welches mindestens eine Verbindung der allgemeinen Formel (Z) und einen **Katalysator der allgemeinen Formel (F)** umfasst,

Eine weitere alternative Ausführungsform betrifft den erfindungsgemäßen Einsatz eines Katalysator-Systems, welches mindestens eine der oben genannten Verbindungen der allgemeinen Formel (Z) und einen **Katalysator der allgemeinen Formel (G)** umfasst, 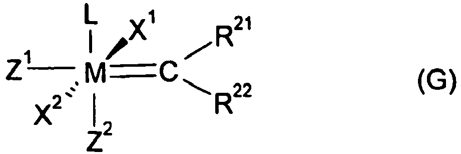 wobei
- M: Osmium oder Ruthenium bedeutet,
- X¹ und X²: gleich oder verschieden sind und zwei anionische Liganden darstellen,
- L: einen Liganden, bevorzugt einen neutralen Elektronen-Donor darstellt,
- Z¹ und Z²: gleich oder verschieden sind und neutrale Elektronen-Donoren darstellen,
- R²¹ und R²²: unabhängig voneinander Wasserstoff, Alkyl, Cycloalkyl, Alkenyl, Alkinyl, Aryl, Carboxylat, Alkoxy, Alkenyloxy, Alkinyloxy, Aryloxy, Alkoxycarbonyl, Alkylamino, Alkylthio, Alkylsulfonyl oder Alkylsulfinyl bedeuten, die jeweils durch ein oder mehrere Reste ausgewählt aus Alkyl, Halogen, Alkoxy, Aryl oder Heteroaryl substituiert sind.

Die Katalysatoren der allgemeinen Formel (G) sind prinzipiell bekannt, so z.B. aus WO 2003/011455 A1**,** WO 2003/087167 A2**,** Organometallics 2001, 20, 5314 und Angew. Chem. Int. Ed. 2002, 41, 4038. Die Katalysatoren sind kommerziell verfügbar oder aber nach den in den vorgenannten Literaturstellen angegebenen Herstellungsmethoden synthetisierbar.

### Z¹ und Z²

In den erfindungsgemäß einsetzbaren Katalysator-Systemen werden Katalysatoren der allgemeinen Formel (G) eingesetzt, worin **Z¹ und Z²** gleich oder verschieden sind und neutrale Elektronen-Donoren darstellen. Diese Liganden sind üblicherweise schwach koordinierend. Typischerweise handelt es sich um optional substituierte heterocyclische Gruppen. Hierbei kann es sich um fünf oder sechsgliedrige monocyclische Gruppen mit 1 bis 4, bevorzugterweise 1 bis 3 und besonders bevorzugt 1 oder 2 Heteroatomen handeln oder um zwei oder polycyclische Strukturen aus 2, 3, 4 oder 5 solcher fünf oder sechsgliedriger monocyclischer Gruppen, wobei alle jeweils vorgenannten Gruppen optional durch ein oder mehrere Alkyl, bevorzugt C₁-C₁₀-Alkyl, Cycloalkyl, bevorzugt C₃-C₈-Cycloalkyl, Alkoxy, bevorzugt C₁-C₁₀-Alkoxy, Halogen, bevorzugt Chlor oder Brom, Aryl, bevorzugt C₆-C₂₄-Aryl, oder Heteroaryl, bevorzugt C₅-C₂₃ Heteroaryl-Reste, die jeweils erneut durch ein oder mehrere Gruppen, bevorzugt ausgewählt aus der Gruppe bestehend aus Halogen, inbesondere Chlor oder Brom, C₁-C₅-Alkyl, C₁-C₅-Alkoxy und Phenyl substituiert sein können. Beispiele für Z¹ und Z² umfassen Stickstoff enthaltende Heterocyclen wie Pyridine, Pyridazine, Bipyridine, Pyrimidine, Pyrazine, Pyrazolidine, Pyrrolidine, Piperazine, Indazole, Quinoline, Purine, Acridine, Bisimidazole, Picolylimine, Imidazolidine und Pyrrole.

Z¹ und Z² können auch miteinander verbrückt sein unter Ausbildung einer cyclischen Struktur. In diesem Fall handelt es sich bei Z¹ und Z² um einen einzigen zweizähnigen Liganden.

### L

In den Katalysatoren der allgemeinen Formel (G) kann L die gleichen allgemeinen, bevorzugten und besonders bevorzugten Bedeutungen annehmen wie L in den allgemeinen Formeln (A) und (B).

### R²¹ und R²²

In den Katalysatoren der allgemeinen Formel (G) sind **R²¹ und R²²** gleich oder verschieden und bedeuten Alkyl, bevorzugt C₁-C₃₀-Alkyl, besonders bevorzugt C₁-C₂₀-Alkyl, Cycloalkyl, bevorzugt C₃-C₂₀-Cycloalkyl, besonders bevorzugt C₃-C₈-Cycloalkyl, Alkenyl, bevorzugt C₂-C₂₀-Alkenyl, besonders bevorzugt C₂-C₁₆-Alkenyl, Alkinyl, bevorzugt C₂-C₂₀-Alkinyl, besonders bevorzugt C₂-C₁₆-Alkinyl, Aryl, bevorzugt C₆-C₂₄-Aryl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkynyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulphonyl, oder Alkylsulfinyl, bevorzugt C₁-C₂₀-Alkylsulphinyl, wobei die vorgenannten Substituenten durch einen oder mehrere Alkyl, Halogen, Alkoxy, Aryl oder Heteroaryl Reste substituiert sein können.

### X¹ und X²

In den Katalysatoren der allgemeinen Formel (G) sind **X¹ und X²** gleich oder verschieden und können die gleichen allgemeinen, bevorzugten und besonders bevorzugten Bedeutungen haben wie zuvor für X¹ und X² in der allgemeinen Formel (A) angegeben.

Bevorzugt werden Katalysatoren der allgemeinen Formel (G) eingesetzt, wobei
- M: Ruthenium ist,
- X¹ und X²: beide Halogen, insbesondere Chlor darstellen,
- R¹ und R²: gleich oder verschieden sind und fünf- oder sechsgliedrige monocyclische Gruppen mit 1 bis 4, bevorzugterweise 1 bis 3 und besonders bevorzugt 1 oder 2 Heteroatomen darstellen oder zwei- oder polycyclische Strukturen aus 2, 3, 4 oder 5 solcher fünf- oder sechsgliedriger monocyclischer Gruppen, wobei alle jeweils vorgenannten Gruppen durch ein oder mehrere Alkyl, bevorzugt C₁-C₁₀-Alkyl, Cycloalkyl, bevorzugt C₃-C₈-Cycloalkyl, Alkoxy, bevorzugt C₁-C₁₀-Alkoxy, Halogen, bevorzugt Chlor oder Brom, Aryl, bevorzugt C₆-C₂₄-Aryl, oder Heteroaryl, bevorzugt C₅-C₂₃ Heteroaryl-Reste substituiert sein können,
- R²¹ und R²²: gleich oder verschieden sind und C₁-C₃₀-Alkyl C₃-C₂₀-Cycloalkyl, C₂-C₂₀-Alkenyl, C₂-C₂₀-Alkynyl, C₆-C₂₄-Aryl, C₁-C₂₀-Carboxylate, C₁-C₂₀-Alkoxy, C₂-C₂₀-Alkenyloxy, C₂-C₂₀-Alkynyloxy, C₆-C₂₄-Aryloxy, C₂-C₂₀-Alkoxycarbonyl, C₁-C₃₀-Alkylamino, C₁-C₃₀-Alkylthio, C₆-C₂₄-Arylthio, C₁-C₂₀-Alkylsulphonyl, C₁-C₂₀-Alkylsulphinyl darstellen, und
- L: eine Struktur der bereits zuvor beschriebenen allgemeinen Formeln (IIa) oder (IIb), inbesondere der Formeln (IIIa) bis (IIIf) besitzt.

Ein besonders bevorzugt eingesetzter Katalysator, der unter die allgemeine Formel (G) fällt, besitzt die Struktur (XIX), 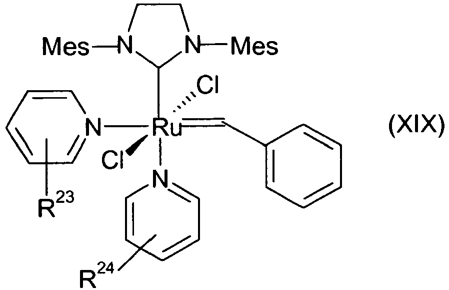 worin
- R²³ und R²⁴: gleich oder verschieden sind und Halogen, geradkettiges oder verzweigtes C₁-C₂₀-Alkyl, C₁-C₂₀-Heteroalkyl, C₁-C₁₀-Haloalkyl, C₁-C₁₀-Alkoxy, C₆-C₂₄-Aryl, bevorzugt Phenyl, Formyl, Nitro, Stickstoff-Heterocyclen, bevorzugt Pyridin, Piperidin und Pyrazin, Carboxy, Alkylcarbonyl, Halocarbonyl, Carbamoyl, Thiocarbomoyl, Carbamido, Thioformyl, Amino, Dialkylamino, Trialkylsilyl und Trialkoxysilyl bedeuten.

Die vorgenannten Reste C₁-C₂₀-Alkyl, C₁-C₂₀-Heteroalkyl, C₁-C₁ₒ-Haloalkyl, C₁-C₁₀-Alkoxy, C₆-C₂₄-Aryl, bevorzugt Phenyl, Formyl, Nitro, Stickstoff-Heterocyclen, bevorzugt Pyridin, Piperidin und Pyrazin, Carboxy, Alkylcarbonyl, Halocarbonyl, Carbamoyl, Thiocarbomoyl, Carbamido, Thioformyl, Amino, Trialkylsilyl und Trialkoxysilyl können jeweils wieder durch ein oder mehrere Reste Halogen, bevorzugt Fluor, Chlor oder Brom, C₁-C₅-Alkyl, C₁-C₅-Alkoxy oder Phenyl substituiert sein.

Besonders bevorzugte Ausführungsformen des Katalysators der Formel (XIX) besitzen die Strukturen (XIX a) oder (XIX b), wobei R²³ und R²⁴ die gleichen Bedeutungen besitzen wie in der Formel (XIX) angegeben.

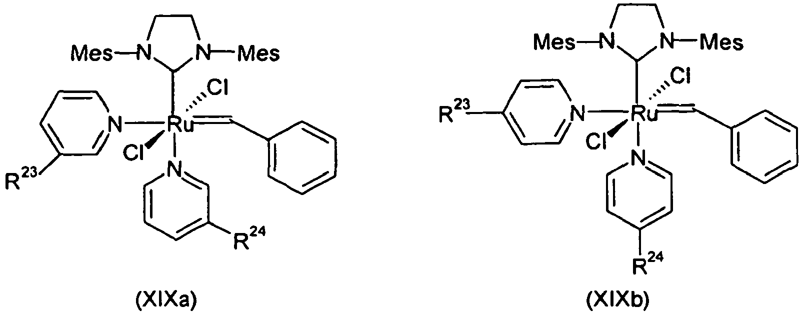

Wenn R²³ und R²⁴ Wasserstoff bedeuten, wird in der Literatur vom "Grubbs III Katalysator" gesprochen.

Weitere geeignete Katalysatoren, die unter die allgemeinen Formel (G) fallen, besitzen die nachfolgend genannten Strukturformen (XX)-(XXXI), wobei Mes jeweils für 2,4,6-Trimethylphenyl steht. 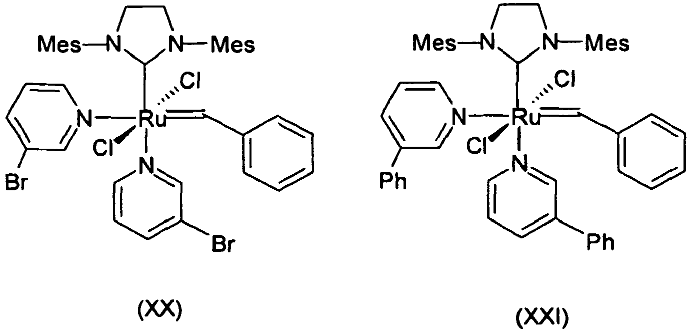 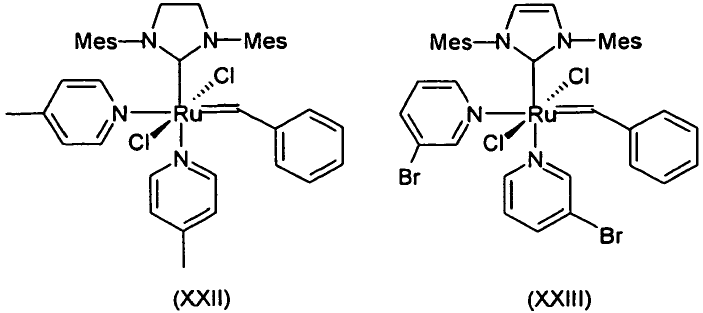 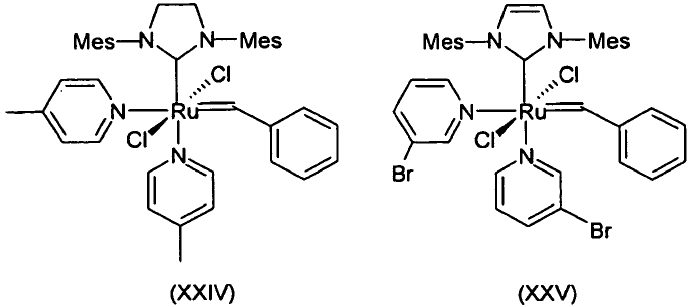 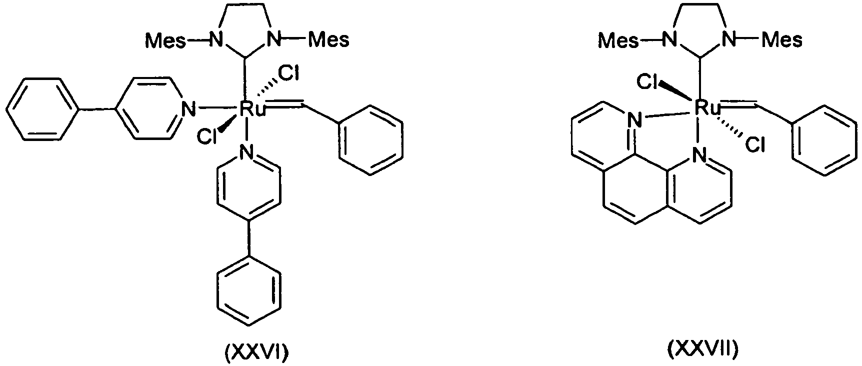 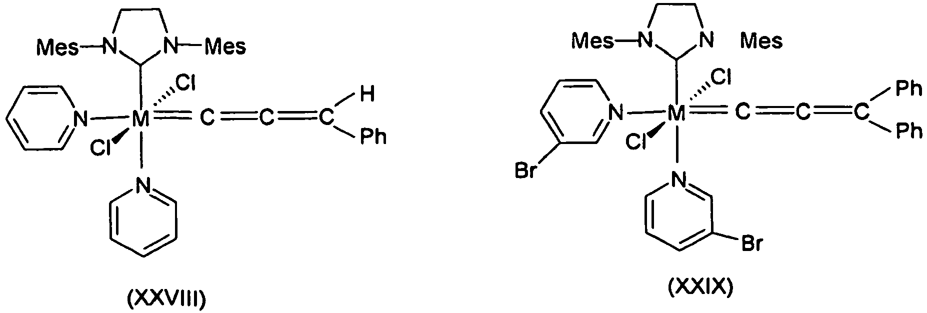 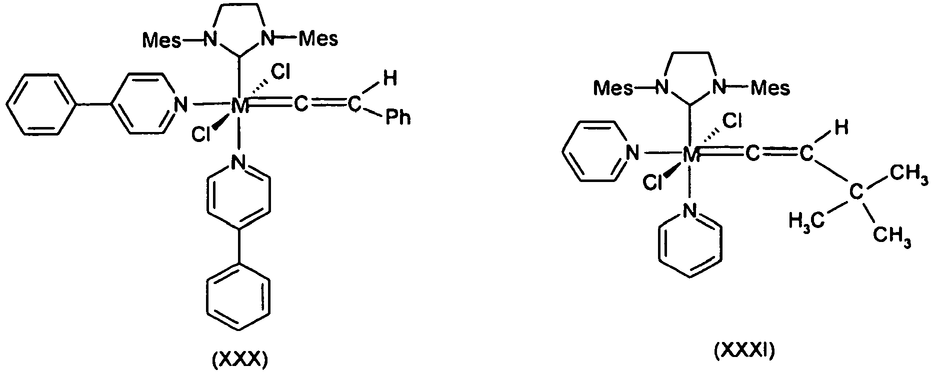 gebunden sind, durch Verbrückung eine cyclische Gruppe, bevorzugt ein aromatisches System, ausbilden, oder alternativ R⁸ gegebenenfalls mit einem anderen Liganden des Ruthenium- oder Osmium-Carben-Komplexkatalysators verbrückt ist,
- m: 0 oder 1 ist und
- A: Sauerstoff, Schwefel, C(R³³R³⁴), N-R³⁵, -C(R³⁶)=C(R³⁷)-, -C(R³⁶)(R³⁸)-C(R³⁷)(R³⁹)-bedeutet, worin R³³-R³⁹ gleich oder verschieden sind und jeweils die gleichen Bedeutungen besitzen können wie die Reste R²⁵-R³².

Die erfindungsgemäß in den Katalysator-Systemen einzusetzenden Katalysatoren weisen das Strukturelement der allgemeinen Formel (N1) auf, wobei das mit einem "*" gekennzeichnete Kohlenstoff-Atom über eine oder mehrere Doppelbindungen an das Katalysator-Grundgerüst gebunden ist. Sofern das mit einem "^{*}" gekennzeichnete Kohlenstoff-Atom über zwei oder mehr Doppelbindungen an das Katalysator-Grundgerüst gebunden ist, können diese Doppelbindungen kumuliert oder konjugiert sein.

Derartige Katalysatoren (N) sind bereits in der noch nicht veröffentlichten deutschen Patentanmeldung mit dem Aktenzeichen DE 102007039695 beschrieben, auf die hiermit für die Definition der Katalysatoren (N) und deren Herstellung Bezug genommen wird ("incorporated by reference"), soweit die entsprechenden Jurisdiktionen dies zulassen.

Zu den Katalysatoren (N) mit einem Strukturelement der allgemeinen Formel (N1) zählen beispielsweise solche der nachfolgenden **allgemeinen Formeln (N2a) und (N2b)**, 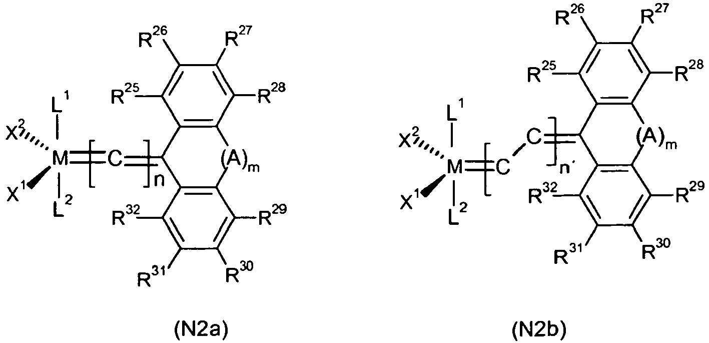 worin
- M: Ruthenium oder Osmium ist,
- X¹ und X²: gleich oder verschieden sind und zwei Liganden, bevorzugt anionische Liganden, darstellen,
- L¹ und L²: gleiche oder verschiedene Liganden, bevorzugt neutrale Elektronen-Donoren darstellen, wobei L² alternativ auch mit dem Rest R⁸ verbrückt sein kann,
- n: 0, 1, 2 oder 3, bevorzugt 0, 1 oder 2, ist,
- n': 1 oder 2, bevorzugt 1 ist, und
- R²⁵-R³², m und A: die gleichen Bedeutungen besitzen wie in der allgemeinen Formel (N1).

Bei den Katalysatoren der allgemeinen Formel (N2a) ist das Strukturelement der allgemeinen Formel (N1) über eine Doppelbindung (n = 0) oder über 2, 3 oder 4 kumulierte Doppelbindungen (bei n = 1, 2 oder 3) an das Zentralmetall des Komplexkatalysators gebunden. Bei den erfindungsgemäßen Katalysatoren der allgemeinen Formel (N2b) ist das Strukturelement der allgemeinen Formel (N1) über konjugierte Doppelbindungen an das Metall des Komplexkatalysators gebunden. In beiden Fällen befindet sich an dem mit einem "*" gekennzeichneten C-Atom eine Doppelbindung in Richtung Zentralmetall des Komplexkatalysators.

Die Katalysatoren der allgemeinen Formel (N2a) und (N2b) umfassen somit Katalysatoren, bei denen die folgenden **allgemeinen rukturelemente (N3)-(N9)** 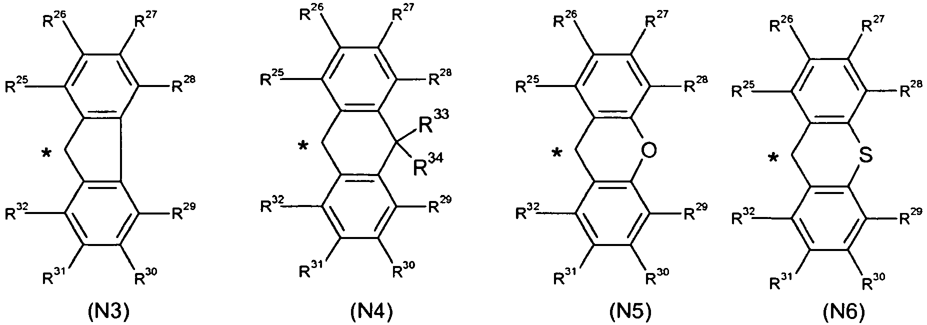 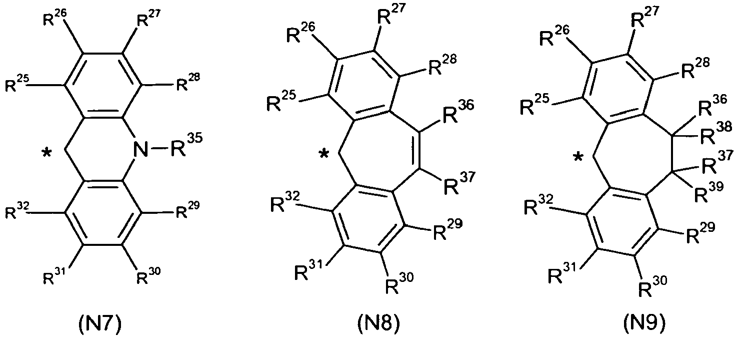 über das mit einem "^{*}" gekennzeichnete C-Atom über ein oder mehrere Doppelbindungen an das Katalysator-Grundgerüst der allgemeinen Formel **(N10a) bzw. (N10b)** 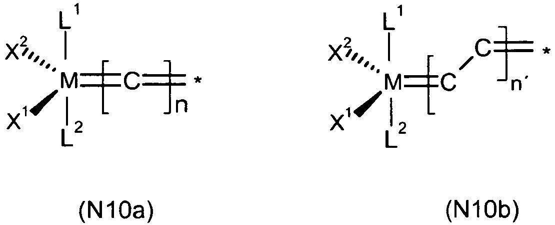 gebunden sind, wobei X¹ und X², L¹ und L², n, n' und R²⁵-R³⁹ die für die allgemeine Formeln (N2a) und (N2b) genannten Bedeutungen besitzen.

Typischerweise sind die erfindungsgemäßen Ruthenium- oder Osmium-Carben-Katalysatoren fünffach koordiniert.

Im **Strukturelement der allgemeinen Formel (N1)** sind
- R¹⁵-R³²: gleich oder verschieden und bedeuten Wasserstoff, Halogen, Hydroxyl, Aldehyd, Keto, Thiol, CF₃, Nitro, Nitroso, Cyano, Thiocyano, Isocyanato, Carbodiimid, Carbamat, Thiocarbamat, Dithiocarbamat, Amino, Amido, Imino, Silyl, Sulfonat (-SO₃⁻), -OSO₃⁻, -PO₃⁻ oder OPO₃⁻ oder stehen für Alkyl, bevorzugt C₁-C₂₀-Alkyl, insbesondere C₁-C₆-Alkyl, Cycloalkyl, bevorzugt C₃-C₂₀-Cycloalkyl, insbesondere C₃-C₈-Cycloalkyl, Alkenyl, bevorzugt C₂-C₂₀-Alkenyl, Alkinyl, bevorzugt C₂-C₂₀-Alkinyl, Aryl, bevorzugt C₆-C₂₄-Aryl, inbesondere Phenyl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkinyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulfonyl, Alkylsulfinyl, bevorzugt C₁-C₂₀-Alkylsulfinyl, Dialkylamino-, bevorzugt Di(C₁-C₂₀₋alkyl)amino, Alkylsilyl, bevorzugt C₁-C₂₀-Alkylsilyl, oder Alkoxysilyl, bevorzugt C₁-C₂₀-Alkoxysilyl-Reste darstellen, wobei diese Reste alle jeweils optional durch ein oder mehrere Alkyl-, Halogen-, Alkoxy-, Aryl- oder Heteroaryl-Reste substituiert sein können, oder alternativ auch jeweils zwei direkt benachbarte Reste aus der Gruppe von R²⁵-R³² unter Einschluss der Ringkohlenstoff-Atome, an die sie gebunden sind, durch Verbrückung eine cyclische Gruppe, bevorzugt ein aromatisches System, ausbilden können, oder alternativ R⁸ gegebenenfalls mit einem anderen Liganden des Ruthenium- oder Osmium-Carben-Komplexkatalysators verbrückt ist,
- m: ist 0 oder 1 und
- A: bedeutet Sauerstoff, Schwefel, C(R³³)(R³⁴), N-R³⁵, -C(R³⁶)=C(R³⁷)- oder -C(R³⁶)(R³⁸)-C(R³⁷)(R³⁹)-, worin R³³-R³⁹ gleich oder verschieden sind und jeweils die gleichen bevorzugten Bedeutungen besitzen können wie die Reste R¹-R⁸.

**C₁-C₆-Alkyl** steht im **Strukturelement der allgemeinen Formel (N1)** beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl und n-Hexyl.

**C₃-C₈-Cycloalkyl** steht im **Strukturelement der allgemeinen Formel (N1)** beispielsweise für Cyclopropyl, Cyclobutyl, Cylopentyl, Cyclohexyl, Cycloheptyl und Cyclooctyl.

**C₆-C₂₄-Aryl** umfasst im **Strukturelement der** allgemeinen **Formel (N1)** einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Die Reste X¹ und X² im Strukturelement der allgemeinen Formel **(N1)** besitzen die gleichen allgemeinen, bevorzugten und besonders bevorzugten Bedeutungen, die für Katalysatoren der allgemeinen Formel A genannt werden.

In den allgemeinen Formeln (N2a) und (N2b) bzw. analog in den allgemeinen Formeln (N10a) und (N10a) stehen die Reste L¹ und L² für gleiche oder verschiedene Liganden, bevorzugt neutrale Elektronen-Donoren und können die gleichen allgemeinen, bevorzugten und besonders bevorzugten Bedeutungen besitzen, die für die Katalysatoren der allgemeinen Formel A genannt werden.

Bevorzugt eingesetzt werden Katalysatoren der allgemeinen Formeln (N2a) oder (N2b) mit einer allgemeinen Struktureinheit (N1), wobei
- M: Ruthenium darstellt,
- X¹ und X²: gleichzeitig Halogen bedeuten,
- n: 0,1 oder 2 ist in der allgemeinen Formel (N2a) bzw.
- n': 1 ist in der allgemeinen Formel (N2b)
- L' und L²: gleich oder verschieden sind und die für die allgemeinen Formeln (N2a) und (N2b) genannten allgemeinen oder bevorzugten Bedeutungen besitzen,
- R²⁵-R³²: gleich oder verschieden sind und die für die allgemeinen Formeln (N2a) und (N2b) genannten allgemeinen oder bevorzugten Bedeutungen besitzent,
- m: entweder 0 oder 1 ist,
und, wenn m = 1 ist
- A: für Sauerstoff, Schwefel, C(C₁-C₁₀-Alkyl)₂, -C(C₁-C₁₀-Alkyl)₂-C(C₁-C₁₀-Alkyl)₂-, -C(C₁-C₁₀-Alkyl)=C(C₁-C₁₀-Alkyl)- oder -N(C₁-C₁₀-Alkyl) steht.

Ganz besonders bevorzugt eingesetzt werden Katalysatoren der Formeln (N2a) oder (N2b) mit einer allgemeinen Struktureinheit (N1), wobei
- M: Ruthenium darstellt,
- X¹ und X²: beide Chlor bedeuten,
- n: 0,1 oder 2 ist in der allgemeinen Formel (N2a) bzw.
- n': 1 ist in der allgemeinen Formel (N2b)
- L¹: einen Imidazolidin-Rest der Formeln (IIIa) bis (IIIf) darstellt,
- L²: einen sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Pyridin-Rest, einen Imidazolidin-Rest der Formeln (XIIa) bis (XIIf) oder einen Phosphin-Liganden, insbesondere PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Propyl)₃, P(CHCH₃(CH₂CH₃))₃, P(Cyclopentyl)₃, P(Cyclohexyl)₃, P(Neopentyl)₃ und P(Neophenyl)₃ darstellt,
- R²⁵-R³²: die für die allgemeinen Formeln (N2a) und (N2b) genannten allgemeinen oder bevorzugten Bedeutungen besitzen,
- m: entweder 0 oder 1 ist,
und, wenn m = 1 ist
- A: für Sauerstoff, Schwefel, C(C₁-C₁₀-Alkyl)₂, -C(C₁-C₁₀-Alkyl)₂-C(C₁-C₁₀-Alkyl)₂-, -C(C₁-C₁₀-Alkyl)=C(C₁-C₁₀-Alkyl)- oder -N(C₁-C₁₀-Alkyl) steht.

Für den Fall, dass der Rest R²⁵ mit einem anderen Liganden des Katalysators der Formel N verbrückt ist, ergeben sich beispielsweise für die Katalysatoren der allgemeinen Formeln (N2a) und (N2b) die folgenden Strukturen der allgemeinen Formeln (N13a) und (N13b) 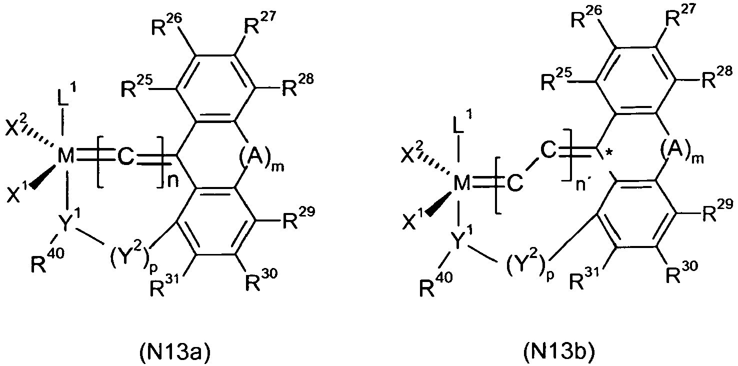 worin
- Y¹: Sauerstoff, Schwefel, einen Rest N-R⁴¹ oder einen Rest P-R⁴¹ bedeutet, wobei R⁴¹ die nachfolgend genannten Bedeutungen besitzt,
- R⁴⁰ und R⁴¹: gleich oder verschieden sind und einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellen, die alle jeweils optional durch ein oder mehrere Alkyl-, Halogen-, Alkoxy-, Aryl- oder Heteroaryl-Reste substituiert sein können,
- p: 0 oder 1 ist und
- Y²: wenn p = 1 ist, für -(CH₂)ᵣ - mit r = 1, 2 oder 3, -C(=O)-CH₂-, -C(=O)-, -N=CH-, -N(H)-C(=O)- oder aber alternativ die gesamte Struktureinheit "-Y¹ (R⁴⁰)- (Y²)ₚ-" für (-N(R⁴⁰)=CH-CH₂-), (-N(R⁴⁰,R⁴¹)=CH-CH₂-), steht und
wobei M, X¹, X², L¹, R²⁵-R³², A, m und n die gleichen Bedeutungen besitzen wie in den allgemeinen Formeln (IIa) und (IIb).

Bevorzugte Katalysator-Systeme enthalten neben einer Verbindung der allgemeinen Formel (Z), worin der Teil BFₘXₙ für BF₃, BF₂Cl, BFCl₂ BF₂Br, BFBr₂, BF₂(OC₂H₅), BF(OC₂H₅)₂, BF₂(CH₃) und BF(CH₃)₂ steht, D ausgewählt ist aus der Gruppe bestehend aus Wasser, Diethylether, Ethylamin, THF, n-Propanol, Ameisensäure, Essigsäure, Trifluoressigsäure, Trichloressigsäure, Schwefelsäure, Phosphorsäure, Trifluormethan-sulfonsäure und Toluolsulfonsäure, und v = 1, 2, 3, 4 oder 5, besonders bevorzugt 1, 2 oder 3 ist, einen Katalysator der Formel (N) mit den nachfolgend aufgeführten Strukturen.

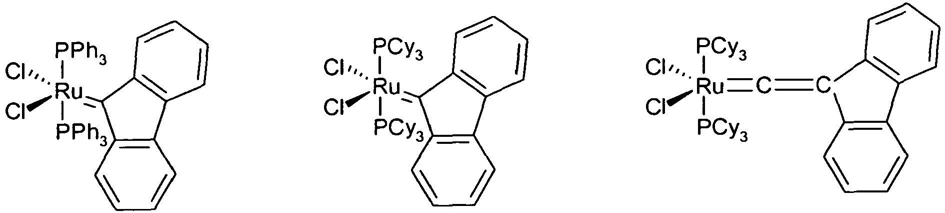

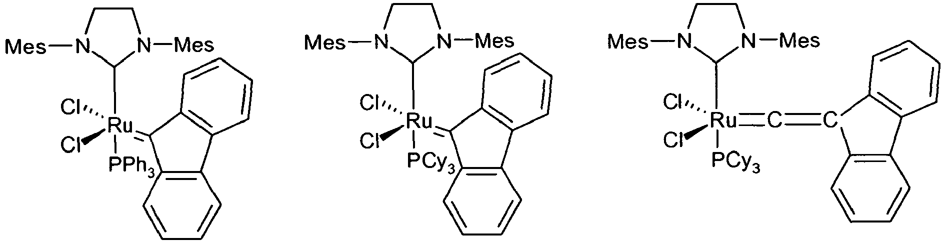

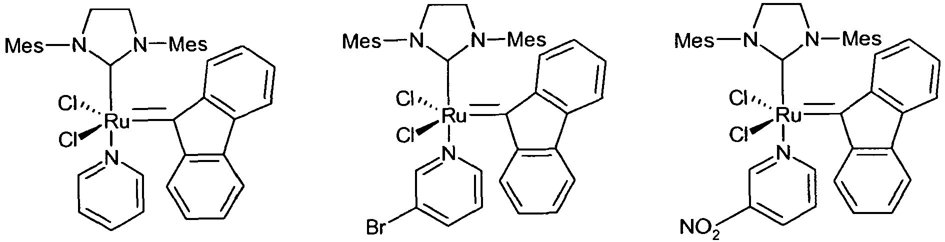

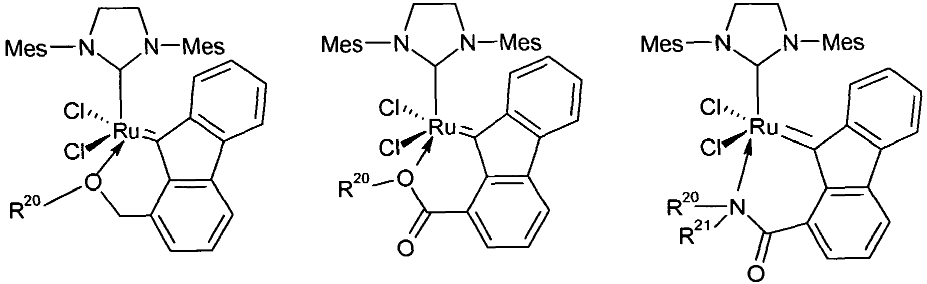

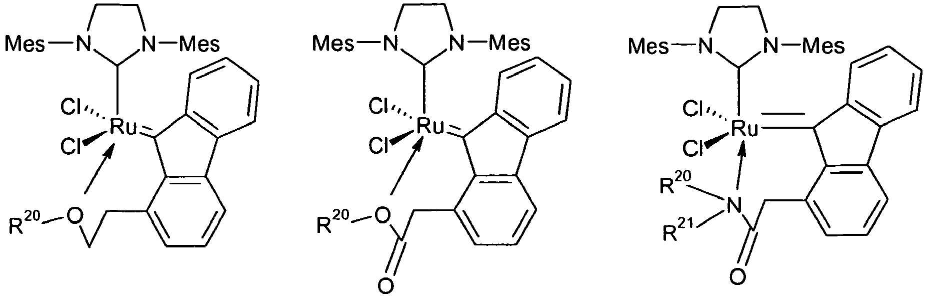

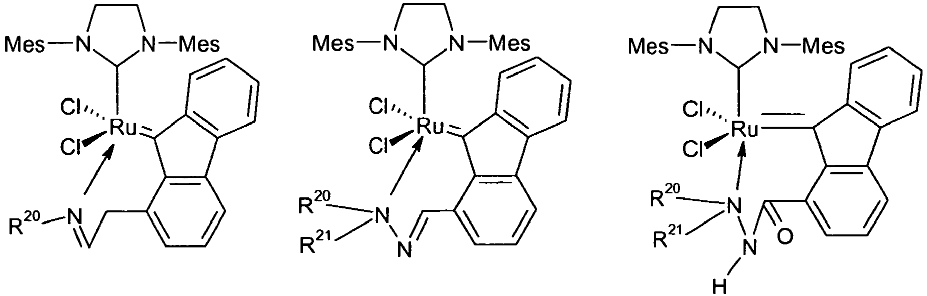

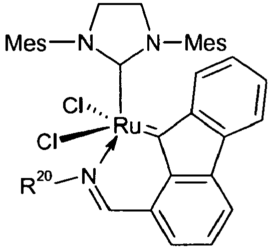

Die Herstellung von Katalysatoren (N) kann durch Umsetzung geeigneter Katalysator-Vorläuferkomplexverbindungen mit geeigneten Diazoverbindungen erfolgen, wenn man diese Synthese in einem speziellen Temperaturbereich durchführt und gleichzeitig das Molverhältnis der Edukte zueinander in einem gewählten Bereich liegt. Hierfür wird z.B. eine Katalysator-VorläuferVerbindung mit einer Verbindung der allgemeinen Formel (N1-Azo) 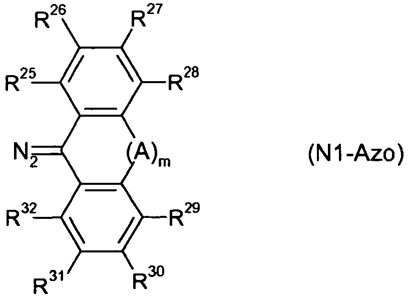 worin R²⁵-R³², m und A die für die allgemeine Formel (N1) genannten Bedeutungen besitzen, wobei diese Umsetzung
(i) bei einer Temperatur im Bereich von -20°C bis 100°C, bevorzugt im Bereich von +10°C bis +80°C, besonders bevorzugt im Bereich von +30 bis +50°C und
(ii) bei einem Molverhältnis der Katalysator-Vorläuferverbindung zur Verbindung der allgemeinen Formel (N1-Azo) von 1:0,5 bis 1:5, vorzugsweise 1:1,5 bis 1:2,5 besonders bevorzugt 1:2 durchgeführt wird.

Bei den Verbindungen der allgemeinen Formel (N1-Azo) handelt es sich um 9-Diazofluoren oder verschiedenste Derivate davon je nach Bedeutung der Reste R²⁵-R³² und A. Es können verschiedenste Derivate des 9-Diazofluorens eingesetzt werden. Auf diese Weise sind unterschiedlichste Fluorenylidenderivate zugänglich.

Die Katalysator-Vorläuferverbindungen stellen Ruthenium- oder Osmium-Komplexkatalysatoren dar, die noch keinen Liganden enthalten, der das allgemeine Strukturelement (N1) aufweist.

Bei dieser Umsetzung kommt es zum Abgang eines Liganden aus der Katalysator-Vorläuferverbindung und Aufnahme eines Carbenliganden, der das allgemeine Strukturelement (N1) enthält.

Für die Durchführung der Umsetzung eignen sich gesättigte, ungesättigte und aromatische Kohlenwasserstoffe, Ether und halogenierte Lösungsmittel. Bevorzugt sind chlorierte Lösungsmittel wie Dichlormethan, 1,2-Dichlorethan oder Chlorbenzol. Üblicherweise legt man die Katalysator-Vorläufer-Verbindung in Form des Ruthenium- oder Osmium-Precursors in einem vorzugsweise getrockneten Lösungsmittel vor. Die Konzentration des Ruthenium- oder Osmium-Precursors in dem Lösungsmittel liegt üblicherweise im Bereich von 15 bis 25 Gew.%, bevorzugt im Bereich von 15 bis 20 Gew.%. Anschließend kann die Lösung erwärmt werden. Besonders bewährt hat es sich, auf eine Temperatur im Bereich von 30 bis 50°C zu erwärmen. Danach wird die in üblicherweise getrocknetem, vorzugsweise wasserfreiem Lösungsmittel gelöste Verbindung der allgemeinen Formel (N1-Azo) zugegeben. Die Konzentration der Verbindung der allgemeinen Formel (N1-Azo) im Lösungsmittel liegt bevorzugt im Bereich von 5 bis 15 Gew.%, bevorzugt bei ca. 10%. Zur Vervollständigung der Reaktion lässt man noch 0,5 h bis 1,5 h nachreagieren, hierbei liegt die Temperatur besonders bevorzugt im gleichen Bereich wie zuvor genannt, d.h. bei 30 bis 50°C. Nachfolgend entfernt man das Lösungsmittel und reinigt den Rückstand durch Extraktion, beispielsweise mit einer Mischung von Hexan mit einem aromatischen Lösungsmittel.

Im erfindungsgemäß zu verwendenden Katalysator-System werden der Metathese-Katalysator und die oben genannten spezielle Verbindung der allgemeinen Formel (Z) in einem Molverhältnis [Metathese-Katalysator : Verbindung der allgemeinen Formel (Z)] = 1: (0,1-1000), bevorzugt 1: (0,5-100) und besonders bevorzugt 1: (1-50) eingesetzt.

Für den erfindungsgemäßen Einsatz des Katalysatorsystems in der Metathese-Reaktion von Nitrilkautschuken kann die oben genannten spezielle Verbindung der allgemeinen Formel (Z) in einem Lösungs- oder Dispergiermittel oder auch ohne Lösungs- bzw. Dispergiermittel zum Komplexkatalysator oder dessen Lösung gegeben werden, um dadurch das erfindungsgemäße Katalysator-System zu erhalten.

Als Lösungs- bzw. Dispergiermittel, in dem die oben genannten spezielle Verbindung der allgemeinen Formel (Z) dem Komplexkatalysator bzw. dessen Lösung zugesetzt wird, können alle bekannten Lösungs- bzw. Dispergiermittel verwendet werden. Für die Wirksamkeit des Zusatzes der oben genannten speziellen Verbindung der allgemeinen Formel (Z) ist es nicht erforderlich, dass die Verbindung der allgemeinen Formel (Z) in dem Dispergiermittel eine Löslichkeit aufweist. Bevorzugte Lösungs- bzw. Dispergiermittel umfassen, sind aber nicht beschränkt auf, Aceton, Benzol, Chlorbenzol, Chloroform, Cyclohexan, Dichlormethan, Diethylether, Dioxan, Dimethylformamid, Dimethylacetamid, Dimethylsulfon, Dimethylsufoxid, Methylethylketon, Tetrahydrofuran, Tetrahydropyran und Toluol. Vorzugsweise ist das Lösungs- bzw. Dispergiermittel gegenüber dem Komplexkatalysator inert.

Die zuvor genannten Katalysator-Systeme werden erfindungsgemäß für die Metathese von Nitrilkautschuk verwendet. Bei der erfindungsgemäßen Verwendung handelt es sich dann um ein Verfahren zum Molekulargewichtsabbau des Nitrilkautschuks, indem man den Nitrilkautschuk mit dem erfindungsgemäßen Katalysator-System in Kontakt bringt. Diese Reaktion stellt eine Kreuzmetathese dar.

Beim erfindungsgemäßen Einsatz der Katalysator-Systeme für die Metathese von Nitrilkautschuk liegt die Menge, in der die oben genannten spezielle Verbindung der allgemeinen Formel (Z) bezogen auf den abzubauenden Nitrilkautschuk verwendet werden, in einem Bereich von 0,0001 phr bis 5 phr, bevorzugt 0,001 phr bis 2 phr (phr = Gew.Teile auf 100 Gew.-Teile Kautschuk).

Auch für den Einsatz zur NBR Metathese kann die oben genannten spezielle Verbindung der allgemeinen Formel (Z) in einem Lösungs- bzw. Dispergiermittel oder auch ohne Lösungs- bzw. Dispergiermittel zu einer Lösung des Komplex-Katalysators gegeben werden. Alternativ dazu kann die oben genannten spezielle Verbindung der allgemeinen Formel (Z) auch direkt einer Lösung des abzubauenden Nitrilkautschuks zugegeben werden, der darüber hinaus der Komplexkatalysator zugegeben wird, so dass das gesamte erfindungsgemäße Katalysator-System im Reaktionsgemisch vorliegt.

Die Menge des Komplexkatalysators bezogen auf den eingesetzten Nitrilkautschuk hängt von der Natur sowie katalytischen Aktivität des speziellen Komplexkatalysators ab. Die Menge an eingesetztem Komplexkatalysator beträgt üblicherweise 1 bis 1.000 ppm Edelmetall, bevorzugt 2 bis 500 ppm, insbesondere 5 bis 250 ppm, bezogen auf den eingesetzten Nitrilkautschuk.

Die NBR-Metathese kann in Abwesenheit oder aber in Gegenwart eines Co-Olefins durchgerührt werden. Bei diesem Co-Olefin handelt es sich bevorzugt um ein geradkettiges oder verzweigtes C₂-C₁₆-Olefin. Geeignet sind beispielsweise Ethylen, Propylen, Isobuten, Styrol, 1-Hexen oder 1-Octen. Bevorzugt wird 1-Hexen oder 1-Octen verwendet. Sofern das Co-Olefin flüssig ist (wie beispielsweise 1-Hexen), liegt die Menge des Co-Olefins bevorzugt in einem Bereich von 0,2-20 Gew.% bezogen auf den eingesetzten Nitrilkautschuk. Sofern das Co-Olefin ein Gas ist, wie beispielsweise Ethylen, wird die Menge des Co-Olefins so gewählt, dass sich im Reaktionsgefäß bei Raumtemperatur ein Druck im Bereich von 1 x 10⁵ Pa - 1 x 10⁷ Pa einstellt, bevorzugt ein Druck im Bereich von 5,2 x 10⁵ Pa bis 4 x 10⁶ Pa.

Die Metathese-Reaktion kann in einem geeigneten Lösungsmittel durchgeführt werden, welches den eingesetzten Katalysator nicht deaktiviert und die Reaktion auch nicht in irgendeiner anderen Weise negativ beeinflusst. Bevorzugte Lösungsmittel umfassen, sind aber nicht begrenzt auf, Dichlonnethan, Benzol, Toluol, Methylethylketon, Aceton, Tetrahydrofuran, Tetrahydropyran, Dioxan, Cyclohexan und Chlorbenzol. Das besonders bevorzugte Lösungsmittel ist Chlorbenzol. In manchen Fällen, wenn das Co-Olefin selbst als Lösungsmittel fungieren kann, so z.B. bei 1-Hexen, kann auch auf den Zusatz eines weiteren zusätzlichen Lösungsmittels verzichtet werden.

Die Konzentration des eingesetzten Nitrilkautschuks in der Reaktionsmischung der Metathese ist nicht kritisch, aber es ist natürlich zu beachten, dass die Reaktion nicht durch eine viel zu hohe Viskosität der Reaktionsmischung und die damit verbundenen Mischungsprobleme negativ beeinflusst werden sollte. Bevorzugt liegt die Konzentration des NBR in der Reaktionsmischung im Bereich von 1 bis 25 Gew.%, besonders bevorzugt im Bereich von 5 bis 20 Gew.%, bezogen auf die gesamte Reaktionsmischung.

Der Metathese Abbau wird üblicherweise bei einer Temperatur im Bereich von 10°C bis 150°C durchgeführt, bevorzugt bei einer Temperatur im Bereich von 20 bis 100 °C.

Die Reaktionszeit hängt von einer Reihe von Faktoren ab, beispielsweise vom Typ des NBR, der Art des Katalysators, der verwendeten Katalysator-Konzentration und der Reaktionstemperatur. Typischerweise ist die Reaktion innerhalb von fünf Stunden unter normalen Bedingungen beendet.

Der Fortschritt der Metathese kann durch Standard-Analytik überwacht werden, z.B. durch GPC-Messungen oder durch Bestimmung der Viskosität.

Als Nitrilkautschuke ("NBR") können in die Metathese-Reaktion Co- oder Terpolymere eingesetzt werden, welche Wiederholungseinheiten mindestens eines konjugierten Diens, mindestens eines α,β-β-ungesättigten Nitrils und gegebenenfalls einer oder mehrerer weiterer copolymerisierbarer Monomere enthalten.

Das konjugierte Dien kann von jeder Natur sein. Bevorzugt werden (C₄-C₆) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Einen besonders bevorzugten Nitrilkautschuk stellt somit ein Copolymer aus Acrylnitril und 1,3-Butadien dar.

Neben dem konjugierten Dien und dem α,β-ungesättigten Nitril können noch ein oder mehrere weitere dem Fachmann bekannte, copolymerisierbare Monomere eingesetzt werden, z.B. α,β-ungesättigte Mono- oder Dicarbonsäuren, deren Ester oder Amide. Als α,β-ungesättigte Mono- oder Dicarbonsäuren sind dabei Fumarsäure, Maleinsäure, Acrylsäure und Methacrylsäure bevorzugt. Als Ester der α,β-ungesättigten Carbonsäuren werden vorzugsweise deren Alkylester und Alkoxyalkylester eingesetzt. Besonders bevorzugte Alkylester der α,β-ungesättigten Carbonsäuren sind Methylacrylat, Ethylacrylat, Butylacrylat, Butylmethacrylat, 2-Ethylhexylacrylat, 2-Ethylhexylmethacrylat und Octylacrylat. Besonders bevorzugte Alkoxyalkylester der α,β-ungesättigten Carbonsäuren sind Methoxyethyl(meth)acrylat, Ethoxyethyl(meth)acrylat und Methoxyethyl-(meth)acrylat. Einsetzbar sind auch Mischungen von Alkylestern, wie z.B. den vorgenannten, mit Alkoxyalkylestern, z.B. in Form der vorgenannten.

Die Anteile an konjugiertem Dien und α,β-ungesättigtem Nitril in den einzusetzenden NBR-Polymeren können in weiten Bereichen schwanken. Der Anteil des oder der Summe der konjugierten Diene liegt üblicherweise im Bereich von 40 bis 90 Gew.-%, bevorzugt im Bereich von 60 bis 85 Gew. %, bezogen auf das Gesamtpolymer. Der Anteil des oder der Summe der α,β-ungesättigten Nitrile liegt üblicherweise bei 10 bis 60 Gew.-%, bevorzugt bei 15 bis 40 Gew.-%, bezogen auf das Gesamtpolymer. Die Anteile der Monomere summieren sich jeweils zu 100 Gew.-% auf. Die zusätzlichen Monomere können in Mengen von 0 bis 40 Gew.%, bevorzugt 0,1 bis 40 Gew.-%, besonders bevorzugt 1 bis 30 Gew.-%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.-% aufsummieren.

Die Herstellung der Nitrilkautschuke durch Polymerisation der vorgenannten Monomere ist dem Fachmann hinlänglich bekannt und in der Literatur umfangreich beschrieben.

Nitrilkautschuke, die im erfindungsgemäßen Sinn verwendet werden können, sind ferner käuflich erhältlich, z.B. als Produkte aus der Produktreihe der Marken Perbunan^{®} und Krynac^{®} von der Lanxess Deutschland GmbH.

Die zur Metathese eingesetzten Nitrilkautschuke besitzen eine Mooney-Viskosität (ML 1+4 bei 100°C) im Bereich von 30 bis 70, bevorzugt von 30 bis 50. Dies entspricht einem Gewichtsmittel des Molekulargewicht M_{w} im Bereich von 150.000 - 500.000, bevorzugt im Bereich von 180.000-400.000. Die eingesetzten Nitrilkautschuke besitzen ferner eine Polydispersität PDI = M_{w}/Mₙ, wobei M_{w} das Gewichtsmittel und Mₙ das Zahlenmittel des Molekulargewichts darstellt, im Bereich von 2,0 - 6,0 und bevorzugt im Bereich von 2,0 - 4,0.

Die Bestimmung der Mooney-Viskosität erfolgt dabei gemäß ASTM Norm D 1646.

Die durch das erfindungsgemäße Metathese-Verfahren erhaltenen Nitrilkautschuke besitzen eine Mooney-Viskosität (ML 1+4 bei 100°C) im Bereich von 5 - 30, bevorzugt im Bereich von 5 - 20. Dies entspricht einem Gewichtsmittel des Molekulargewicht M_{w} im Bereich von 10.000-100.000, bevorzugt im Bereich von 10.000-80.000. Die erhaltenen Nitrilkautschuke besitzen ferner eine Polydispersität PDI = M_{w}/Mₙ, wobei Mₙ das Zahlenmittel des Molekulargewichts und M_{w} das Gewichtsmittel des Molekulargewichts darstellt, im Bereich 1,4 - 4,0 bevorzugt im Bereich von 1,5 - 3,0.

An den Metatheseabbau in Gegenwart des erfindungsgemäßen Katalysator-Systems kann sich eine Hydrierung der erhaltenen abgebauten Nitrilkautschuke anschließen. Diese kann in einer dem Fachmann bekannten Art und Weise erfolgen.

Es ist möglich, die Hydrierung unter Einsatz homogener oder heterogener Hydrierkatalysatoren durchzuführen. Es ist ferner möglich, die Hydrierung in-situ durchzuführen, d.h. in dem gleichen Reaktionsgemisch, in dem zuvor auch der Metathese-Abbau erfolgte und ohne Notwendigkeit, den abgebauten Nitrilkautschuk zu isolieren. Der Hydrierkatalysator wird einfach dem Reaktionsgefäß zugesetzt.

Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe z.B.US-A-3,700,637**,** DE-A-25 39 132**,** EP-A- 0 134 023**,** DE-OS- 35 41 689**,** DE-OS- 35 40 918**,** EP-A-0 298 386**,** DE-OS- 35 29 252**,** DE-OS- 34 33 392**,** US-A-4,464,515 und US-A-4,503,196).

Geeignete Katalysatoren und Lösungsmittel für eine Hydrierung in homogener Phase werden im Folgenden beschrieben und sind auch aus DE-A-25 39 132 und der EP-A-0 471 250 bekannt.

Die selektive Hydrierung kann beispielsweise in Gegenwart eines Rhodium- oder Ruthenium-haltigen Katalysators erreicht werden. Einsetzbar ist beispielsweise ein Katalysator der allgemeinen Formel

(R¹ₘBP)ₗ M Xₙ.

worin M Ruthenium oder Rhodium ist, R¹ gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkyl-Gruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel R¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkylmonocycloalkyl, Dicycloalkyl-monoaryl oder Dicyclalkyl-monoaryl-Resten.

Beispiele von Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,1-5 Gew.%, bevorzugt im Bereich von 0,3-4 Gew.% eingesetzt, bezogen auf das Gewicht des zu hydrierenden Nitrilkautschuks. Bevorzugt liegt ferner das Gewichtsverhältnis des Rhodiumhaltigen Katalysators zum Co-Katalysator im Bereich von 1:3 bis 1:55, besonders bevorzugt im Bereich von 1:5 bis 1:45. Bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, verstanden. Besonders bevorzugt sind auch Restgehalte von Doppelbindungen im HNBR von 0 bis 8%.

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert sind.

Nach Abschluss der Hydrierung erhält man einen hydrierten Nitrilkautschuk mit einer Mooney-Viskosität (ML 1+4 @ 100°C), gemessen gemäß ASTM Norm D 1646, im Bereich von 1 - 50. Dies entspricht ungefähr einem Gewichtsmittel des Molekulargewicht M_{w} im Bereich von 2.000 - 400.000 g/mol. Bevorzugt liegt die Mooney-Viskosität (ML 1+4 @100°C) im Bereich von 5 bis 30. Dies entspricht ungefähr einem Gewichtsmittel des Molekulargewicht M_{w} im Bereich von ca. 20.000 - 200.000. Die erhaltenen hydrierten Nitrilkautschuke besitzen ferner eine Polydispersität PDI= M_{w}/M_{n,} wobei M_{w} das Gewichtsmittel und Mₙ das Zahlenmittel des Molekulargewichts darstellt, im Bereich von 1- 5 und bevorzugt im Bereich von 1,5 - 3.

Das Katalysator-System lässt sich jedoch nicht nur erfolgreich für den Metathese-Abbau von Nitrilkautschuken einsetzen, sondern auch universell für andere Metathese-Reaktionen. In einem Verfahren zur Ringschlussmetathese wird das erfindungsgemäße Katalysator-System mit dem entsprechenden acyclischen Edukt, wie z.B. Diethyldiallylmalonat in Kontakt gebracht.

Durch den erfindungsgemäßen Einsatz der Katalysator-Systeme aus Metathese-Katalysator und der fluorhaltigen Borverbindung der allgemeinen Formel (Z) lässt sich bei vergleichbaren Reaktionszeiten die Menge des eigentlichen Metathese-Katalysators und damit die Edelmetall-Menge deutlich gegenüber analogen Metathese-Reaktionen reduzieren, bei denen nur der Katalysator; d.h. ohne Zusatz einer fluorhaltigen Borverbindung der allgemeinen Formel (Z) verwendet wird. Bei Einsatz vergleichbarer Edelmetallgehalte wird durch den Zusatz der fluorhaltigen Borverbindung der allgemeinen Formel (Z) die Reaktionszeit substanziell verkürzt. Beim Einsatz für den Abbau von Nitrilkautschuken können abgebaute Nitrilkautschuke mit deutlich niedrigeren Molekulargewichten M_{w} und Mₙ erreicht werden.

### BEISPIELE

Sofern in den nachfolgenden Beispielen bei Raumtemperatur gearbeitet wird, handelt es sich um 22 +/- 2°C. In den nachfolgenden Beispielen wurden die in Tabelle 1 aufgeführten **Komplexkatalysatoren** verwendet.

**Tabelle 1:**

| **Bezeichnung des Katalysators,** | **Strukturformel** | **Molekulargewicht [g/mol]** | **Quelle** |
|---|---|---|---|
| Grubbs-II-Katalysator | 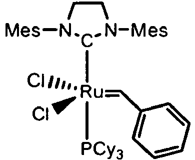 | 848,33 | Firma Materia / Pasadena; USA |
| Hoveyda-Katalysator | 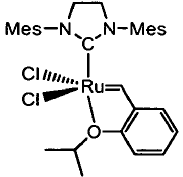 | 626,14 | Aldrich |
| Grela-Katalysator | 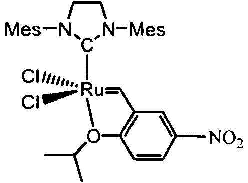 | 671,13 | Herstellung gemäß J. Org. Chem. 2004, 69, 6894-6896 |

Bei den nachfolgenden erfindungsgemäßen Beispielen wurden die in Tabelle 2 aufgeführten Verbindungen der allgemeinen Formel (Z) eingesetzt.

**Tabelle 2:**

| **Bezeichnung des Additivs** | **Summen-Formel** | **Quelle** |
|---|---|---|
| Diethyletheraddukt an Bortrifluorid | BF₃*C₄H₁₀O | Acros Organics |
| Ethylaminaddukt an Bortrifluorid | BF₃*EtNH₂ | Aldrich |
| Tetrahydrofuranaddukt an Bortrifluorid | BF₃*C₄H₈O | Aldrich |
| n-Propanoladdukt an Bortrifluorid | BF₃*C₃H₇OH | Aldrich |
| Essigsäureaddukt an Bortrifluorid | BF₃*CH₃COOH | Aldrich |

In der nachfolgenden Tabelle 3 sind die durchgeführten Beispiele zum Metathese-Abbau von Nitrilkautschuk bezüglich der eingesetzten Komplexkatalysatoren, der Verbindung der allgemeinen Formel (Z) sowie des verwendeten Molverhältnisses Komplexkatalysator : Zusatz zusammengefasst.

**Tabelle 3:**

| **Versuchsserie** | | **Katalysator** | **Zusatz** | **Molverhältnis Katalysator-Zusatz** |
|---|---|---|---|---|
| **1.0** | nicht erfindungsgemäß | Grubbs-II | - | - |
| **1.1** | erfindungsgemäß | Grubbs-II | BF₃*Et₂O | 1:22 |
| **1.2** | erfindungsgemäß | Grubbs-11 | BF₃*Et₂O | 1:5 |
| **1.3** | erfindungsgemäß | Grubbs-II | BF₃*Et₂O | 1:2 |
| **1.4** | erfindungsgemäß | Grubbs-II | BF₃*Et₂O | 1:1 |
| **1.5** | erfindungsgemäß | Grubbs-II | BF₃*EtNH₂ | 1:22 |
| **1.6** | erfindungsgemäß | Grubbs-II | BF₃*THF | 1:22 |
| **1.7** | erfindungsgemäß | Grubbs-II | BF₃*n-Propanol | 1:22 |
| **1.8** | erfindungsgemäß | Grubbs-II | BF₃*CH₃COOH | 1:22 |
| **2.0** | nicht erfindungsgemäß | Grela | - | - |
| **2.1** | erfindungsgemäß | Grela | BF₃*Et₂O | 1:22 |

### Eingesetzter Nitrilkautschuk:

Die in den nachfolgenden Beispielen beschriebenen Abbaureaktionen wurden unter Einsatz des Nitrilkautschuks Perbunan^{®} 3436 F der Lanxess Deutschland GmbH durchgeführt.

Dieser Nitrilkautschuk wies folgende charakteristischen Kenngrößen auf:

| | |
|---|---|
| Acrylnitrilgehalt: | 34,3 Gew.% |
| Mooney-Viskosität (ML 1+4 @100°C): | 33 Mooney-Einheiten |
| Restfeuchte: | 1,0 Gew.% |
| M_{w}: | 211 kg/mol |
| Mₙ: | 82 kg/mol |
| PDI (M_{w} / Mₙ): | 2,6 |

### Durchführung der Metathese des Nitrilkautschuks:

Für den Metatheseabbau wurden jeweils 293,3 g Chlorbenzol (nachfolgend "MCB" genannt/ Firma Aldrich) verwendet, das vor dem Einsatz destilliert und bei Raumtemperatur durch Durchleiten von Argon inertisiert wurde. Hierzu wurden 40 g NBR während eines Zeitraums von 12 Stunden unter Rühren bei Raumtemperatur gelost. Zu der NBR-haltigen Lösung wurden jeweils 0,8 g (2 phr) 1-Hexen und dann die in den Tabellen angegebenen Borverbindungen (gelöst in 10 g inertisiertem MCB) gegeben und zur Homogenisierung 30 Minuten gerührt.

Die Ru-Katalystoren (Grubbs-II-, Hoveyda- und Grela-Katalysator) wurden jeweils in 10 g inertisiertem MCB unter Argon gelöst, wobei die Zugabe der Katalysatorlösungen zu den NBR-Lösungen in MCB sofort nach der Herstellung der Katalysatorlösungen erfolgte.

Die Durchführung der Metathesereaktionen erfolgte mit den in den nachfolgenden Tabellen genannten Mengen an Einsatzstoffen bei Raumtemperatur.

Nach den in den Tabellen angegebenen Reaktionszeiten wurden von den Reaktionslösungen jeweils ca. 3 ml entnommen und zur Abstoppung unmittelbar mit ca. 0,2 ml Ethylvinylether versetzt. Von der abgestoppten Lösung wurden 0,2 ml entnommen und mit 3 ml DMAc (N,N-Dimethylacetamid (mit LiBr stabilisiert, 0,075M; Firma Aldrich) verdünnt.

Vor Durchführung der GPC-Analyse wurden die Lösungen jeweils mittels eines 0,2 µm-Spritzenfilters aus Teflon (Chromafil PTFE 0,2 mm; Firma Machery-Nagel) filtriert. Im Anschluss daran erfolgte die GPC-Analyse mit einem Gerät der Firma Waters (Mod. 510). Für die Analytik wurde eine Kombination einer Vorsäule (PL Guard der Firma Polymer Laboratories) mit zwei Resipore-Säulen (300x7,5 mm, Porengrösse 3 µm) der Firma Polymer Laboratories verwendet. Die Kalibrierung der Säulen erfolgte mit linearem Polystyrol der Molmassen 960 bis 6 x 10⁵ g/mol der Firma Polymer Standards Services. Als Detektor wurde ein RI-Detektor der Firma Waters (Waters 410 Differential Refractometer) verwendet. Die Analytik wurde mit einer Flussrate von 1,0 mL/min bei 80°C unter Verwendung von N,N'-Dimethylacetamid als Eluent durchgeführt. Die Auswertung der GPC-Kurven erfolgte mit Software der Firma Polymer Laboratories (Cirrus Multi Version 3.0)

### Versuchsserie 1: Einsatz des Grubbs-II-Katalysators in Kombination mit verschiedenen fluorhaltigen Borverbindungen beim Metatheseabbau von NBR

### Serie 1.0: Einsatz des Grubbs-II-Katalysators ohne Zusatz (nicht erfindungsgemäß)

| **NBR** | **Grubbs-II-Katalysator** | | **1-Hexen** | | **Zusatz** | | **Zeit [min.]** | **M_{w} [kg/mol]** | **Mₙ [kg/mol]** | **PDI** |
|---|---|---|---|---|---|---|---|---|---|---|
| Menge | Menge | bez. auf NBR | Menge | bez. auf NBR | Art | Menge | 0 | 211 | 82 | 2,6 |
| | | | | | | | 30 | 139 | 66 | 2,1 |
| [g] | [mg] | [phr] | [g] | [phr] | | [mg] | 60 | 101 | 54 | 1,9 |
| | | | | | | | 185 | 77 | 45 | 1,7 |
| 40 | 20 | 0,05 | 0,8 | 2,0 | - | - | 425 | 62 | 37 | 1,7 |

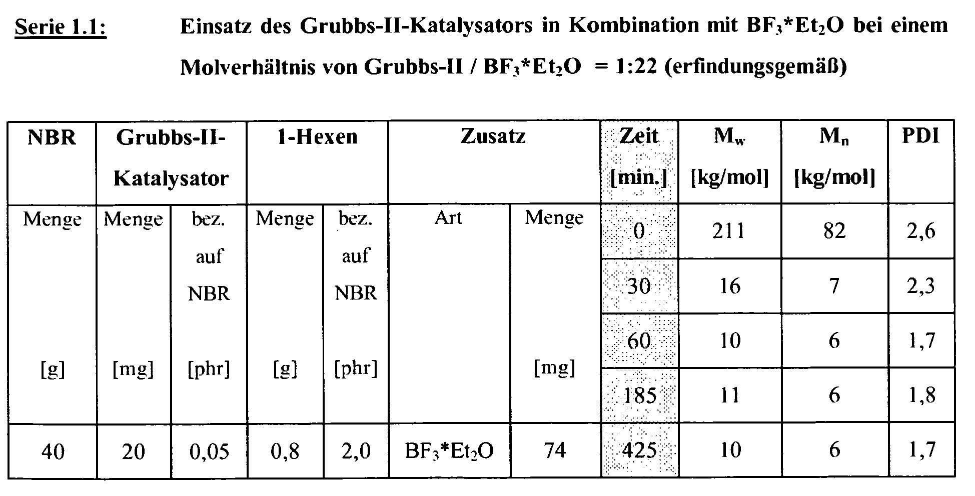

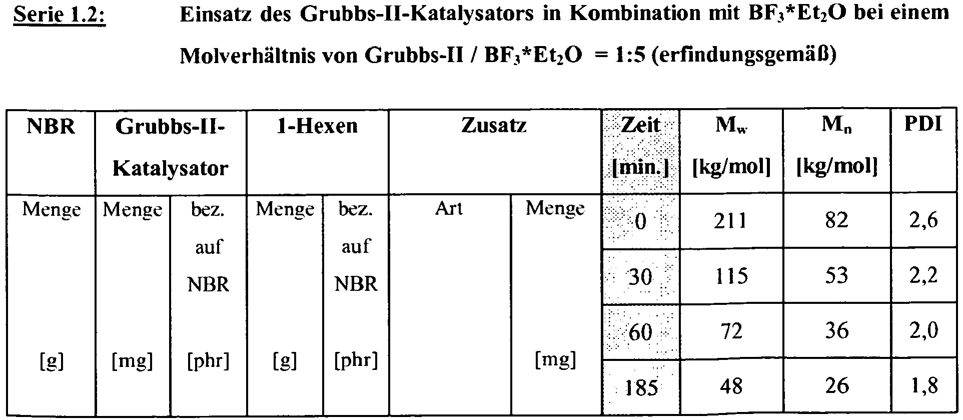

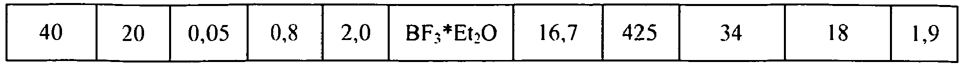

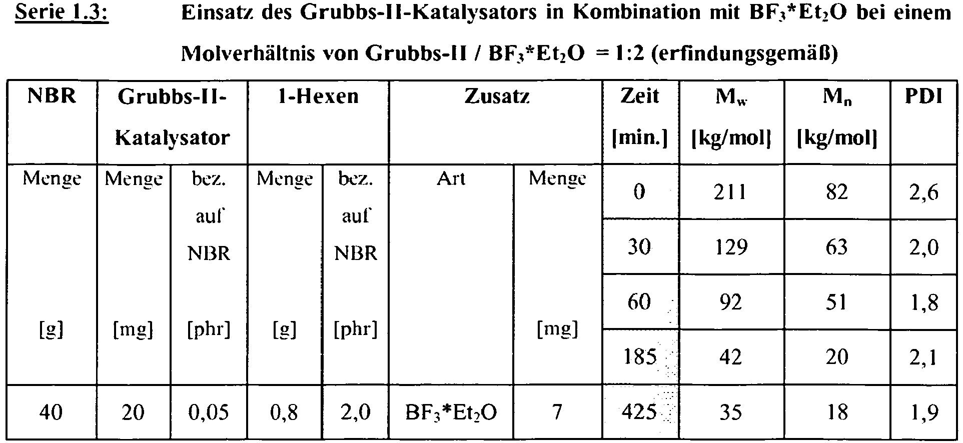

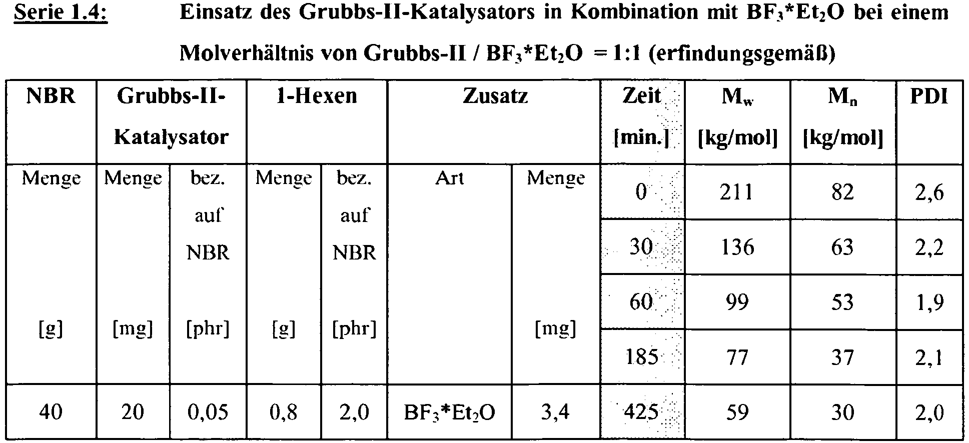

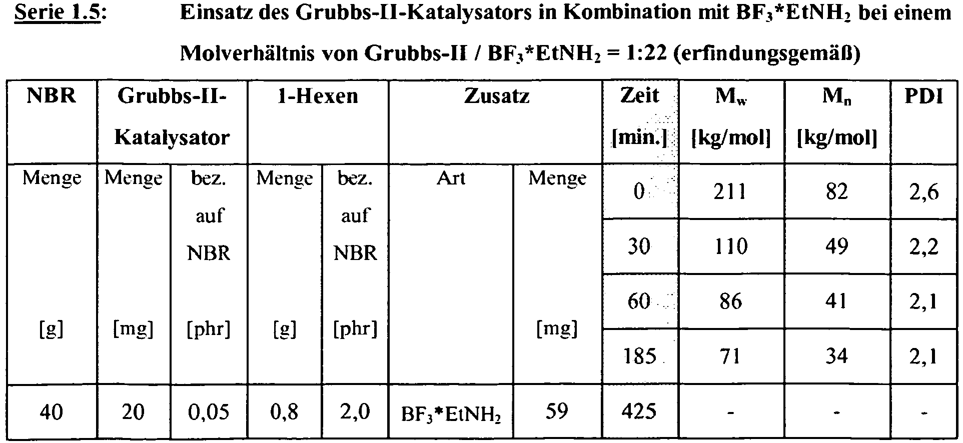

### Serie 1.6: Einsatz des Grubbs-II-Katalysators in Kombination mit BF₃*THF bei einem Molverhältnis von Grubbs-II / BF₃*THF = 1:22 (erfindungsgemäß)

| **NBR** | **Grubbs-II-Katalysator** | | **1-Hexen** | | **Zusatz** | | **Zeit [min.]** | **M_{w} [kg/mol]** | **Mₙ [kg/mol]** | **PDI** |
|---|---|---|---|---|---|---|---|---|---|---|
| Menge | Menge | bez. auf NBR | Menge | bez. auf NBR | Art | Menge | 0 | 211 | 82 | 2,6 |
| | | | | | | | 30 | 112 | 54 | 2,1 |
| [g] | [mg] | [phr] | [g] | [phr] | | [mg] | 60 | - | - | - |
| | | | | | | | 185 | - | - | - |
| 40 | 20 | 0,05 | 0,8 | 2,0 | BF₃*THF | 73 | 425 | - | - | - |

### Serie 1.7: Einsatz des Grubbs-II-Katalysators in Kombination mit BF₃*n-Propanol bei einem Molverhältnis von Grubbs-II/BF₃*n-Propanol=1:22 (erfindungsgemäß)

| **NBR** | **Grubbs-II-Katalysator** | | **1-Hexen** | | **Zusatz** | | **Zeit [min.]** | **M_{w} [kg/mol]** | **Mₙ [kg/mol]** | **PDI** |
|---|---|---|---|---|---|---|---|---|---|---|
| Menge | Menge | bez. auf NBR | Menge | bez. auf NBR | Art | Menge | 0 | 211 | 82 | 2,6 |
| | | | | | | | 30 | 87 | 44 | 2,0 |
| [g] | [mg] | [phr] | [g] | [phr] | | [mg] | 60 | 64 | 31 | 2,1 |
| | | | | | | | 185 | 32 | 17 | 1,9 |
| 40 | 20 | 0,05 | 0,8 | 2,0 | BF₃* n-Propanol | 66 | 425 | 24 | 14 | 1,7 |

### Serie 1.8: Einsatz des Grubbs-II-Katalysators in Kombination mit BF₃*CH₃COOH bei einem Molverhältnis von Grubbs-II/BF₃*CH₃COOH = 1:22 (erfindungsgemäß)

| **NBR** | **Grubbs-II-Katalysator** | | **1-Hexen** | | **Zusatz** | | **Zeit [min.]** | **M_{w} [kg/mol]** | **Mₙ [kg/mol]** | **PDI** |
|---|---|---|---|---|---|---|---|---|---|---|
| Menge | Menge | bez. auf | Menge | bez. auf | Art | Menge | 0 | 211 | 82 | 2,6 |
| | | | | | | | 30 | 99 | 50 | 2,0 |
| | | NBR | | NBR | | | 60 | - | - | - |
| [g] | [mg] | [phr] | [g] | [phr] | | [mg] | 185 | - | - | - |
| 40 | 20 | 0,05 | 0,8 | 2,0 | BF₃*CH₃COOH | 98 | 425 | - | - | - |

In der Versuchsserie 1 wird gezeigt, dass bei Verwendung des Grubbs-II-Katalysators durch Zusatz von Verbindungen des Typs BF3*D der Metatheseabbau von Nitrilkautschuk beschleunigt wird; d. h. nach gleichen Reaktionszeiten sind M_{w}, und Mₙ deutlich niedriger als beim Referenzversuch (Serie 1.0), der ohne Zusätze durchgeführt wurde. Außerdem wird gezeigt, dass der erfindungsgemäße Effekt bei unterschiedlichen Molverhältnissen Grubbs-II-Katalysator: BF₃*D auftritt.

### Versuchsserie 2: Einsatz des Grela-Katalysators in Kombination mit BF₃*Et₂O beim Metatheseabbau von NBR

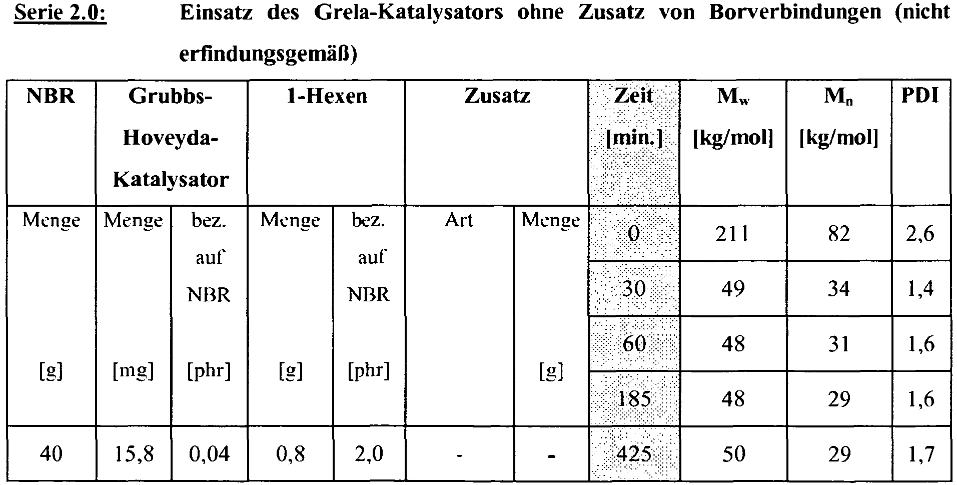

### Serie 2.1: Einsatz des Grela-Katalysators in Kombination mit BF₃*Et₂O bei einem Molverhältnis von Grela-Katalystor / BF₃*Et₂O = 1:22 (erfindungsgemäß)

| **NBR** | **Grela-Katalysator** | | **1-Hexen** | | **Zusatz** | | **Zeit [min.]** | **M_{w} [kg/mol]** | **Mₙ [kg/mol]** | **PDI** |
|---|---|---|---|---|---|---|---|---|---|---|
| Menge | Menge | bez. auf NBR | Menge | bez. auf NBR | Art | Menge [g] | 0 | 211 | 82 | 2,6 |
| | | | | | | | 30 | 38 | 20 | 1,9 |
| | | | | | | | 60 | 33 | 17 | 2,0 |
| [g] | [mg] | [phr] | [g] | [phr] | | | 185 | 33 | 17 | 1,9 |
| 40 | 15,8 | 0,04 | 0,8 | 2,0 | BF₃* Et₂O | 0,007 4 | 425 | 31 | 16 | 1,9 |

In der Versuchsserie 2 wird gezeigt, dass bei Verwendung des Grela-Katalysators in Kombination mit BF₃^{*}Et₂O der Metatheseabbau von Nitrilkautschuk beschleunigt wird; d. h. nach gleichen Reaktionszeiten sind M_{w}, und Mₙ deutlich niedriger als beim Referenzversuch (Serie 2.0), der ohne Zusatz durchgeführt wird.

## Patentansprüche

1. Verfahren zum Molekulargewichtsabbau von Nitrilkautschuk, wobei man einen Nitrilkautschuk mit einem Katalysator-System in Kontakt und zur Umsetzung bringt, **dadurch gekennzeichnet, dass** das Katalysator-System einen Metathese-Katalysator umfasst, sowie mindestens eine Verbindung der allgemeinen Formel (Z)
BFₘXₙ*Dᵥ (Z)
worin
BFₘXₙ für BF₃, BF₂Cl, BFCl₂ BF₂Br, BFBr₂, BF₂(OC₂H₅), BF(OC₂H₅)₂, BF₂(CH₃) oder BF(CH₃)₂ steht und
D für Wasser, Diethylether, Ethylamin, THF, n-Propanol, Ameisensäure, Essigsäure, Trifluoressigsäure, Trichloressigsäure, Schwefelsäure, Phosphorsäure, Triflurormethansulfonsäure oder Toluolsulfonsäure steht und v = 1, 2 oder 3 ist,
und wobei als Katalysator entweder Verbindungen der allgemeinen Formel (A) eingesetzt werden, 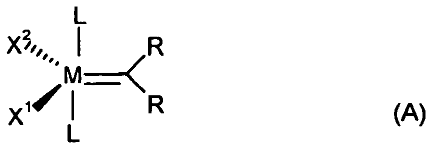 worin
M Osmium oder Ruthenium bedeutet,
X¹ und X² gleich oder verschieden sind und zwei anionische Liganden darstellen,
L gleiche oder verschiedene Liganden, bevorzugt neutrale Elektronen-Donoren darstellen,
R gleich oder verschieden sind und Wasserstoff, einen Alkyl-, bevorzugt C₁-C₃₀-Alkyl-, Cycloalkyl-, bevorzugt C₃-C₂₀-Cycloalkyl-, Alkenyl-, bevorzugt C₂-C₂₀-Alkenyl-, Alkinyl-, bevorzugt C₂-C₂₀-Alkinyl-, Aryl-, bevorzugt C₆-C₂₄-Aryl-, Carboxylat-, bevorzugt C₁-C₂₀-Carboxylat-, Alkoxy-, bevorzugt C₁-C₂₀-Alkoxy-, Alkenyloxy-, bevorzugt C₂-C₂₀-Alkenyloxy-, Alkinyloxy-, bevorzugt C₂-C₂₀-Alkinyloxy-, Aryloxy-, bevorzugt C₆-C₂₄-Aryloxy, Alkoxycarbonyl-, bevorzugt C₂-C₂₀-Alkoxycarbonyl-, Alkylamino-, bevorzugt C₁-C₃₀-Alkylamino, Alkylthio-, bevorzugt C₁-C₃₀-Alkylthio, Arylthio-, bevorzugt C₆-C₂₄-Arylthio, Alkylsulfonyl-, bevorzugt C₁-C₂₀-Alkylsulfonyl, oder Alkylsulfinyl, bevorzugt C₁-C₂₀-Alkylsulfinyl-Rest darstellen, die alle jeweils durch ein oder mehrere Alkyl-, Halogen-, bevorzugt Fluor oder Chlor, Alkoxy-, Aryl- oder Heteroaryl-Reste substituiert sein können, oder alternativ beide Reste R unter Einbindung des gemeinsamen C-Atoms, an das sie gebunden sind, zu einer cyclischen Gruppe verbrückt sind, die aliphatischer oder aromatischer Natur sein kann, gegebenenfalls substituiert ist und ein oder mehrere Heteroatome enthalten kann,
Katalysatoren der allgemeinen Formel (B), 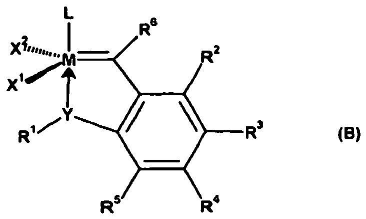 worin
M Ruthenium oder Osmium bedeutet,
Y Sauerstoff (O), Schwefel (S), einen Rest N-R¹ oder einen Rest P-R¹ bedeutet,
X¹ und X² gleich oder verschieden sind und zwei anionische Liganden darstellen,
R¹ einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
R², R³, R⁴ und R⁵ gleich oder verschieden sind und Wasserstoff, organische oder anorganische Reste darstellen,
R⁶ Wasserstoff, einen Alkyl-, Alkenyl-, Alkinyl- oder einen Aryl-Rest bedeutet und
L ein Ligand ist, der die gleichen Bedeutungen besitzt, wie der Ligand L in Formel (A), und bevorzugt für einen P(R⁷)₃ Rest steht, wobei R⁷ unabhängig voneinander C₁-C₆-Alkyl, C₃-C₈-Cycloalkyl oder Aryl bedeuten, oder aber L für einen gegebenenfalls substituierten Imidazolidinrest ("Im") steht, der bevorzugt die Struktur der allgemeinen Formeln (IIa) und (IIb)besitzt, 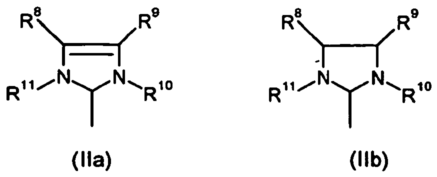 worin
R⁸, R⁹, R¹⁰, R¹¹ gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy,C₂-C₂₀-Alkinyloxy, C₆-C₂₀-Aryloxy, C₂-C₂₀-Alkoxycarbonyl, C₁-C₂₀-Alkylthio, C₆-C₂₀-Aryl-thio, C₁-C₂₀-Alkylsulfonyl, C₁-C₂₀-Alkylsulfonat, C₆-C₂₀-Arylsulfonat oder C₁-C₂₀-Alkylsulfinyl bedeuten, wobei alle zuvor genannten Reste gegebenenfalls substituiert sind
und besonders bevorzugt eine der nachfolgenden Strukturen (IIIa) bis (IIIf) aufweist, wobei Ph jeweils für Phenyl, Bu für Butyl und Mes für einen 2,4,6-Trimethylphenyl-Rest oder alternativ jeweils für einen 2,6-Diisopropylphenyl-Rest steht. 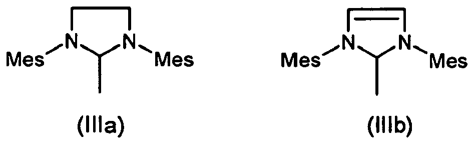 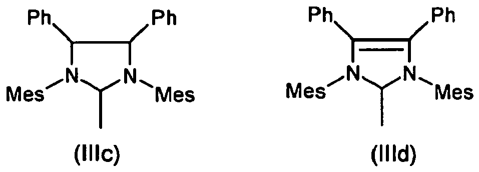 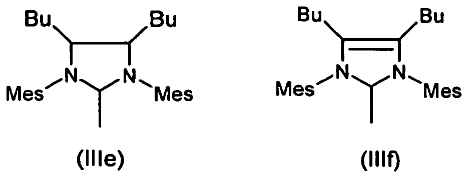 oder Katalysatoren der allgemeinen Formel (G), 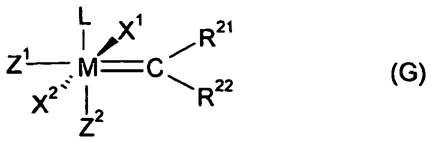 worin
M Osmium oder Ruthenium bedeutet,
X¹ und X² gleich oder verschieden sind und zwei anionische Liganden darstellen,
L einen Liganden, bevorzugt einen neutralen Elektronen-Donor darstellt,
Z¹ und Z² gleich oder verschieden sind und neutrale Elektronen-Donoren darstellen, und
R²¹ und R²² unabhängig voneinander Wasserstoff, Alkyl, Cycloalkyl, Alkenyl, Alkinyl, Aryl, Carboxylat, Alkoxy, Alkenyloxy, Alkinyloxy, Aryloxy, Alkoxycarbonyl, Alkylamino, Alkylthio, Alkylsulfonyl oder Alkylsulfinyl bedeuten, die jeweils optional durch ein oder mehrere Reste ausgewählt aus Alkyl, Halogen, Alkoxy, Aryl oder Heteroaryl substituiert sind.

2. Verfahren gemäß Anspruch 1, wobei X¹ und X² in der allgemeinen Formel (A) gleich oder verschieden sind und Wasserstoff, Halogen, insbesondere Fluor, Chlor, Brom oder Jod, Pseudohalogen, geradkettige oder verzweigte C₁-C₃₀-Alkyl, bevorzugt C₁-C₅-Alkyl, C₆-C₂₄-Aryl, C₆-C₁₄-Aryl C₁-C₂₀-Alkoxy, bevorzugt C₁-C₅-Alkoxy, C₆-C₂₄-Aryloxy, C₃-C₂₀-Alkyldiketonat, C₆-C₂₄-Aryldiketonat, C₁-C₂₀-Carboxylat, bevorzugt C₁-C₅-Carboxylat oder Benzoat, C₁-C₂₀-Alkylsulfonat, bevorzugt C₁-C₅-Alkylsulfonat, C₆-C₂₄-Arylsulfonat, bevorzugt C₆-C₁₄-Arylsulfonat, C₁-C₂₀-Alkylthiol, bevorzugt C₁-C₅-Alkylthiol, C₆-C₂₄-Arylthiol, bevorzugt C₆-C₁₄-Arylthiol, C₁-C₂₀-Alkylsulfonyl oder C₁-C₂₀-Alkylsulfinyl-Reste bedeuten.

3. Verfahren gemäß Anspruch 1 oder 2, wobei X¹ und X² identisch sind und Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat) bedeuten.

4. Verfahren gemäß einem oder mehreren der Ansprüche 1 bis 3, wobei die beiden Liganden L unabhängig voneinander einen Phosphin-, sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Pyridin-, Thioether- oder einen Imidazolidin("Im")-Liganden, bevorzugt einen Imidazolidinrest (Im) mit der Struktur der allgemeinen Formeln (IIa) oder (IIb), 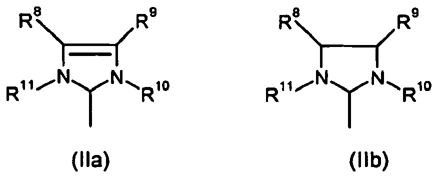 worin
R⁸, R⁹, R¹⁰, R¹¹ gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀Alkenyloxy,C₂-C₂₀-Alkinyloxy, C₆-C₂₀-Aryloxy, C₂-C₂₀-Alkoxycarbonyl, C₁-C₂₀-Alkylthio, C₆-C₂₀-Aryl-thio, C₁-C₂₀-AlkylsulfonylC₁-C₂₀-Alkylsulfonat, C₆-C₂₀-Arylsulfonat oder C₁-C₂₀-Alkylsulfinyl bedeuten, wobei alle zuvor genannten Reste gegebenenfalls substituiert sind.

5. Verfahren nach einem oder mehreren der Ansprüche 1 bis 4, wobei Katalysatoren der allgemeinen Formel (A1) eingesetzt werden, 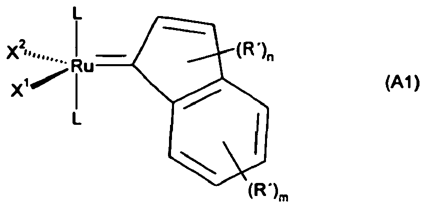 worin
X¹, X² und L die gleichen allgemeinen, bevorzugten und besonders bevorzugten Bedeutungen haben können wie in der allgemeinen Formel (A),
n gleich 0, 1 oder 2 ist,
m gleich 0, 1, 2, 3 oder 4 ist und
R' gleich oder verschieden sind und Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Reste bedeuten können, die alle jeweils durch ein oder mehrere Alkyl-, Halogen-, Alkoxy-, Aryl- oder Heteroaryl-Reste substituiert sein können.

6. Verfahren gemäß Anspruch 1, wobei der Katalysator die Struktur (IV), (V) oder (VI) besitzt, wobei Cy jeweils für Cyclohexyl, Mes für 2,4,6-Trimethylphenyl und Ph für Phenyl steht.

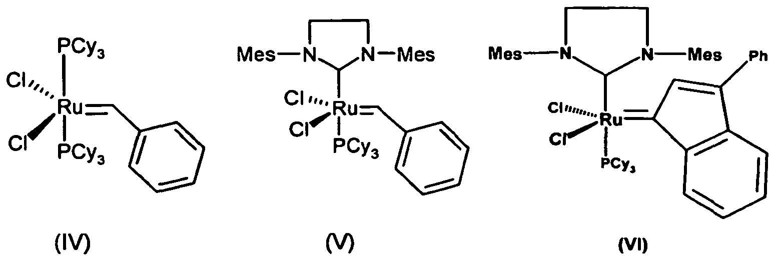

7. Verfahren gemäß Anspruch 1, wobei Katalysatoren gemäß der allgemeinen Formel (B1) eingesetzt werden, 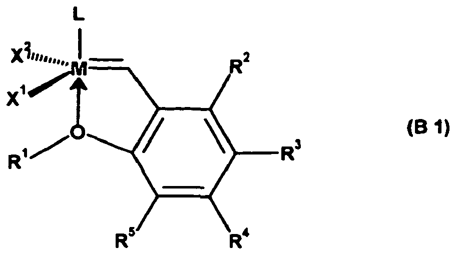 worin
M, L, X¹, X² , R¹, R², R³, R⁴ und R⁵ die für die allgemeine Formel (B) in Anspruch 1 genannten Bedeutungen besitzen, bevorzugt
M Ruthenium bedeutet,
X¹ und X² gleichzeitig Halogen, insbesondere Chlor bedeuten,
R¹ für einen geradkettigen oder verzweigten C₁-C₁₂ Alkylrest steht, bevorzugt Isopropyl,
R², R³, R⁴, R⁵ die für die allgemeine Formel (B) in Anspruch 1 genannten Bedeutungen besitzen und bevorzugt alle Wasserstoff bedeuten, und
L die für die allgemeine Formel (B) in Anspruch 1 genannten Bedeutungen besitzt und besonders bevorzugt einen gegebenenfalls substituierten Imidazolidin-Rest der Formeln (IIa) oder (IIb) darstellt, 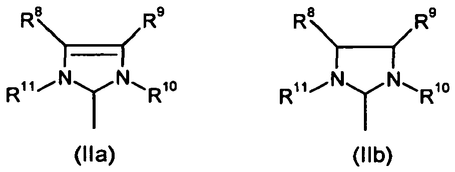 worin
R⁸, R⁹, R¹⁰, R¹¹ gleich oder verschieden sind und Wasserstoff, geradkettiges oder verzweigtes C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₆-C₂₄-Arylthio, C₁-C₂₀-Alkylsulfonyl, C₁-C₂₀-Alkylsulfonat, C₆-C₂₄-Arylsulfonat oder C₁-C₂₀-Alkylsulfinyl bedeuten.

8. Verfahren gemäß Anspruch 1, wobei ein Katalysator der nachfolgenden Strukturen (VII), (VIII), (IX), (X), (XI), (XII), (XIII), (XIV) (XV), (XVI) oder (XVII) eingesetzt wird, wobei Mes jeweils 2,4,6-Trimethylphenyl bedeutet.

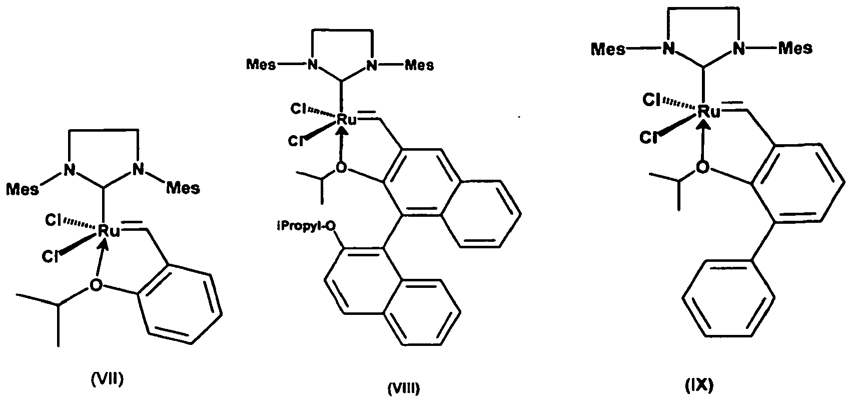

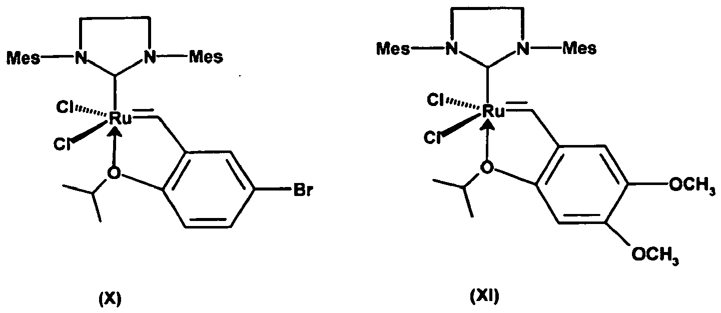

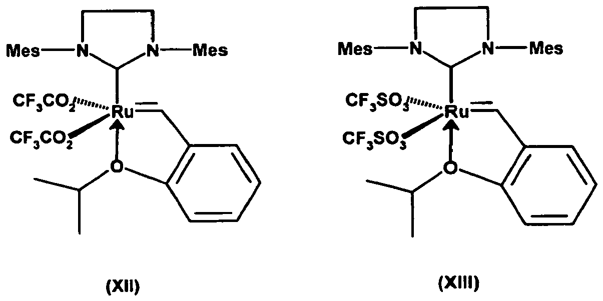

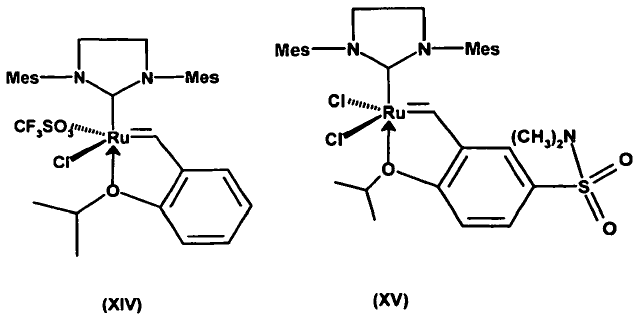

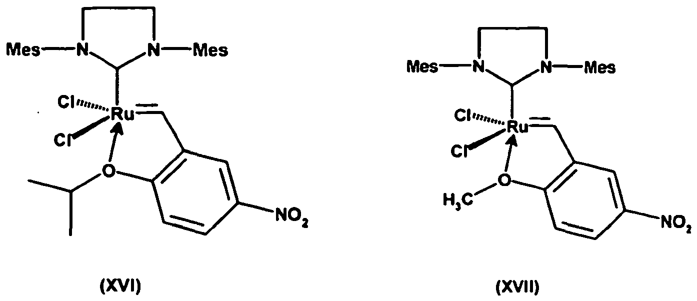

9. Verfahren gemäß Anspruch 1, wobei ein Katalysator der allgemeinen Formel (B2) eingesetzt wird, 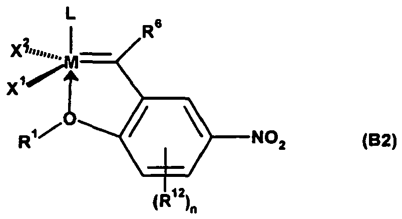 worin
M, L, X¹, X², R¹ und R⁶ die für die allgemeine Formel (B) in Anspruch 1 genannten Bedeutungen haben,
R¹² gleich oder verschieden sind und die für die Reste R², R³, R⁴ und R⁵ in der allgemeinen Formel (B) in Anspruch 1 genannten Bedeutungen, ausgenommen Wasserstoff, besitzen und
n gleich 0, 1, 2 oder 3 ist.

10. Verfahren gemäß einem oder mehreren der Ansprüche 1-9, wobei der Komplexkatalysator und die Verbindung der allgemeinen Formel (Z) in einem Molverhältnis [Komplexkatalysator : Verbindung der allgemeinen Formel (Z)] = 1: (0,1-1000), bevorzugt 1: (0,5-100), besonders bevorzugt 1: (1-50) eingesetzt werden.

11. Verwendung einer Verbindung der allgemeinen Formel (Z)
BFₘXₙ*Dᵥ (Z)
als Bestandteil von Katalysator-Systemen für die Metathese von Nitrilkautschuk,
wobei
BFₘXₙ für BF₃, BF₂Cl, BFCl₂ BF₂Br, BFBr₂, BF₂(OC₂H₅), BF(OC₂H₅)₂, BF₂(CH₃) oder BF(CH₃)₂ steht und
D für Wasser, Diethylether, Ethylamin, THF, n-Propanol, Ameisensäure, Essigsäure, Trifluoressigsäure, Trichloressigsäure, Schwefelsäure, Phosphorsäure, Triflurormethansulfonsäure oder Toluolsulfonsäure steht und v= 1, 2 oder 3 ist,
und wobei das Katalysator-System einen Katalysator der allgemeinen Formel (A) enthält, 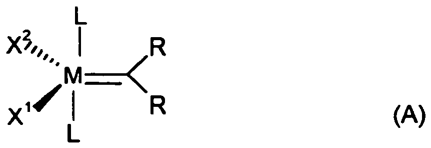 worin
M Osmium oder Ruthenium bedeutet,
X¹ und X² gleich oder verschieden sind und zwei anionische Liganden darstellen,
L gleiche oder verschiedene Liganden, bevorzugt neutrale Elektronen-Donoren darstellen,
R gleich oder verschieden sind und Wasserstoff, einen Alkyl-, bevorzugt C₁-C₃₀-Alkyl-, Cycloalkyl-, bevorzugt C₃-C₂₀-Cycloalkyl-, Alkenyl-, bevorzugt C₂-C₂₀-Alkenyl-, Alkinyl-, bevorzugt C₂-C₂₀-Alkinyl-, Aryl-, bevorzugt C₆-C₂₄-Aryl-, Carboxylat-, bevorzugt C₁-C₂₀-Carboxylat-, Alkoxy-, bevorzugt C₁-C₂₀-Alkoxy-, Alkenyloxy-, bevorzugt C₂-C₂₀-Alkenyloxy-, Alkinyloxy-, bevorzugt C₂-C₂₀-Alkinyloxy-, Aryloxy-, bevorzugt C₆-C₂₄-Aryloxy, Alkoxycarbonyl-, bevorzugt C₂-C₂₀-Alkoxycarbonyl-, Alkylamino-, bevorzugt C₁-C₃₀-Alkylamino, Alkylthio-, bevorzugt C₁-C₃₀-Alkylthio, Arylthio-, bevorzugt C₆-C₂₄-Arylthio, Alkylsulfonyl-, bevorzugt C₁-C₂₀-Alkylsulfonyl, oder Alkylsulfinyl, bevorzugt C₁-C₂₀-Alkylsulfinyl-Rest darstellen, die alle jeweils durch ein oder mehrere Alkyl-, Halogen-, bevorzugt Fluor oder Chlor, Alkoxy-, Aryl- oder Heteroaryl-Reste substituiert sein können, oder alternativ beide Reste R unter Einbindung des gemeinsamen C-Atoms, an das sie gebunden sind, zu einer cyclischen Gruppe verbrückt sind, die aliphatischer oder aromatischer Natur sein kann, gegebenenfalls substituiert ist und ein oder mehrere Heteroatome enthalten kann,
oder einen Katalysator der allgemeinen Formel (B), 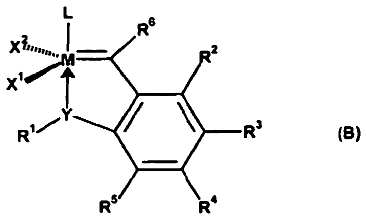 worin
M Ruthenium oder Osmium bedeutet,
Y Sauerstoff (O), Schwefel (S), einen Rest N-R¹ oder einen Rest P-R¹ bedeutet,
X¹ und X² gleich oder verschieden sind und zwei anionische Liganden darstellen,
R¹ einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
R², R³, R⁴ und R⁵ gleich oder verschieden sind und Wasserstoff, organische oder anorganische Reste darstellen,
R⁶ Wasserstoff, einen Alkyl-, Alkenyl-, Alkinyl- oder einen Aryl-Rest bedeutet und
L ein Ligand ist, der die gleichen Bedeutungen besitzt, wie der Ligand L in Formel (A), und bevorzugt für einen P(R⁷)₃ Rest steht, wobei R⁷ unabhängig voneinander C₁-C₆-Alkyl, C₃-C₈-Cycloalkyl oder Aryl bedeuten, oder aber L für einen gegebenenfalls substituierten Imidazolidinrest ("Im") steht, der bevorzugt die Struktur der allgemeinen Formeln (IIa) und (IIb) besitzt, 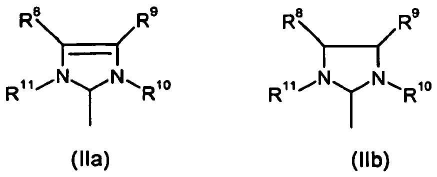 worin
R⁸, R⁹, R¹⁰, R¹¹ gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy,C₂-C₂₀-Alkinyloxy, C₆-C₂₀-Aryloxy, C₂-C₂₀-Alkoxycarbonyl, C₁-C₂₀-Alkylthio, C₆-C₂₀-Aryl-thio, C₁-C₂₀-Alkylsulfonyl, C₁-C₂₀-Alkylsulfonat, C₆-C₂₀-Arylsulfonat oder C₁-C₂₀-Alkylsulfinyl bedeuten, wobei alle zuvor genannten Reste gegebenenfalls substituiert sind,
und besonders bevorzugt eine der nachfolgenden Strukturen (IIIa) bis (IIIf) aufweist, wobei Ph jeweils für Phenyl, Bu für Butyl und Mes für einen 2,4,6-Trimethylphenyl-Rest oder alternativ jeweils füreinen 2,6-Diisopropylphenyl-Rest steht 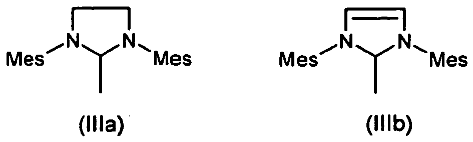 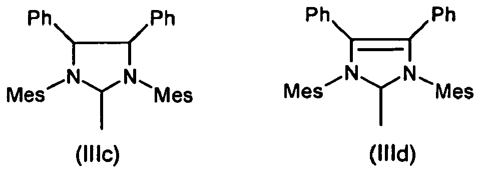 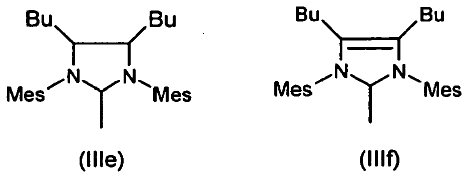 oder einen Katalysator der allgemeinen Formel (G), 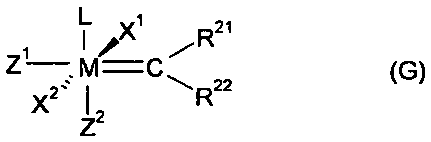 worin
M Osmium oder Ruthenium bedeutet,
X¹ und X² gleich oder verschieden sind und zwei anionische Liganden darstellen,
L einen Liganden, bevorzugt einen neutralen Elektronen-Donor darstellt,
Z¹ und Z² gleich oder verschieden sind und neutrale Elektronen-Donoren darstellen, und
R²¹ und R²² unabhängig voneinander Wasserstoff, Alkyl, Cycloalkyl, Alkenyl, Alkinyl, Aryl, Carboxylat, Alkoxy, Alkenyloxy, Alkinyloxy, Aryloxy, Alkoxycarbonyl, Alkylamino, Alkylthio, Alkylsulfonyl oder Alkylsulfinyl bedeuten, die jeweils optional durch ein oder mehrere Reste ausgewählt aus Alkyl, Halogen, Alkoxy, Aryl oder Heteroaryl substituiert sind.

## Claims

1. Process for reducing the molecular weight of nitrile rubber, in which a nitrile rubber is brought into contact with a catalyst system and reacted, **characterized in that** the catalyst system comprises a metathesis catalyst and also at least one compound of the general formula (Z)
BFₘXₙ*Dᵥ (Z)
where
BFₘXₙ is BF₃, BF₂Cl, BFCl₂ BF₂Br, BFBr₂, BF₂ (OC₂H₅), BF (OC₂H₅)₂, BF₂ (CH₃) or BF (CH₃)₂, and
D is water, diethyl ether, ethylamine, THF, n-propanol, formic acid, acetic acid, trifluoroacetic acid, trichloroacetic acid, sulphuric acid, phosphoric acid, trifluoromethanesulphonic acid or toluenesulphonic acid and v = 1, 2 or 3,
and either compounds of the general formula (A), 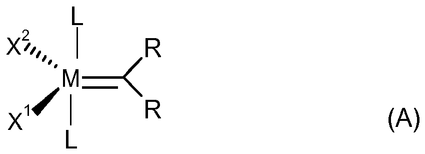 where
M is osmium or ruthenium,
X¹ and X² are identical or different and are two anionic ligands,
L represents identical or different ligands, preferably uncharged electron donors,
the radicals R are identical or different and are each hydrogen, an alkyl, preferably C₁-C₃₀-alkyl, cycloalkyl, preferably C₃-C₂₀-cycloalkyl, alkenyl, preferably C₂-C₂₀-alkenyl, alkynyl, preferably C₂-C₂₀-alkynyl, aryl, preferably C₆-C₂₄-aryl, carboxylate, preferably C₁-C₂₀-carboxylate, alkoxy, preferably C₁-C₂₀-alkoxy, alkenyloxy, preferably C₂-C₂₀-alkenyloxy, alkynyloxy, preferably C₂-C₂₀-alkynyloxy, aryloxy, preferably C₆-C₂₄-aryloxy, alkoxycarbonyl, preferably C₂-C₂₀-alkoxycarbonyl, alkylamino, preferably C₁-C₃₀-alkylamino, alkylthio, preferably C₁-C₃₀-alkylthio, arylthio, preferably C₆-C₂₄-arylthio, alkylsulphonyl, preferably C₁-C₂₀-alkylsulphonyl, or alkylsulphinyl, preferably C₁-C₂₀-alkylsulphinyl, where these radicals can all in each case be substituted by one or more alkyl, halogen, preferably fluorine or chlorine, alkoxy, aryl- or heteroaryl radicals or alternatively the two radicals R are bridged with inclusion of the common C atom to which they are bound to form a cyclic group which can be aliphatic or aromatic in nature, may optionally be substituted and can contain one or more heteroatoms,
catalysts of the general formula (B), 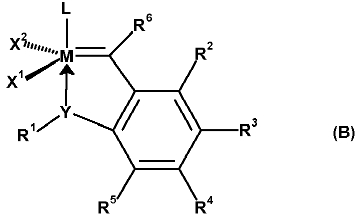 where
M is ruthenium or osmium,
Y is oxygen (O), sulphur (S), an N-R¹ radical or a P-R¹ radical,
X¹ and X² are identical or different and are two anionic ligands,
R¹ is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, which may all optionally be substituted by one or more alkyl, halogen, alkoxy, aryl or heteroaryl radicals,
R², R³, R⁴ and R⁵ are identical or different and are each hydrogen or an organic or inorganic radical,
R⁶ is hydrogen or an alkyl, alkenyl, alkynyl or aryl radical and
L is a ligand which has the same meanings as the ligand L in formula (A), and is preferably a P(R⁷)₃ radical, where the radicals R⁷ are each, independently of one another, C₁-C₆-alkyl, C₃-C₈-cycloalkyl or aryl or else L is an optionally substituted imidazolidine radical ("Im") which preferably has the structure of the general formulae (IIa) and (IIb) 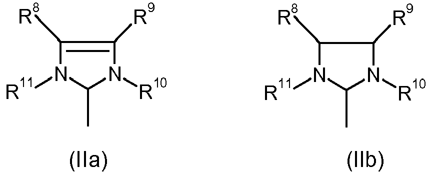
where
R⁸, R⁹, R¹⁰, R¹¹ are identical or different and are each hydrogen, straight-chain or branched C₁-C₃₀-alkyl, C₃-C₂₀-cycloalkyl, C₂-C₂₀-alkenyl, C₂-C₂₀-alkynyl, C₆-C₂₄-aryl, C₁-C₂₀₋carboxylate, C₁-C₂₀-alkoxy, C₂-C₂₀-alkenyloxy, C₂-C₂₀-alkynyloxy, C₆-C₂₀-aryloxy, C₂-C₂₀-alkoxycarbonyl, C₁-C₂₀-alkylthio, C₆-C₂₀-arylthio, C₁-C₂₀-alkylsulphonyl, C₁-C₂₀-alkylsulphonate, C₆-C₂₀-arylsulphonate or C₁-C₂₀-alkylsulphinyl, where all the abovementioned radicals may optionally be substituted,
and particularly preferably has one of the structures (IIIa) to (IIIf) below, where Ph is in each case phenyl, Bu is butyl and Mes is a 2,4,6-trimethylphenyl radical or alternatively in each case a 2,6-diisopropylphenyl radical, 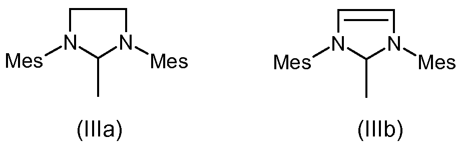 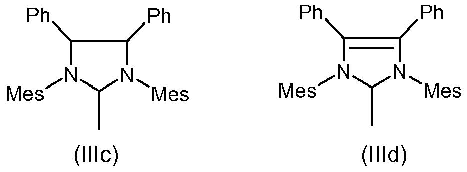 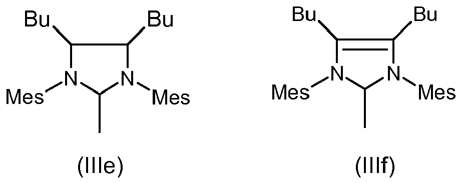 or catalysts of the general formula (G), 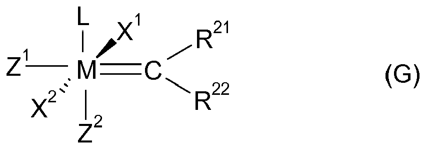 where
M is osmium or ruthenium,
X¹ and X² are identical or different and are two anionic ligands,
L is a ligand, preferably an uncharged electron donor,
Z¹ and Z² are identical or different and are uncharged electron donors, and
R²¹ and R²² are each, independently of one another, hydrogen, alkyl, cycloalkyl, alkenyl, alkynyl, aryl, carboxylate, alkoxy, alkenyloxy, alkynyloxy, aryloxy, alkoxycarbonyl, alkylamino, alkylthio, alkylsulphonyl or alkylsulphinyl, each of which may optionally be substituted by one or more radicals selected from among alkyl, halogen, alkoxy, aryl and heteroaryl,
are used as catalyst.

2. Process according to Claim 1, wherein X¹ and X² in the general formula (A) are identical or different and are each hydrogen, halogen, in particular fluorine, chlorine, bromine or iodine, pseudohalogen, straight-chain or branched C₁-C₃₀-alkyl, preferably C₁-C₅-alkyl, C₆-C₂₄-aryl, C₆-C₁₄-aryl, C₁-C₂₀-alkoxy, preferably C₁-C₅-alkoxy, C₆-C₂₄-aryloxy, C₃-C₂₀-alkyldiketonate, C₆-C₂₄-aryldiketonate, C₁-C₂₀-carboxylate, preferably C₁-C₅-carboxylate or benzoate, C₁-C₂₀-alkylsulphonate, preferably C₁-C₅-alkylsulphonate, C₆-C₂₄-arylsulphonate, preferably C₆-C₁₄-arylsulphonate, C₁-C₂₀-alkylthiol, preferably C₁-C₅-alkylthid, C₆-C₂₄-arylthid, preferably C₆-C₁₄-arylthiol, C₁-C₂₀-alkylsulphonyl or C₁-C₂₀-alkylsulphinyl.

3. Process according to Claim 1 or 2, wherein X¹ and X² are identical and are each halogen, in particular chlorine, CF₃COO, CH₃COO, CFH₂COO, (CH₃)₃CO, (CF₃)₂ (CH₃) CO, (CF₃) (CH₃)₂CO, PhO (phenoxy), MeO (methoxy), EtO (ethoxy), tosylate (p-CH₃-C₆H₄-SO₃), mesylate (2, 4, 6-trimethylphenyl) or CF₃SO₃ (trifluoromethanesulphonate).

4. Process according to one or more of Claims 1 to 3, wherein the two ligands L are each, independently of one another, a phosphine, sulphonated phosphine, phosphate, phosphinite, phosphonite, arsine, stibine, ether, amine, amide, sulphoxide, carboxyl, nitrosyl, pyridine, thioether or imidazolidine ("Im") ligand, preferably an imidazolidine radical (Im) having the structure of the general formulae (IIa) or (IIb), 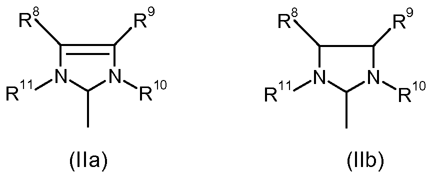 where
R⁸, R⁹, R¹⁰, R¹¹ are identical or different and are each hydrogen, straight-chain or branched C₁-C₃₀-alkyl, C₃-C₂₀-cycloalkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₀-aryloxy, C₂-C₂₀-alkoxycarbonyl, C₁-C₂₀-alkylthio, C₆-C₂₀-arylthio, C₁-C₂₀-alkylsulphonyl, C₁-C₂₀-alkylsulphonate, C₆-C₂₀-arylsulphonate or C₁-C₂₀-alkylsulphinyl, where all the abovementioned radicals may optionally be substituted.

5. Process according to one or more of Claims 1 to 4, wherein catalysts of the general formula (A1), 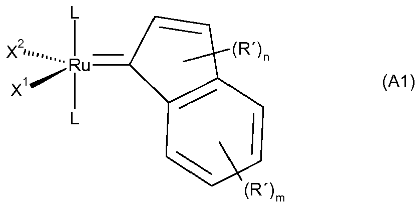 where
X¹, X² and L can have the same general, preferred and particularly preferred meanings as in the general formula (A),
n is 0, 1 or 2,
m is 0, 1, 2, 3 or 4 and
the radicals R' are identical or different and are each an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, which may all be substituted by one or more alkyl, halogen, alkoxy, aryl or heteroaryl radicals,
are used.

6. Process according to Claim 1, wherein the catalyst has the structure (IV), (V) or (VI), where Cy is in each case cyclohexyl, Mes is 2,4,6-trimethylphenyl and Ph is phenyl.

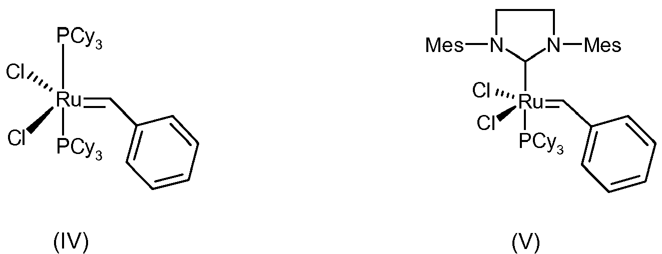

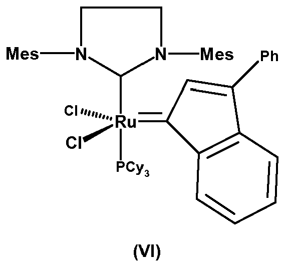

7. Process according to Claim 1, wherein catalysts of the general formula (B1), 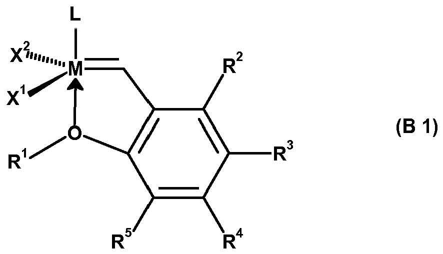 where
M, L, X¹, X², R¹, R², R³, R⁴ and R⁵ have the meanings given for the general formula (B) in Claim 1, preferably
M is ruthenium,
X¹ and X² are both halogen, in particular chlorine,
R¹ is a straight-chain or branched C₁-C₁₂ alkyl radical, preferably isopropyl,
R², R³, R⁴, R⁵ have the meanings given for the general formula (B) in Claim 1 and preferably are all hydrogen, and
L has the meanings given for the general formula (B) in Claim 1 and particularly preferably is a substituted or unsubstituted imidazolidine radical of the formula (IIa) or (IIb), 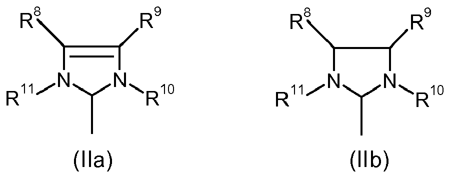 where
R⁸, R⁹, R¹⁰, R¹¹ are identical or different and are each hydrogen, straight-chain or branched C₁-C₃₀-alkyl, C₃-C₂₀-cycloalkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₆-C₂₄-arylthio, C₁-C₂₀-alkylsulphonyl, C₁-C₂₀-alkylsulphonate, C₆-C₂₄-arylsulphonate or C₁-C₂₀-alkylsulphinyl, are used.

8. Process according to Claim 1, wherein a catalyst having one of the structures (VII), (VIII), (IX), (X) , (XI), (XII), (XIII), (XIV), (XV), (XVI) and (XVII) where Mes is in each case 2,4,6-trimethylphenyl, is used.

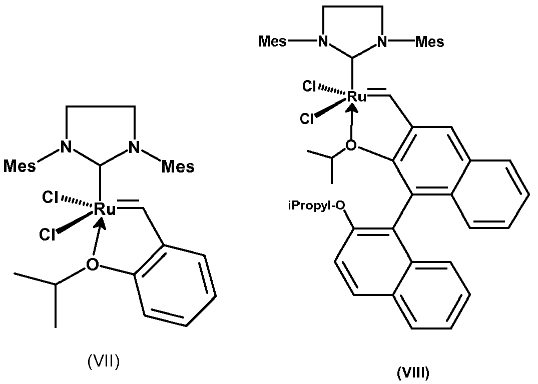

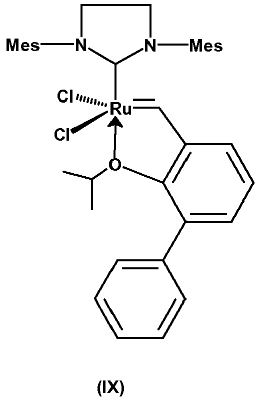

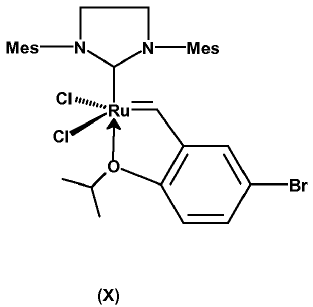

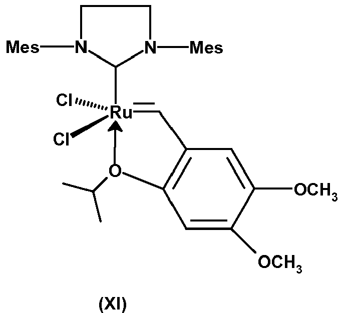

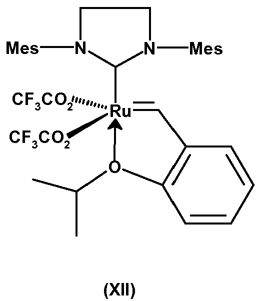

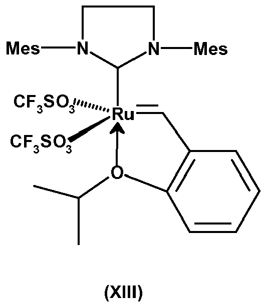

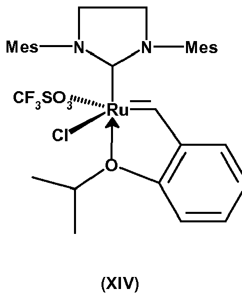

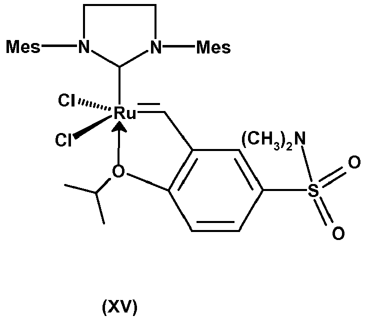

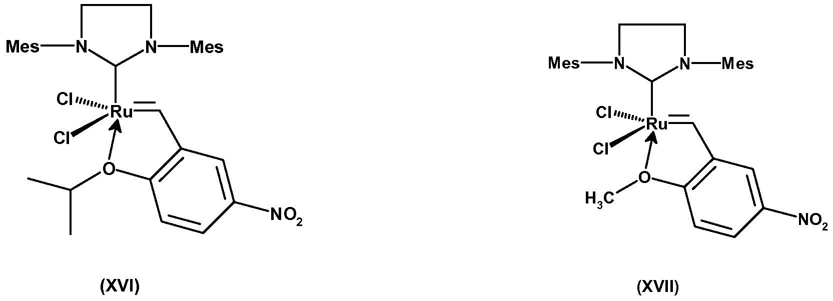

9. Process according to Claim 1, wherein a catalyst of the general formula (B2), 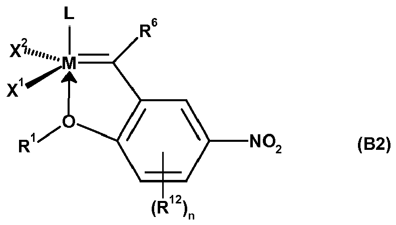 where
M, L, X¹, X², R¹ and R⁶ have the meanings given for the general formula (B) in Claim 1,
the radicals R¹² are identical or different and have the meanings given for the radicals R², R³, R⁴ and R⁵ in the general formula (B) in Claim 1, with the exception of hydrogen, and
n is 0, 1, 2 or 3,
is used.

10. Process according to one or more of Claims 1-9, wherein the complex catalyst and the compound of the general formula (Z) are used in a molar ratio of [complex catalyst:compound of the general formula (Z)] 1: (0.1-1000), preferably 1: (0.5-100), particularly preferably 1: (1-50).

11. Use of a compound of the general formula (Z)
BFₘXₙ*Dᵥ (Z)
as constituent of catalyst systems for the metathesis of nitrile rubber,
where
BFₘXₙ is BF₃, BF₂Cl, BFCl₂ BF₂Br, BFBr₂, BF₂ (OC₂H₅) , BF (OC₂H₅) ₂, BF₂ (CH₃) or BF (CH₃)₂, and
D is water, diethyl ether, ethylamine, THF, n-propanol, formic acid, acetic acid, trifluoroacetic acid, trichloroacetic acid, sulphuric acid, phosphoric acid, trifluoromethanesulphonic acid or toluenesulphonic acid and v = 1, 2 or 3,
and the catalyst system contains a catalyst of the general formula (A), 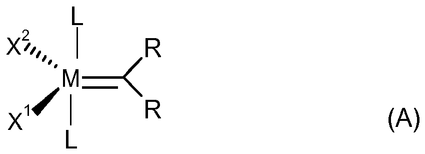 where
M is osmium or ruthenium,
X¹ and X² are identical or different and are two anionic ligands,
L represents identical or different ligands, preferably uncharged electron donors,
the radicals R are identical or different and are each hydrogen, an alkyl, preferably C₁-C₃₀-alkyl, cycloalkyl, preferably C₃-C₂₀-cycloalkyl, alkenyl, preferably C₂-C₂₀-alkenyl, alkynyl, preferably C₂-C₂₀-alkynyl, aryl, preferably C₆-C₂₄-aryl, carboxylate, preferably C₁-C₂₀-carboxylate, alkoxy, preferably C₁-C₂₀-alkoxy, alkenyloxy, preferably C₂-C₂₀-alkenyloxy, alkynyloxy, preferably C₂-C₂₀-alkynyloxy, aryloxy, preferably C₆-C₂₄-aryloxy, alkoxycarbonyl, preferably C₂-C₂₀-alkoxycarbonyl, alkylamino, preferably C₁-C₃₀-alkylamino, alkylthio, preferably C₁-C₃₀-alkylthio, arylthio, preferably C₆-C₂₄-arylthio, alkylsulphonyl, preferably C₁-C₂₀-alkylsulphonyl, or alkylsulphinyl, preferably C₁-C₂₀-alkylsulphinyl, where these radicals can all in each case be substituted by one or more alkyl, halogen, preferably fluorine or chlorine, alkoxy, aryl- or heteroaryl radicals or alternatively the two radicals R are bridged with inclusion of the common C atom to which they are bound to form a cyclic group which can be aliphatic or aromatic in nature, may optionally be substituted and can contain one or more heteroatoms,
or a catalyst of the general formula (B), 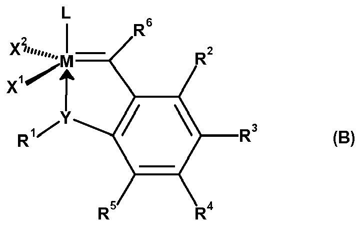 where
M is ruthenium or osmium,
Y is oxygen (O) , sulphur (S), an N-R¹ radical or a P-R¹ radical,
X¹ and X² are identical or different and are two anionic ligands,
R¹ is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, which may all optionally be substituted by one or more alkyl, halogen, alkoxy, aryl or heteroaryl radicals,
R² R³, R⁴ and R⁵ are identical or different and are each hydrogen or an organic or inorganic radical,
R⁶ is hydrogen or an alkyl, alkenyl, alkynyl or aryl radical and
L is a ligand which has the same meanings as the ligand L in formula (A), and is preferably a P(R⁷)₃ radical, where the radicals R⁷ are each, independently of one another, C₁-C₆-alkyl, C₃-C₈-cycloalkyl or aryl or else L is an optionally substituted imidazolidine radical ("Im") which preferably has the structure of the general formulae (IIa) and (IIb) 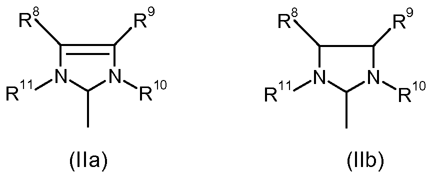 where
R⁸, R⁹, R¹⁰, R¹¹ are identical or different and are each hydrogen, straight-chain or branched C₁-C₃₀-alkyl, C₃-C₂₀-cycloalkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₀-aryloxy, C₂-C₂₀-alkoxycarbonyl, C₁-C₂₀-alkylthio, C₆-C₂₀-arylthio, C₁-C₂₀-alkylsulphonyl, C₁-C₂₀-alkylsulphonate, C₆-C₂₀-arylsulphonate or C₁-C₂₀-alkylsulphinyl, where all the abovementioned radicals may optionally be substituted,and particularly preferably has one of the structures (IIIa) to (IIIf) below, where Ph is in each case phenyl, Bu is butyl and Mes is a 2,4,6-trimethylphenyl radical or alternatively in each case a 2,6-diisopropylphenyl radical, 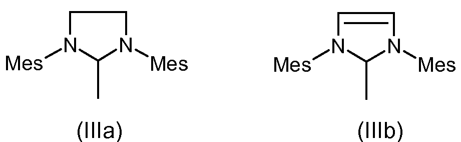 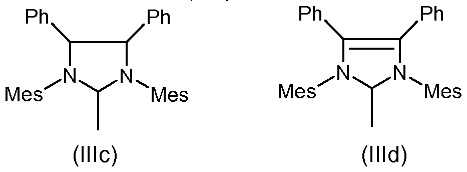 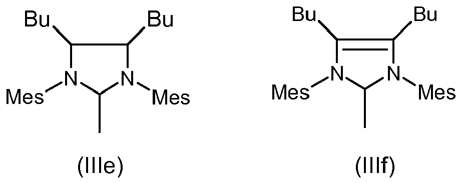 or a catalyst of the general formula (G), 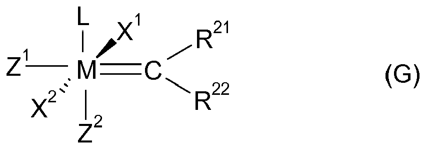 where
M is osmium or ruthenium,
X¹ and X² are identical or different and are two anionic ligands,
L is a ligand, preferably an uncharged electron donor,
Z¹ and Z² are identical or different and are uncharged electron donors, and
R²¹ and R²² are each, independently of one another, hydrogen, alkyl, cycloalkyl, alkenyl, alkynyl, aryl, carboxylate, alkoxy, alkenyloxy, alkynyloxy, aryloxy, alkoxycarbonyl, alkylamino, alkylthio, alkylsulphonyl or alkylsulphinyl, each of which may optionally be substituted by one or more radicals selected from among alkyl, halogen, alkoxy, aryl and heteroaryl.

## Revendications

1. Procédé pour la diminution du poids moléculaire de caoutchouc de nitrile, un caoutchouc de nitrile étant mis en contact avec un système de catalyseur et amené à se transformer, **caractérisé en ce que** le système de catalyseur comprend un catalyseur de métathèse, ainsi qu'au moins un composé de formule générale (Z)
BFₘXₙ*Dᵥ (Z)
où
BFₘXₙ représente BF₃, BF₂Cl, BFcl₂ BF₂Br, BFBr₂, BF₂ (OC₂H₅) , BF (OC₂H₅) ₂, BF₂ (CH₃) ou BF (CH₃)₂ et
D représente l'eau, le diéthyléther, l'éthylamine, le THF, le n-propanol, l'acide formique, l'acide acétique, l'acide trifluoroacétique, l'acide trichloroacétique, l'acide sulfurique, l'acide phosphorique, l'acide trifluorométhanesulfonique ou l'acide toluènesulfonique et v = 1, 2 ou 3,
et en utilisant comme catalyseur soit des composés de formule générale (A), 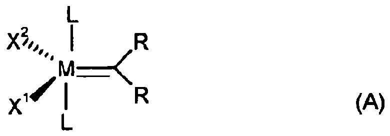 où
M signifie osmium ou ruthénium,
X¹ et X² sont identiques ou différents et représentent deux ligands anioniques,
L représentent des ligands identiques ou différents, de préférence des donneurs d'électrons neutres,
R sont identiques ou différents et représentent hydrogène, un radical alkyle, de préférence C₁-C₃₀-alkyle, cycloalkyle, de préférence C₃-C₂₀-cycloalkyle, alcényle, de préférence C₂-C₂₀-alcényle, alcynyle, de préférence C₂-C₂₀-alcynyle, aryle, de préférence C₆-C₂₄-aryle, carboxylate, de préférence C₁-C₂₀-carboxylate, alcoxy, de préférence C₁-C₂₀-alcoxy, alcényloxy, de préférence C₂-C₂₀-alcényloxy, alcynyloxy, de préférence C₂-C₂₀-alcynyloxy, aryloxy, de préférence C₆-C₂₄-aryloxy, alcoxycarbonyle, de préférence C₂-C₂₀-alcoxycarbonyle, alkylamino, de préférence C₁-C₃₀-alkylamino, alkylthio, de préférence C₁-C₃₀-alkylthio, arylthio, de préférence C₆-C₂₄-arylthio, alkylsulfonyle, de préférence C₁-C₂₀-alkylsulfonyle, ou alkylsulfinyle, de préférence C₁-C₂₀-alkylsulfinyle, qui peuvent tous être à chaque fois substitués par un ou plusieurs radicaux alkyle, halogène, de préférence fluor ou chlore, alcoxy, aryle ou hétéroaryle ou, en variante, les deux radicaux R forment un pont en incorporant l'atome de C commun auquel ils sont liés, en formant un groupe cyclique qui peut être de nature aliphatique ou aromatique, qui est le cas échéant substitué et qui peut contenir un ou plusieurs hétéroatomes, des catalyseurs de formule générale (B) 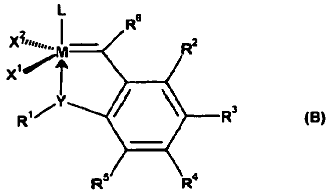 où
M signifie ruthénium ou osmium,
Y signifie oxygène (O), soufre (S), un radical N-R¹ ou un radical P-R¹,
X¹ et X² sont identiques ou différents et représentent deux ligands anioniques,
R¹ représente un radical alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, qui peuvent tous à chaque fois être éventuellement substitués par un ou plusieurs radicaux alkyle, halogène, alcoxy, aryle ou hétéroaryle,
R², R³, R⁴ et R⁵ sont identiques ou différents et représentent hydrogène, des radicaux organiques ou inorganiques,
R⁶ signifie hydrogène, un radical alkyle, alcényle, alcynyle ou aryle et
L représente un ligand, qui présente les mêmes significations que le ligand L dans la formule (A) et représente de préférence un radical P (R⁷) ₃, R⁷ signifiant, indépendamment l'un de l'autre, C₁-C₆-alkyle, C₃-C₈-cycloalkyle ou aryle, ou L représentant un radical imidazolidine ("Im") le cas échéant substitué, qui présente de préférence la structure des formules générales (IIa) et (IIb), 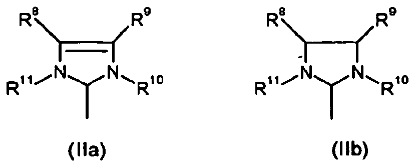
où
R⁸, R⁹, R¹⁰, R¹¹ sont identiques ou différents et signifient hydrogène, C₁-C₃₀-alkyle linéaire ou ramifié, C₃-C₂₀-cycloalkyle, C₂-C₂₀-alcényle, C₂-C₂₀-alcynyle, C₆-C₂₄-aryle, C₁-C₂₀-carboxylate, C₁-C₂₀-alcoxy, C₂-C₂₀-alcényloxy, C₂-C₂₀-alcynyloxy, C₆-C₂₀-aryloxy, C₂-C₂₀-alcoxycarbonyle, C₁-C₂₀-alkylthio, C₆-C₂₀-arylthio, C₁-C₂₀-alkylsulfonyle, C₁-C₂₀-alkylsulfonate, C₆-C₂₀-arylsulfonate ou C₁-C₂₀-alkylsulfinyle, tous les radicaux susmentionnés étant le cas échéant substitués
et présente de manière particulièrement préférée une des structures suivantes (IIIa) à (IIIf), Ph représentant à chaque fois phényle, Bu représentant butyle et Mes représentant un radical 2,4,6-triméthylphényle ou, en variante, à chaque fois un radical 2,6-diisopropylphényle. 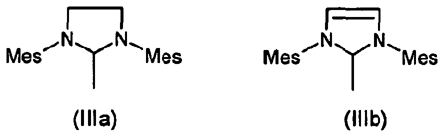 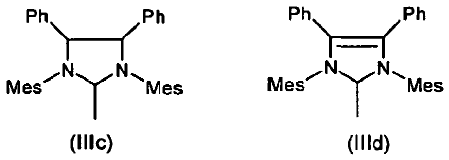 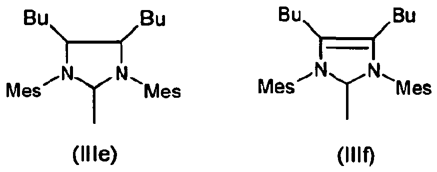 ou des catalyseurs de formule générale (G) 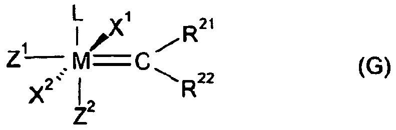 où
M signifie osmium ou ruthénium,
X¹ et X² sont identiques ou différents et représentent deux ligands anioniques,
L représente un ligand, de préférence un donneur d'électrons neutre,
Z¹ et Z² sont identiques ou différents et représentent des donneurs d'électrons neutres, et
R²¹ et R²² signifient, indépendamment l'un de l'autre, hydrogène, alkyle, cycloalkyle, alcényle, alcynyle, aryle, carboxylate, alcoxy, alcényloxy, alcynyloxy, aryloxy, alcoxycarbonyle, alkylamino, alkylthio, alkylsulfonyle ou alkylsulfinyle, qui sont à chaque fois éventuellement substitués par un ou plusieurs radicaux choisis parmi alkyle, halogène, alcoxy, aryle ou hétéroaryle.

2. Procédé selon la revendication 1, X¹ et X² dans la formule générale (A) étant identiques ou différents et signifiant hydrogène, halogène, en particulier fluor, chlore, brome ou iode, pseudohalogéno, des radicaux C₁-C₃₀-alkyle linéaire ou ramifié, de préférence C₁-C₅-alkyle, C₆-C₂₄-aryle, C₆-C₁₄-aryle, C₁-C₂₀-alcoxy, de préférence C₁-C₅-alcoxy, C₆-C₂₄-aryloxy, C₃-C₂₀-alkyldicétonate, C₆-C₂₄-aryldicétonate, C₁-C₂₀-carboxylate, de préférence C₁-C₅-carboxylate ou benzoate, C₁-C₂₀-alkylsulfonate, de préférence C₁-C₅-alkylsulfonate, C₆-C₂₄-arylsulfonate, de préférence C₆-C₁₄-arylsulfonate, C₁-C₂₀-alkylthiol, de préférence C₁-C₅-alkylthiol, C₆-C₂₄-arylthiol, de préférence C₆-C₁₄-arylthiol, C₁-C₂₀-alkylsulfonyle ou C₁-C₂₀-alkylsulfinyle.

3. Procédé selon la revendication 1 ou 2, X¹ et X² étant identiques et signifiant halogène, en particulier chlore, CF₃COO, CH₃COO, CFH₂COO, (CH₃) ₃CO, (CF₃)₂(CH₃)CO, (CF₃)(CH₃)₂CO, PhO (phénoxy), MeO (méthoxy), EtO (éthoxy), tosylate (p-CH₃-C₆H₄-SO₃) , mésylate (2,4,6-triméthylphényle) ou CF₃SO₃ (trifluorométhanesulfonate).

4. procédé selon l'une ou plusieurs des revendications 1 à 3, les deux ligands L signifiant, indépendamment l'un de l'autre, un ligand phosphine, phosphine sulfoné, phosphate, phosphinite, phosphonite, arsine, stibine, éther, amine, amide, sulfoxyde, carboxyle, nitrosyle, pyridine, thioéther ou imidazolidine ("Im"), de préférence un radical imidazolidine (Im) présentant la structure des formules générales (IIa) ou (IIb), 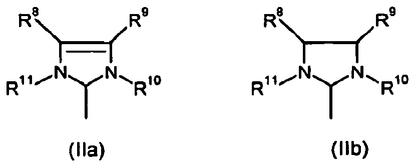 où
R⁸, R⁹, R¹⁰, R¹¹ sont identiques ou différents et signifient hydrogène, C₁-C₃₀-alkyle linéaire ou ramifié, C₃-C₂₀-cycloalkyle, C₂-C₂₀-alcényle, C₂-C₂₀-alcynyle, C₆-C₂₄-aryle, C₁-C₂₀-carboxylate, C₁-C₂₀-alcoxy, C₂-C₂₀-alcényloxy, C₂-C₂₀-alcynyloxy, C₆-C₂₀-aryloxy, C₂-C₂₀-alcoxycarbonyle, C₁-C₂₀-alkylthio, C₆-C₂₀-arylthio, C₁-C₂₀-alkylsulfonyle, C₁-C₂₀-alkylsulfonate, C₆-C₂₀-arylsulfonate ou C₁-C₂₀-alkylsulfinyle, tous les radicaux susmentionnés étant le cas échéant substitués.

5. Procédé selon l'une ou plusieurs des revendications 1 à 4, des catalyseurs de formule générale (A1) étant utilisés, 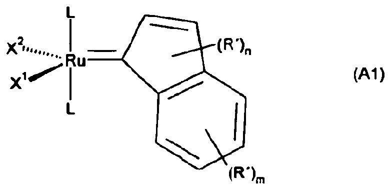 où
X¹, X² et L peuvent présenter les mêmes significations générales, préférées et particulièrement préférées que dans la formule générale (A),
n vaut 0, 1 ou 2,
m vaut 0, 1, 2, 3 ou 4 et
R' sont identiques ou différents et peuvent signifier alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, qui peuvent tous à chaque fois être substitués par un ou plusieurs radicaux alkyle, halogène, alcoxy, aryle ou hétéroaryle.

6. Procédé selon la revendication 1, où le catalyseur présente la structure (IV), (V) ou (VI), où Cy représente à chaque fois cyclohexyle, Mes représente 2,4,6-triméthylphényle et Ph représente phényle.

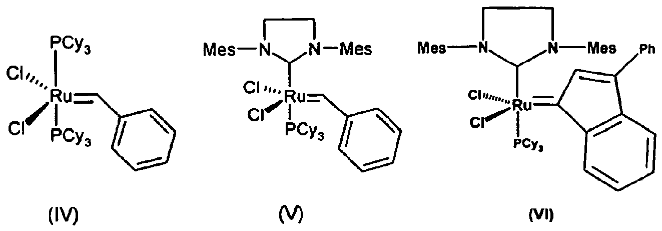

7. Procédé selon la revendication 1, des catalyseurs selon la formule générale (B1) étant utilisés, 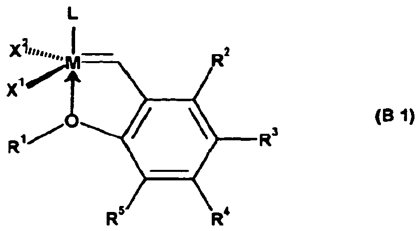 où
M, L, X¹, X², R¹, R², R³, R⁴ et R⁵ présentent les significations mentionnées pour la formule générale (B) dans la revendication 1, de préférence
M signifie ruthénium,
X¹ et X² signifient simultanément halogène, en particulier chlore,
R¹ représente un radical C₁-C₁₂-alkyle linéaire ou ramifié, de préférence isopropyle,
R² R³, R⁴, R⁵ présentent les significations mentionnées pour la formule générale (B) dans la revendication 1 et signifient de préférence tous hydrogène, et
L présente les significations mentionnées pour la formule générale (B) dans la revendication 1 et de manière particulièrement préférée un radical imidazolidine le cas échéant substitué des formules (IIa) ou (IIb), 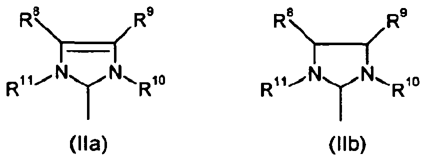 où
R⁸, R⁹, R¹⁰, R¹¹ sont identiques ou différents et signifient hydrogène, C1-C₃₀-alkyle linéaire ou ramifié, C₃-C₂₀-cycloalkyle, C₂-C₂₀-alcényle, C₂-C₂₀-alcynyle, C₆-C₂₄-aryle, C₁-C₂₀-carboxylate, C₁-C₂₀-alcoxy, C₂-C₂₀-alcényloxy, C₂-C₂₀-alcynyloxy, C₆-C₂₄-aryloxy, C₂-C₂₀-alcoxycarbonyle, C₁-C₂₀-alkylthio, C₆-C₂₄-arylthio, C₁-C₂₀-alkylsulfonyle, C₁-C₂₀-alkylsulfonate, C₆-C₂₄-arylsulfonate ou C₁-C₂₀-alkylsulfinyle.

8. Procédé selon la revendication 1, un catalyseur des structures suivantes (VII), (VIII), (IX), (X), (XI), (XII), (XIII), (XIV), (XV), (XVI) ou (XVII) étant utilisé, Mes signifiant à chaque fois 2,4,6-triméthylphényle.

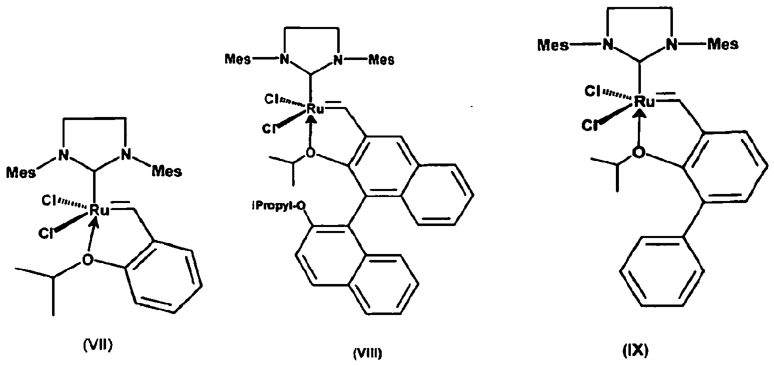

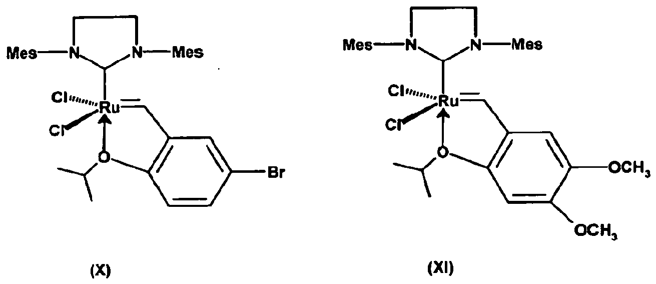

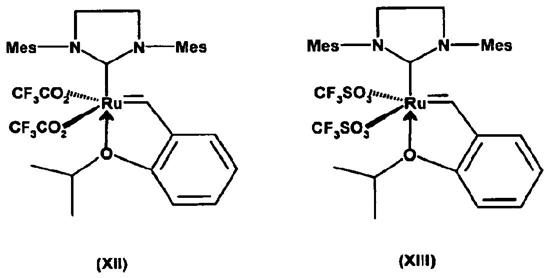

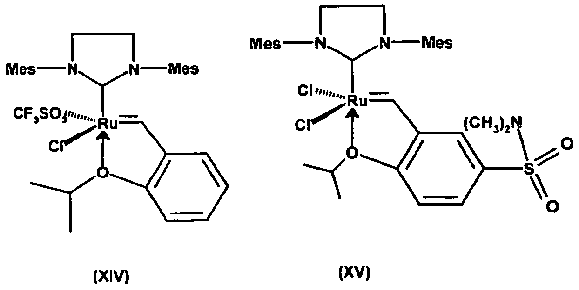

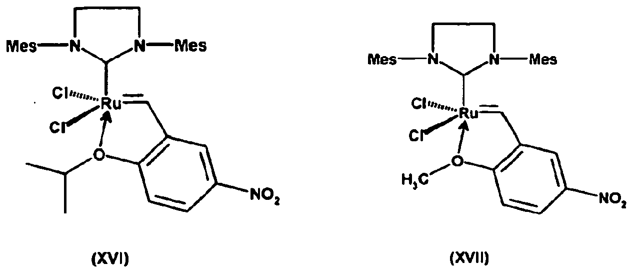

9. Procédé selon la revendication 1, un catalyseur de formule générale (B2) étant utilisé, 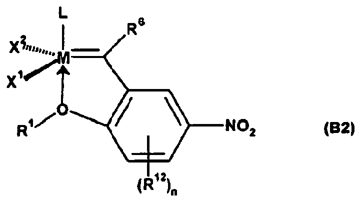 où
M, L, X¹, X², R¹ et R⁶ présentent les significations mentionnées pour la formule générale (B) dans la revendication 1,
R¹² sont identiques ou différents et présentent les significations mentionnées pour les radicaux R², R³, R⁴ et R⁵ dans la formule générale (B) dans la revendication 1, à l'exception d'hydrogène et
n vaut 0, 1, 2 ou 3.

10. Procédé selon l'une ou plusieurs des revendications 1 à 9, le catalyseur complexe et le composé de formule générale (Z) étant utilisés dans un rapport molaire [catalyseur complexe:composé de formule générale (Z)] = 1:(0,1-1000), de préférence de 1:(0,5-100), de manière particulièrement préférée de 1:(1-50).

11. Utilisation d'un composé de formule générale (Z)
BFₘXₙ*Dᵥ (Z)
comme constituant de systèmes de catalyseur pour la métathèse de caoutchouc de nitrile
BFₘXₙ représentant BF₃, BF₂Cl, BFCl₂ BF₂Br, BFBr₂, BF₂ (OC₂H₅) , BF (OC₂H₅) ₂, BF₂ (CH₃) ou BF (CH₃)₂ et
D représentant l'eau, le diéthyléther, l'éthylamine, le THF, le n-propanol, l'acide formique, l'acide acétique, l'acide trifluoroacétique, l'acide trichloroacétique, l'acide sulfurique, l'acide phosphorique, l'acide trifluorométhanesulfonique ou l'acide toluènesulfonique et v = 1, 2 ou 3,
et le système de catalyseur contenant un catalyseur de formule générale (A), 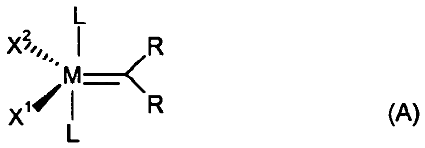 où
M signifie osmium ou ruthénium,
X¹ et X² sont identiques ou différents et représentent deux ligands anioniques,
L représentent des ligands identiques ou différents, de préférence des donneurs d'électrons neutres,
R sont identiques ou différents et représentent hydrogène, un radical alkyle, de préférence C₁-C₃₀-alkyle, cycloalkyle, de préférence C₃-C₂₀-cycloalkyle, alcényle, de préférence C₂-C₂₀-alcényle, alcynyle, de préférence C₂-C₂₀-alcynyle, aryle, de préférence C₆-C₂₄-aryle, carboxylate, de préférence C₁-C₂₀-carboxylate, alcoxy, de préférence C₁-C₂₀-alcoxy, alcényloxy, de préférence C₂-C₂₀-alcényloxy, alcynyloxy, de préférence C₂-C₂₀-alcynyloxy, aryloxy, de préférence C₆-C₂₄-aryloxy, alcoxycarbonyle, de préférence C₂-C₂₀-alcoxycarbonyle, alkylamino, de préférence C₁-C₃₀-alkylamino, alkylthio, de préférence C₁-C₃₀-alkylthio, arylthio, de préférence C₆-C₂₄-arylthio, alkylsulfonyle, de préférence C₁-C₂₀-alkylsulfonyle, ou alkylsulfinyle, de préférence C₁-C₂₀-alkylsulfinyle, qui peuvent tous être à chaque fois substitués par un ou plusieurs radicaux alkyle, halogène, de préférence fluor ou chlore, alcoxy, aryle ou hétéroaryle ou, en variante, les deux radicaux R forment un pont en incorporant l'atome de C commun auquel ils sont liés, en formant un groupe cyclique qui peut être de nature aliphatique ou aromatique, qui est le cas échéant substitué et qui peut contenir un ou plusieurs hétéroatomes,
ou un catalyseur de formule générale (B) 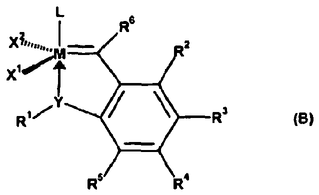 où
M signifie ruthénium ou osmium,
Y signifie oxygène (O), soufre (S), un radical N-R¹ ou un radical P-R¹,
X¹ et X² sont identiques ou différents et représentent deux ligands anioniques,
R¹ représente un radical alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, qui peuvent tous à chaque fois être éventuellement substitués par un ou plusieurs radicaux alkyle, halogène, alcoxy, aryle ou hétéroaryle,
R², R³, R⁴ et R⁵ sont identiques ou différents et représentent hydrogène, des radicaux organiques ou inorganiques,
R⁶ signifie hydrogène, un radical alkyle, alcényle, alcynyle ou aryle et
L représente un ligand, qui présente les mêmes significations que le ligand L dans la formule (A) et représente de préférence un radical P (R⁷)₃, R⁷ signifiant, indépendamment l'un de l'autre, C₁-C₆-alkyle, C₃-C₈-cycloalkyle ou aryle, ou L représentant un radical imidazolidine ("Im") le cas échéant substitué, qui présente de préférence la structure des formules générales (IIa) et (IIb), 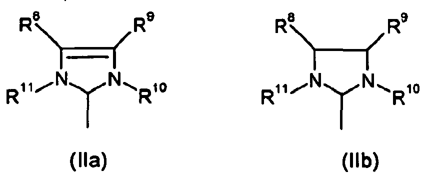 où
R⁸, R⁹, R¹⁰, R¹¹ sont identiques ou différents et signifient hydrogène, C₁-C₃₀-alkyle linéaire ou ramifié, C₃-C₂₀-cycloalkyle, C₂-C₂₀-alcényle, C₂-C₂₀-alcynyle, C₆-C₂₄-aryle, C₁-C₂₀-carboxylate, C₁-C₂₀-alcoxy, C₂-C₂₀-alcényloxy, C₂-C₂₀-alcynyloxy, C₆-C₂₀-aryloxy, C₂-C₂₀-alcoxycarbonyle, C₁-C₂₀-alkylthio, C₆-C₂₀-arylthio, C₁-C₂₀-alkylsulfonyle, C₁-C₂₀-alkylsulfonate, C₆-C₂₀-arylsulfonate ou C₁-C₂₀-alkylsulfinyle, tous les radicaux susmentionnés étant le cas échéant substitués,
et présente de manière particulièrement préférée une des structures suivantes (IIIa) à (IIIf), Ph représentant à chaque fois phényle, Bu représentant butyle et Mes représentant un radical 2,4,6-triméthylphényle ou, en variante, à chaque fois un radical 2,6-diisopropylphényle. 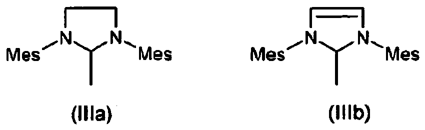 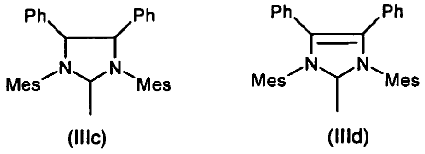 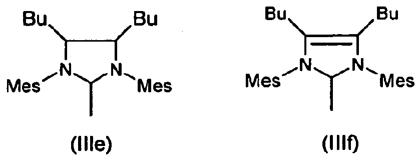 ou un catalyseur de formule générale (G) 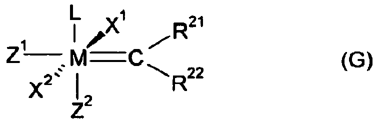 où
M signifie osmium ou ruthénium,
X¹ et X² sont identiques ou différents et représentent deux ligands anioniques,
L représente un ligand, de préférence un donneur d'électrons neutre,
z¹ et Z² sont identiques ou différents et représentent des donneurs d'électrons neutres, et
R²¹ et R²² signifient, indépendamment l'un de l'autre, hydrogène, alkyle, cycloalkyle, alcényle, alcynyle, aryle, carboxylate, alcoxy, alcényloxy, alcynyloxy, aryloxy, alcoxycarbonyle, alkylamino, alkylthio, alkylsulfonyle ou alkylsulfinyle, qui sont à chaque fois éventuellement substitués par un ou plusieurs radicaux choisis parmi alkyle, halogène, alcoxy, aryle ou hétéroaryle.
